(19) **Europäisches Patentamt / European Patent Office / Office européen des brevets**

(11) **EP 1 267 284 B1**

(12) **EUROPEAN PATENT SPECIFICATION**

(45) Date of publication and mention
of the grant of the patent:
**21.02.2007 Bulletin 2007/08**

(51) Int Cl.:
*G06F 17/50* (2006.01)     *G06T 17/00* (2006.01)
*G06T 17/40* (2006.01)     *B60R 16/02* (2006.01)

(21) Application number: **02013451.6**

(22) Date of filing: **13.06.2002**

(54) **Three-dimensional virtual method, computer program and system**

Dreidimensionalen, virtuelles Designverfahren , Computerprogramm und System

Méthode de conception virtuelle à trois dimensions, logiciel et système

(84) Designated Contracting States:
**DE FR GB IT**

(30) Priority: **13.06.2001 JP 2001178980**
**09.07.2001 JP 2001208233**
**29.10.2001 JP 2001330851**
**07.11.2001 JP 2001341629**
**14.11.2001 JP 2001348580**
**07.11.2001 JP 2001341509**

(43) Date of publication of application:
**18.12.2002 Bulletin 2002/51**

(73) Proprietor: **Sumitomo Wiring Systems, Ltd.**
**Yokkaichi-City,**
**Mie, 510-8503 (JP)**

(72) Inventors:
• **Sakakura, Kouichi**
**Yokkaichi-city,**
**Mie 510-8503 (JP)**
• **Imai, Masahiro**
**Yokkaichi-city,**
**Mie 510-8503 (JP)**

• **Nakamura, Tsutomu**
**Yokkaichi-city,**
**Mie 510-8503 (JP)**

(74) Representative: **Müller-Boré & Partner**
**Patentanwälte**
**Grafinger Strasse 2**
**81671 München (DE)**

(56) References cited:
**EP-A- 0 304 864**

• **HERGENROTHER E ET AL: "Installation and manipulation of a cable harness in virtual environments" PROCEEDINGS OF THE IASTED INTERNATIONAL CONFERENCE ROBOTICS AND MANUFACTURING, PROCEEDINGS OF IASTED INTERNATIONAL CONFERENCE ON ROBOTICS AND MANUFACTURING (RM 2001), CANCUM, MEXICO, 21-24 MAY 2001, pages 240-244, XP001131961 2001, Calgary, Alta., Canada, IASTED/ACTA Press, Canada ISBN: 0-88986-281-8**

**Description**

The present invention relates to a three-dimensional (3D) virtual design method, computer program and system in which a control means displays a 3D design data of a wiring harness in a virtual 3D space displayed on a display means based on a data inputted by a data input means and also to a related technique.

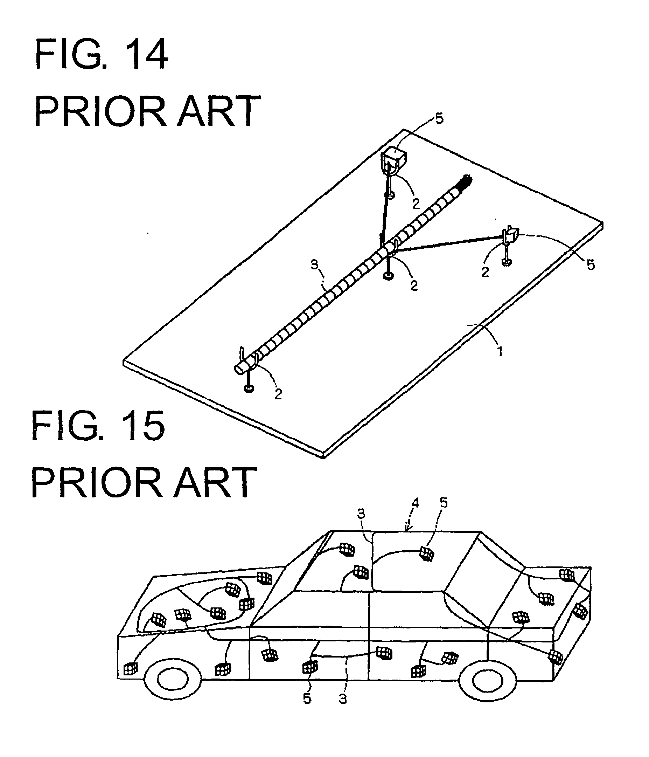

Generally, wiring harnesses are used as electric wiring in automotive vehicles and electric appliances. Upon producing a wiring harness, after a 3D wiring design of the wiring harness for an automotive vehicle, an electrical appliance or like wire layout object in which wires are to be laid is made based on mount positions of various parts in the wire layout object and the like, the wiring harness is drafted on a two-dimensional (2D) drawing sheet based on a result of the 3D wiring design. In accordance with the design of the drafted wiring harness, a plurality of supporting jigs 2 are mounted on a assembling board 1 as shown in FIG. 14, a plurality of wires are supported by the supporting jigs 2 while being bundled, and a wiring harness 3 is produced, for example, by tightening the bundled wires by resin tapes.

In the case of evaluating a degree of perfection of the thus produced wiring harness 3 in view of the drafted design, 2D drawings of a product of an object and the wiring harness are generated and outputted by means of a design assisting system such as a CAD and a designer checks these drawings and points out problems.

As an alternative, a trial product of the wiring harness 3 is produced and is actually laid in a wire layout object such as an automotive vehicle as shown in FIG. 15 or an electric appliance, and whether or not the design of the wiring harness is proper is investigated by checking whether or not the trial product of the wiring harness 3 can be properly laid in the wire layout object 4.

Identified by 5 in FIGS. 14 and 15 are connectors to be connected with various parts.

The above method according to which the designer estimates the problems by looking at the drawings has a problem that an estimation standard differs depending on the skill of the designer and it is difficult to establish a uniform estimation standard.

Contrary to this, the latter method according to which the trial product 3 is actually produced and laid in the wire layout object 4 is advantageous in satisfactorily pointing out the three-dimensional problems.

However, a wiring harness assembling process generally mostly depends on manual operations and, accordingly, the production of the trial product requires a labor-intensive operation, resulting in huge labor and time to be spent.

In the case of an occurrence of any problem such as insufficient dimensions and exertion of an unnatural load at a mount angle when the trial product is mounted in the wire layout object, the design of the wiring harness and the production of the trial product have to be redone many times. Thus, quite a large amount of labor and time take in investigating whether or not the designed wiring harness can be properly laid (wire layout investigation). As a result, a period of development up to the completion of the design disadvantageously takes longer.

As mentioned, in the development of a novel wiring harness, a trial product is produced after a trial design is made, and the content of the trial design is evaluated to point out problems, which are then solved for an improved design.

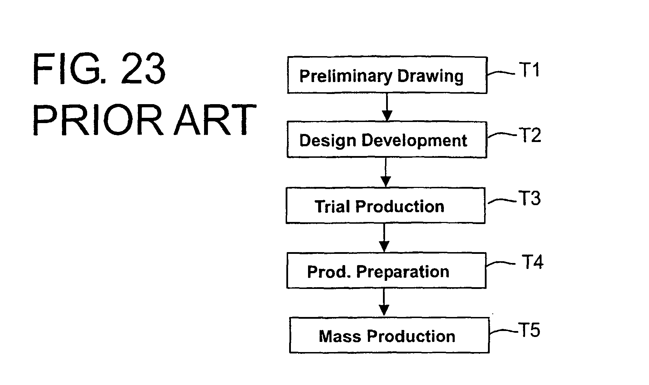

FIG. 23 is a flow chart showing a conventional development method for a wiring harness. Conventionally, as shown in FIG. 23, a preliminary drawing is drafted to determine a summary of an object in which a wiring harness is to be used in Step T1, and operations at a design and development stage are performed in Step T2.

Usually, trial products are actually produced several times in Step T3 (trial product stage) after the design and development stage. At this time, all parts necessary to produce an actual wiring harness are prepared, assisting jigs 2 are arranged on an assembling table required for the production as shown in FIG. 15, and a skilled worker or a research engineer assembles an actual wiring harness 3 as a trial product.

During the assembling operation, whether or not the contents of the design hold is confirmed in view of an error in the design rule of the wiring harness 3, the possibility of human errors, and the presence of a mutual hardware interference of the assisting jigs 2, etc.; and difficulties during the assembling operation, factors hindering an improved productivity and factors hindering an improved quality are pointed out; and a corrected and improved plan is studied and determined to remove such hindering factors. After the results of investigating the trial product are reflected on the contents of the trial product design, a production preparation stage is entered in Step T4 and a mass production stage is entered in Step T5.

Conventionally, in Step T3, the actual (trial) product is assembled; the productivity- and quality-related hindering factors at the trial production stage are pointed out; an improvement requirement is presented to a client or an internal designing department so that the result of the investigation can be reflected on a next trial production. Thus, a large number of operation steps and a longer time (about 1 month) are required to complete and evaluate one trial product.

However, with a growing demand from the client to shorten a development period, it has become impossible to secure a sufficient time and a sufficient number of operation steps to produce an actual trial product and evaluate it in detail, leading to a delayed trial production process and a reduction in inspection precision. This results in problems being carried over to a next trial production process or a reduction in productivity and quality at the mass production stage.

Moreover, at a trial production stage of a wiring harness, research engineers play a key role to design various operation steps toward a mass production. At the trial production stage, actual trial products are produced and operations are inspected, particularly placing great importance on an improvement in assembling of the wiring harness by human hands. Trials and errors are made to point out operations which are difficult and/or have low operability for the consideration of an improvement plan at an early stage in order to obtain a high productivity at a mass production stage. Since such an improvement plan is frequently associated with an improvement in the design of the wiring harness, it is drafted with a view to giving an improvement feedback to the design at an early stage.

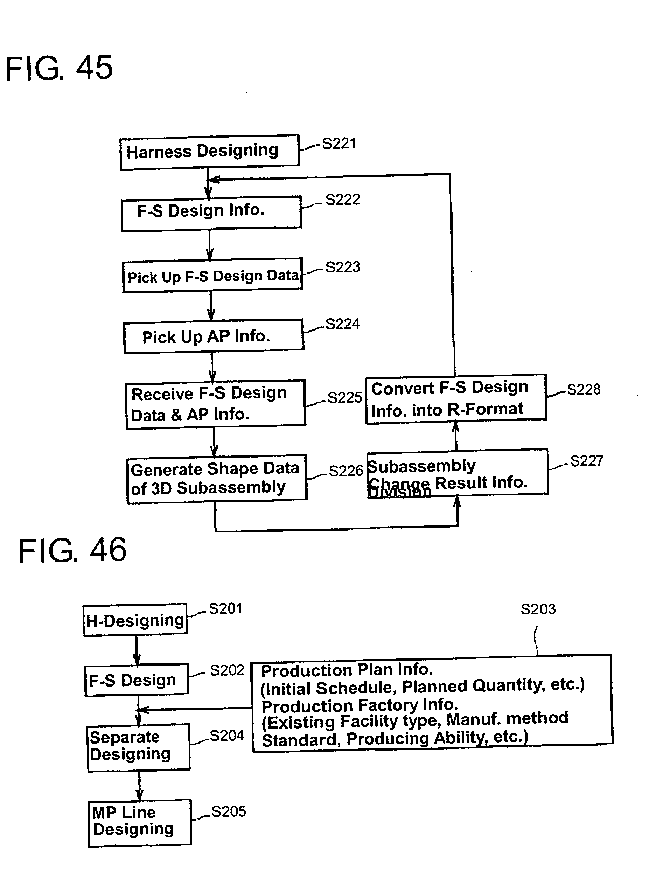

As a preparation prior to the trial production, in a flow chart of FIG. 46, research engineers design drafts a full-size drawing in Step S202 after designing a wiring harness in Step S201, and produce and study a production planning information such as an initial schedule and the number of harnesses planed to be produced, a producing factory information including the type of existing facilities, manufacturing system standards and producing abilities at factory facilities while looking at the full-size drawing. Thereafter, separate designing of first subassemblies is drafted in Step S204, and a specific mass production line is designed in Step S205.

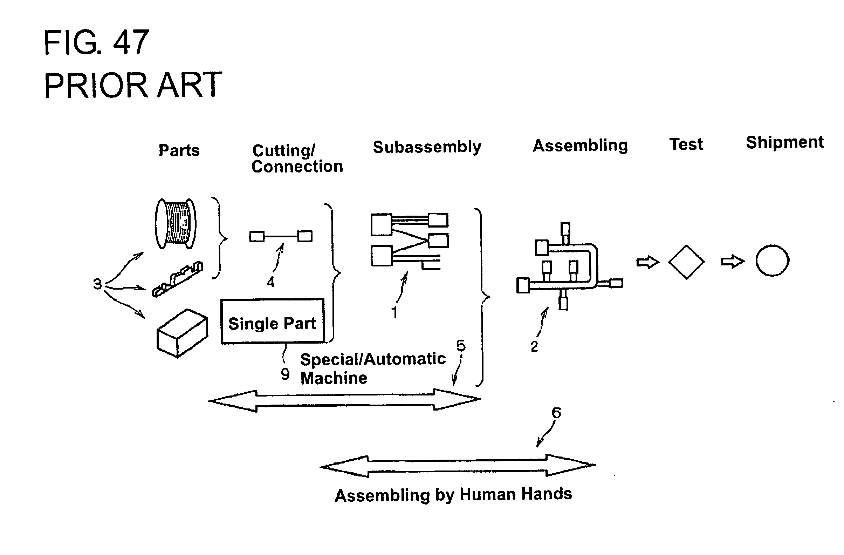

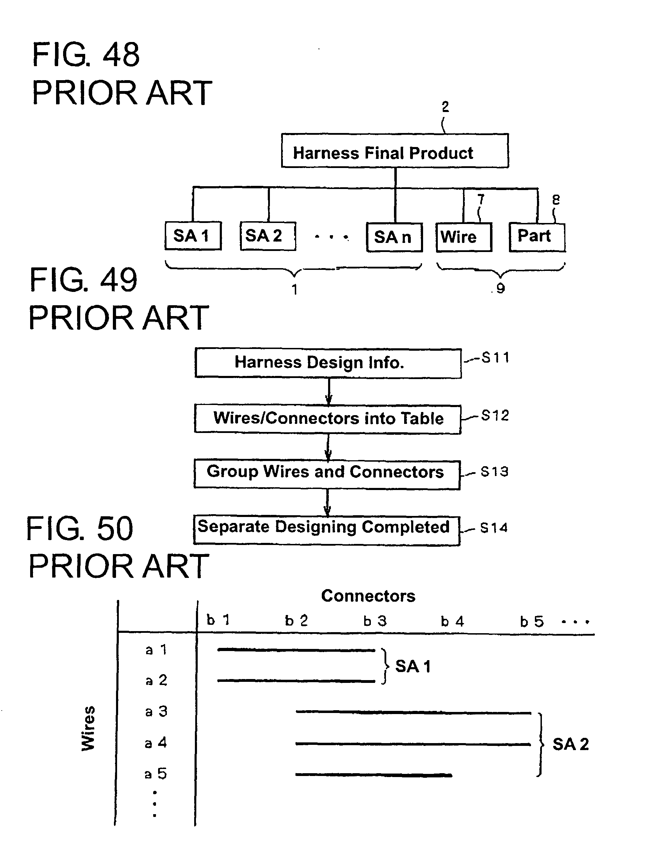

As shown in FIG. 47, the subassemblies (subassemblies 1, 2, ...n in FIG. 48) separately designed in Step S204 are intermediate products produced at an intermediate stage as small-size components of a wiring harness 2 (final harness product in FIG. 48). The wiring harnesses 2 are normally designed for the respective sections of automotive vehicles such as engines and doors, and mass-produced. The final product of the wiring harness 2 as an assembly of these sections is an aggregate of a plurality of kinds of parts including wires (e.g. 100 to 150 wires), covering parts (e.g. dozens to several hundred covering parts) such as protectors, covers and tapes, and these wires and the covering parts are cut and connected (arrow 4). In order to efficiently assemble the plurality of these parts 3, a method is adopted according to which a plurality of small-size minor harnesses are produced beforehand by a specified or automatic machine 5 or by assembling 6 by human hands and these minor harnesses are successively arranged and combined on a harness assembling table. A plurality of these small-size minor harnesses are referred to as subassemblies 1. It should be noted that wires 7 and parts 8 which are not included in the subassemblies 1 in FIGS. 47 and 48 are independent parts 9 which are independently connected separately from the subassemblies 1 to form the wiring harness (final harness product) 2.

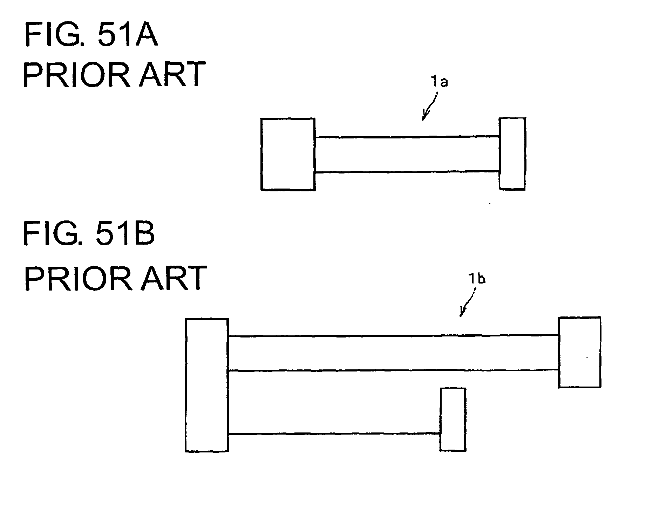

A procedure of the separate designing of the subassembly in Step S204 is summarily shown in FIG. 49. After a harness design information is obtained from a production designing system (HIS) as a software program of a computer in Step S211, wires and connectors forming the wiring harness are outputted while being converted into a matrix table as shown in FIG. 50 based on the harness design information in Step S212. An operation of grouping and sampling forms (aggregates) such as a subassembly 1 shown by 1a in FIG. 51A and a subassembly 2 shown by 1b in FIG. 51B (Step S213) is repeated while the outputted matrix table is being looked at. At this time, the separate operations are repeated for optimization in consideration of matters that require attention such as whether or not the subassemblies have sizes easy to handle by workers, whether or not a terminal first insertion rate is at maximum, and whether or not the wire laying operation can be smoothly performed, and the division of the subassemblies is completed when these operations are ended.

However, since such operations are the separate designing of the subassemblies (Step S204) using the matrix table (see Step S212) on paper, the result of the designing needs to be verified using an actual product.

When the separate designing of the subassemblies of Step S204 is completed (Step S214 in FIG. 49), the parts 3 are actually prepared as shown in FIG. 47 and the subassemblies 1 are actually produced. Further, a harness assembling table used to assemble an actual wiring harness is manufactured in accordance with the contents of the full-size design (see Step S202 in FIG. 46) to investigate an assembling operation. This harness assembling table is usually called "drawing board" because U-shaped holding jigs are generally arranged on the full-size drawing adhered to the upper surface of the table to arrange a wiring harness.

At this time, an order of using the respective subassemblies 1 and an assembling procedure on the harness assembling table are determined beforehand in accordance with an IE (industrial engineering) based theory; an assembling operation is performed by a research engineer in charge or the like person in accordance with the assembling procedure; and operability is inspected and improved, placing great importance on matters to be investigated in terms of a wire laying operability and an operation procedure as listed in TABLE-1 below.

TABLE-1

| MATTERS TO BE INVESTIGATED | CONFIRMATION POINTS | REMEDIES |
|---|---|---|
| Wire Laying Operability | - Any unnecessary operation when an operator handles subassemblies | Make subassemblies smaller or change the forms thereof to increase a first insertion rate |
| | - Subassemblies can be smoothly laid in one direction (from left side to right side on board) | Correct the designs of the subassemblies to conform to a layout of the board |
| | - Many overlapping wire laying operations | Reconsider and optimize the forms of all the subassemblies |
| Operation procedure | - Any unnecessary operation between operation steps | Reconsider and change the operation procedure |

Here, confirmation points concerning the wire laying operability include whether or not there is any unnecessary operation while a worker is handling the subassemblies 1, whether or not the wires can be laid in one direction, i.e. in a direction from left side toward right side on the harness assembling table, and whether or not there are many overlapping wire laying operations. Further, concerning the operation procedure, investigation is made as to whether there is any unnecessary operation between the operation steps. Remedies for the found-out problems shown in the column of "Remedies" in TABLE-1 are studied.

By repeatedly producing actual trial products in this way, improvements can be made toward a better operability at the trial production stage, thereby enhancing a degree of perfection in designing the operation steps. The remedies proposed at this time include those related to the divided forms of the subassemblies and those accompanied by design changes. A design changing plan is immediately put into shape and a feedback is given to the designing department for improvements.

After the aforementioned process is securely carried out to prepare an production environment for actual products, actual products are assembled and productivity- and quality-related hindering factors at the trial production stage are pointed out and, then, an improvement requirement is presented to a client or an internal designing department so that the result of the investigation can be reflected on a next trial production. Thus, a large number of operation steps and a longer time (about 1 month) are required to complete and evaluate one trial product.

However, since a plurality of trial products of the subassemblies have been produced and evaluated in detail despite a growing demand from the client to shorten a development period, it has been becoming impossible to secure a sufficient time and a sufficient number of operation steps to do so, leading to a delayed trial production process and a reduction in inspection precision. This results in problems being carried over to a next trial production process or a reduction in productivity and quality at the mass production stage.

HERGENROTHER E ET AL: "Installation and manipulation of a cable harness in virtual environments" PROCEEDINGS OF THE IASTED INTERNATIONAL CONFERENCE ROBOTICS AND MANUFACTURING, PROCEEDINGS OF IASTED INTERNATIONAL CONFERENCE ON ROBOTICS AND MANUFACTURING (RM 2001), CANCUM, MEXICO, 21-24 MAY 2001, pages 240-244, XP001131961 2001, Calgary, Alta, discloses a method of installation and manipulation of a cable harness in virtual environments. According to this method, in a first step the complete cable harness is modelled as rigid objects in the CAD systems and coarsely placed in the car. Then, in a second step the stored geometry is loaded in a virtual cable application in which the user can adjust the installed cable harness in the car model.

Accordingly, an object of the present invention is to enable an efficient wire layout investigation by virtually investigating a wire layout conforming to a result of designing upon designing a wiring harness.

This object is solved according to the features of the independent claims. Preferred embodiments of the invention are subject of the dependent claims.

According to the invention, there is provided a 3D virtual design or assembling method or wiring harness layout method for displaying a 3D design data of a wiring harness in a virtual 3D space displayed on a display means by means of a control means based on a data inputted by a data input means, comprising:

a data inputting or retrieving or obtaining step of inputting or retrieving or obtaining the shape of the wiring harness in the form of a reference layout data representing a 3D layout of the wiring harness in a specified vehicle or electric appliance by means of the data input means or a specified data input means, and inputting or retrieving or obtaining the 3D design data representing a 3D layout of a wiring harness designed for production by the data input means, a reference layout data image displaying step of displaying or computing or determining an image represented by the reference layout data as a background image in the virtual 3D space,
a 3D design data displaying step of displaying the 3D design data while superimposing it on the background image, and
a 3D design data changing step of displaying the shape of the wiring harness represented by the 3D design data while changing it according to an input made by the data input means, and a degree of coincidence or a degree of discrepancy of an image of the changing result and the background image of the reference layout data is confirmed.

Accordingly, when designing the wiring harness, an efficient wire layout investigation can be made by virtually investigating the wire layout confirming to the result of the design without actually producing a trial product.

Thus, as compared to the prior art methods, time and labor taken for designing can be considerably reduced, thereby remarkably shortening a period of development up to the completion of the design.

According to a preferred embodiment of the invention, the 3D design data is generated by adding coordinates of a normal direction to a primary plane of a assembling board used during the production of the wiring harness to a 2D data which is a 2D representation along the primary plane.

Preferably, the 3D design data is divided into a plurality of wire segments and includes at least a vector information on the coordinates of the respective wire segments.

Accordingly, since the curved state and other state of the wiring harness can be subjected e.g. to a polygon processing and displayed by dividing the wiring harness into wire segments, an operation load of the control means can be reduced as compared to a case of performing an operation assuming a actually curved state as a physical data.

Further preferably, upon changing the shape of the wiring harness, the vector information of each concerned wire segment is changed assuming that center axes of the adjacent wire segments are substantially continuous.

Further preferably, a data on a phase difference or angular relationship to the adjacent wire segments is given to each wire segment.

Accordingly, the continuous state of the wire segments can be maintained even after the deformation in the case that the wiring harness is divided into a plurality of wire segments. Thus, a processing can be performed to deform the wiring harness in such a manner approximate to an actual curved state of the wiring harness.

Still further preferably, a surface line which preferably is a straight line substantially in parallel with a center axis, is virtually drawn on the outer circumferential surface of the wiring harness before changing the shape of the wiring harness, and the surface line is displayed on the display means while being twisted according to a twisted angle of the wiring harness.

Accordingly, since the data on the phase difference between the adjacent wire segments is given to each wire segment, whether or not there is any unnatural twist can be easily visually confirmed or (automatically) determined by displaying a change in this phase difference on the display means.

Most preferably, in the case that part of the wiring harness is covered by an covering part, a 3D design data of the covering part is used for each of the corresponding wire segments instead of the 3D design data of the wire segments.

Accordingly, in the case that part of the wiring harness is covered by the covering part, the 3D design data of the covering part is used for each of the corresponding wire segments instead of the 3D design data of the wire segments. Thus, the 3D shape of the wiring harness can be represented like a real wiring harness.

According to the invention, there is further provided a 3D virtual assembling method or wiring harness layout method for use in designing a wiring harness according to the invention or an embodiment thereof, comprising the steps of:

an input means for receiving or retrieving or obtaining an input,
at least temporarily storing a harness design data which is a 3D design data of at least part of the wiring harness in a storage means, and
displaying the harness design data stored in the storage means in a virtual 3D space on a display means and, if the harness design data is partly changed by an input made via the input means, correcting a section of the harness design data related to a content of the change and reflecting a correction result on display contents of the display means and stored contents of the storage means.

Accordingly, when the designer partly changes the harness design data via the input means, the section of the harness design data related to the content of the change is automatically corrected and the correction result is automatically reflected on the display contents of the display means and the stored contents of the storage means. Thus, it is not necessary for the designer to correct all the data related to the content of the change, and the form of the harness design data after the change can be immediately confirmed. As a result, the wiring harness can be more efficiently designed.

According to a preferred embodiment of the invention, the method further comprises the step of:

storing a board design data which is a 3D design data of an assembling board corresponding to the harness design data in the storage means,
wherein the harness design data and the board design data are displayed in the virtual 3D space while setting the harness design data on the board design data and, if the harness design data is partly changed by an input made via the input means, corrects a section of the harness design data and/or a section of the board design data related to a content of the change and reflects correction results on the display contents of the display means and the stored contents of the storage means.

Preferably, the board design data includes an assisting jig data corresponding to assisting jigs for holding the wiring harness on the assembling board, and
if the length or path shape of a section of the harness design data is changed, a correction is made by moving the coordinates in the virtual 3D space of an end section of the harness design data located more toward a corresponding end than the changed section when viewed from a reference portion as a reference of the harness design data and the coordinates of the assisting jig data included in the board design data and corresponding to the end section of the harness design data according to an amount of the change in the length of the changed section and/or according to a changed content of the path shape.

According to the invention, there is further provided computer program product comprising a computer readable medium, having thereon computer program code means, when said program is loaded, to make the computer execute a 3D virtual assembling method according to the invention or an embodiment thereof; in other words, it provides a program for causing a computer to carry out the respective steps of the 3D virtual assembling method according to the invention or an embodiment thereof in order to implement the 3D virtual assembling method in the computer.

Furthermore, the invention provides a computer-readable storage medium storing thereon a computer program, which comprises computer-readable program means for causing a computer to control an execution of a wiring harness designing method according to the invention or an embodiment thereof.

According to the invention, there is further provided a 3D virtual design system or wiring harness layout system, in particular implementing the method according to the invention or an embodiment thereof, for displaying a 3D design data of a wiring harness in a virtual 3D space on a display means by means of a control means based on a data inputted by a data input means, wherein:

a) the data input or retrieving means is adapted to input or retrieve

- a data representing the shape of the wiring harness in the form of a reference layout data representing a 3D layout of the wiring harness in a specified vehicle or electric appliance, and
- a 3D design data representing a 3D layout of a wiring harness designed for production,

b) the display means is caused by the control means to display

- a reference layout data image being an image represented by the reference layout data as a background image in the virtual 3D space,
- the 3D design data while superimposing it on the background image, and
- the shape of the wiring harness represented by the 3D design data while changing it according to an input made by the data input means, whereby confirmation of a degree of coincidence or a degree of discrepancy of an image of the changing result and the background image of the reference layout data is allowed.

According to a preferred embodiment of the invention, the 3D design data is at least partly divided into a plurality of wire segments and includes at least a vector information on the coordinates of the respective wire segments.
Preferably, upon changing the shape of the wiring harness, the vector information of each concerned wire segment is changed assuming that center axes of the adjacent wire segments are substantially continuous.
According to the invention, there is still further provided a wiring harness designing system or wiring harness layout system, in particular according to the invention or an embodiment thereof, which is a 3D virtual assembling system used in designing a wiring harness, comprising:

an input or retrieving means for receiving an input or for retrieving data,
a storage means for at least temporarily storing a harness design data which is a 3D design data of at least part of the wiring harness,
a display means, and
a control means for displaying the harness design data stored in the storage means in a virtual 3D space displayed on the display means and, if the harness design data is partly changed by an input made via the input means, correcting a section of the harness design data related to a content of the change and reflecting a correction result on display contents of the display means and stored contents of the storage means.

Accordingly, when the designer partly changes the harness design data via the input means, the section of the harness design data related to the content of the change is automatically corrected and the correction result is automatically reflected on the display contents of the display means and the stored contents of the storage means. Thus, it is not necessary for the designer to correct all the data related to the content of the change, and the form of the harness design data after the change can be immediately confirmed. As a result, the wiring harness can be more efficiently designed.

According to a preferred embodiment of the invention, the storage means further stores a board design data which is a 3D design data of an assembling board corresponding to the harness design data, and the control means displays the harness design data and the board design data in the virtual 3D space while setting the harness design data on the board design data and, if the harness design data is partly changed by an input made via the input means, corrects a section of the harness design data and/or a section of the board design data related to a content of the change and reflects correction results on the display contents of the display means and the stored contents of the storage means.

Accordingly, when the harness design data is changed, the wiring harness designing system automatically corrects the section of the harness design data and the section of the board design data related to the content of the change.

Preferably, if the length or path shape of a section of the harness design data is changed, the control means makes a correction by moving the coordinates in the virtual 3D space of an end section of the harness design data located more toward a corresponding end than the changed section when viewed from a reference portion as a reference of the harness design data according to an amount of the change in the length of the changed section and/or according to a changed content of the path shape without changing the 3D shape of the end section.

Thus, if the length or path shape of the section of the harness design data is changed, a correction is automatically made by moving the coordinates in the virtual 3D space of the end section of the harness design data located more toward the corresponding end than the changed section when viewed from the reference portion of the harness design data according to the amount of the change in the length of the changed section or the changed content of the path shape without changing the 3D shape of the end section.

Further preferably, the board design data includes an assisting jig data corresponding to assisting jigs for holding the wiring harness on the assembling board and, if the length or path shape of a section of the harness design data is changed, the control means makes a correction by moving the coordinates in the virtual 3D space of an end section of the harness design data located more toward a corresponding end than the changed section when viewed from a reference portion as a reference of the harness design data and the coordinates of the assisting jig data included in the board design data and corresponding to the end section of the harness design data according to an amount of the change in the length of the changed section and/or according to a changed content of the path shape.

Thus, if the length or path shape of the section of the harness design data is changed, a correction is automatically made by moving the coordinates in the virtual 3D space of the end section of the harness design data located more toward the corresponding end than the changed section when viewed from the reference portion of the harness design data and the coordinates of the assisting jig data included in the board design data and corresponding to the end section of the harness design data according to the amount of the change in the length of the changed section of the changed content or the path shape.

Further, the harness design data preferably includes an accessory data corresponding to accessories mounted on wires forming the wiring harness and, if the accessory data included in the harness design data is changed, the control means corrects the assisting jig data included in the board design data and related to the accessory data.

Accordingly, if the accessory data included in the harness design data is changed, the assisting jig data included in the board design data and related to the accessory data is automatically corrected.

Preferably, the storage means stores a plurality of harness design data having a common data configuration and related to each other and, if any one of the plurality of harness design data stored in the storage means is partly changed by an input made via the input device, the control means corrects a section of the changed harness design data related to a content of the change, reflects a correction result on the display contents of the display means and the stored contents of the storage means, and reflects the content of the change on the other(s) of the plurality of harness design data related to the changed harness design data.

Accordingly, if any one of the plurality of related and stored harness design data is partly changed by the input made via the input means, the section of this changed harness design data related to the content of the change is automatically corrected, and the content of the change made in the changed harness design data is automatically reflected on the other harness design data related to the changed harness design data. Thus, the plurality of related harness design data can be easily changed at once.

Further, since the plurality of related harness design data have the common data configuration, if any one of the harness design data is partly changed by the designer, the corresponding sections of the other harness design data can be easily automatically changed and the data administration such as data renewal (including corrections) and deletion can also be easily performed.

Further, a main part of the harness design data representing a wire path is preferably formed by connecting a plurality of joints along the wire path.

Accordingly, since the main part of the harness design data is formed by connecting a plurality of joints along the wire path, the length of a specific section of the main part or the wire path can be easily changed by increasing or decreasing the number of the joints in this specific section or increasing or decreasing the length of the joints in this specific section.

These and other objects, features and advantages of the present invention will become more apparent upon reading of the following detailed description of preferred embodiments and accompanying drawings. It should be understood that even though embodiments are separately described, single features thereof may be combined to additional embodiments.

FIG. 1 is a block diagram showing a hardware construction of a 3D virtual assembling system or wiring harness designing system according to one preferred embodiment of the invention,

FIG. 2 is a flow chart showing a 3D virtual assembling method according to one embodiment of the invention,

FIG. 3 is a diagram showing an image represented by a 2D data,

FIG. 4 is a diagram showing a wire model in a 3D space,

FIG. 5 is a diagram showing a state where a wire is divided into a plurality of wire segments,

FIG. 6 is a graph showing a vector information of the wire segment,

FIG. 7 is a diagram showing a state where two wire segments are continuously connected with each other,

FIG. 8 is a graph showing a curved state of the wire,

FIG. 9 is a diagram showing a state where covering part segments are used instead of the wire segments,

FIG. 10 is a diagram showing a state where surface lines are drawn on the outer circumferential surfaces of the respective wire segments,

FIG. 11 is a diagram showing a state where the wire is twisted with the surface lines drawn on the outer circumferential surfaces of the respective wire segments,

FIG. 12 is a diagram showing a case where the wire is found out to be excessively long,

FIG. 13 is a diagram showing a case where a branch wire is found out to be drawn out in an opposite direction,

FIG. 14 is a diagram showing an operation of producing a wiring harness on a assembling board,

FIG. 15 is a diagram virtually showing a state where a wiring harness is laid in a three-dimensional manner in a wire layout object.

FIG. 16 is a flow chart showing a method for designing a wiring harness assembling table according to one embodiment of the invention,

FIG. 17 is a diagram showing a wiring harness, accessories and assisting jigs in a 2D plane,

FIG. 18 is a diagram showing a 3D shape of a wiring harness developed in a 3D space,

FIG. 19 is a perspective diagram showing the 3D shape of a connector as an accessory,

FIG. 20 is a diagram showing a 3D shape developed in the 3D space in which accessories are connected with the wiring harness,

FIG. 21 is a diagram showing a state where an assembling table and assisting jigs are displayed together,

FIG. 22 is a flow chart showing an overall designing flow of an object to which the wiring harness assembling table designing method according to the embodiment of the invention is applied,

FIG. 23 is a flow chart showing an overall conventional designing flow of an application object,

FIG. 24 is a flow chart showing a summary of a method for designing a wiring harness according to one embodiment of the invention,

FIG. 25 is a diagram showing a retrieval tree structure showing a subassembly information,

FIG. 26 is a diagram showing a relationship between a subassembly assembling procedure information and other databases,

FIG. 27 is a diagram showing a relationship between an on-the-board assembling procedure information and the other databases,

FIG. 28 is a diagram showing an exemplary subassembly,

FIG. 29 is a perspective view showing a subassembly assembling site,

FIG. 30 is a perspective view showing a subassembly assembling operation,

FIG. 31 is a perspective view showing a subassembly assembling operation,

FIG. 32 is a perspective view showing a subassembly assembling operation,

FIG. 33 is a perspective view showing a state where subassemblies are arranged on a harness assembling table to form a wiring harness,

FIG. 34 is a perspective view showing the harness assembling table,

FIG. 35 is a perspective view showing an operation of arranging subassemblies on the harness assembling table,

FIG. 36 is a perspective view showing the operation of arranging subassemblies on the harness assembling table,

FIG. 37 is a perspective view showing the operation of arranging subassemblies on the harness assembling table,

FIG. 38 is a perspective view showing a state where the wiring harness is formed by arranging the subassemblies on the harness assembling table,

FIG. 39 is a perspective view showing the subassembly assembling operation,

FIG. 40 is a perspective view showing the subassembly assembling operation,

FIG. 41 is a perspective view showing a state where a subassembly assembling procedure is displayed on a display,

FIG. 42 is a perspective view showing a state where the subassembly assembling procedure is displayed on the display,

FIG. 43 is a diagram showing an example of the subassembly,

FIG. 44 is a diagram showing another example of the subassembly,

FIG. 45 is a flow chart showing the wiring harness designing method according to the embodiment of the invention,

FIG. 46 is a flow chart showing a general wiring harness designing method,

FIG. 47 is a flow diagram showing a general wiring harness producing method,

FIG. 48 is a diagram showing a construction of a wiring harness of a plurality of subassemblies,

FIG. 49 is a flow chart showing a general subassembly designing method,

FIG. 50 is a matrix table showing a connection relationship between wires and connectors of a subassembly,

FIG. 51A is a diagram of an example of the subassembly,

FIG. 51B is a diagram showing another example of the subassembly.

FIG. 52 is a diagram showing a data configuration of a harness design data,

FIG. 53 is a perspective view showing a harness design data of a display mode developed in a plane,

FIG. 54 is a diagram showing a harness design data of a display mode corresponding a layout in a vehicle body,

FIG. 55 is a perspective view showing a state where the length of a section of the harness design data of FIG. 53 is changed,

FIG. 56 is a diagram showing a state where the length of a section of the harness design data is increased or decreased by increasing or decreasing the number of the wire segments in this section,

FIG. 57 is a diagram showing a state where the length and path shape of a section of the harness design data of FIG. 54 are changed,

FIG. 58 is a flow chart showing a process of designing a wiring harness assembling board and a wiring harness by the wiring harness designing method according to a further preferred embodiment,

FIG. 59 is a flow chart showing a virtual layout process according to the wiring harness designing method of the preferred embodiment,

FIG. 60 is a diagram showing a 3D design data of a display mode developed in a plane,

FIG. 61 is a diagram showing a 3D design data of a display mode corresponding to a layout in a vehicle body,

FIG. 62 is a diagram showing a data configuration of the 3D design data,

FIGS. 63(a) to 63(c) are diagrams showing 3D design data at intermediate stages of a shape transitioning process,

FIG. 64 is a table showing a stored format of the 3D design data when being stored as a database,

FIG. 65 is a perspective view of a harness design data according to a further preferred embodiment developed in a plane,

FIG. 66 is a diagram showing an accessory data of a protector,

FIG. 67 is a flow chart showing a process of virtually mounting a protector on a wiring harness,

FIG. 68 is a perspective view showing the process of virtually mounting the protector on the wiring harness,

FIG. 69 is a perspective view showing the process of virtually mounting the protector on the wiring harness,

FIG. 70 is a perspective view showing the process of virtually mounting the protector on the wiring harness,

FIG. 71 is a diagram showing the process of virtually mounting the protector on the wiring harness,

FIG. 72 is a perspective view showing the process of virtually mounting the protector on the wiring harness,

FIG. 73 is a diagram showing the process of virtually mounting the protector on the wiring harness,

FIG. 74 is a diagram showing the harness design data of a form to be laid in a vehicle body,

FIG. 75 is a diagram showing the harness design data of another form to be laid in a vehicle body, and

FIG. 76 is a diagram showing a process of virtually connecting the wiring harness and an electrical connection box.

A 3D virtual assembling system according to one preferred embodiment of the present invention can detect incompatible points (incompatible contents) on a designed wiring harness by generating a 3D digital data (hereinafter, "3D design data") representing the shape of the designed wiring harness, image-displaying a 3D digital data (hereinafter, "reference layout data") of a wiring harness layout path in a product (wire layout object) in which the wiring harness is to be mounted, and superimposing the 3D design image on the image-displayed reference layout data while positioning the 3D design data and deforming curves and the like for a virtual comparison.

<Overall Construction of the 3D Virtual Assembling or Wiring Harness Designing System>

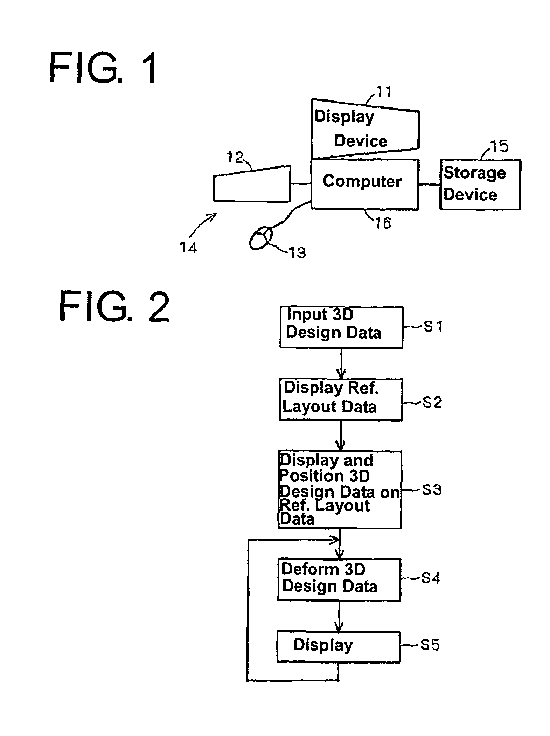

FIG. 1 is a diagram showing the 3D virtual assembling system or wiring harness designing system according to one preferred embodiment of the present invention. As shown in FIG. 1, this 3D virtual assembling system is provided, as hardware sources, with a display device (display means) such as a CRT display, input devices 14 including a keyboard 12 and a mouse 13, a storage device 15 such as a hard disk drive, and a computer main body (control means) 16 including a CPU and a main memory. In the storage device 15 is stored a software program specifying a procedure of an operation of the CPU of the computer main body 16 using various data stored in the storage device 15 in accordance with an input made by means of the input device 14.

Although not shown, in addition to the above input devices 14, a medium reader for reading a storage medium such as a magnetic disk, CD-ROM, floppy disk, DVD, magneto-optical disk, or the like and a communication device for receiving a data by means of communication via a communication network such as LAN (local area network) can be, for example, used as the data input means for inputting data.

By using these hardware sources 11 to 16 in combination, operation steps of a 3D virtual assembling method shown in a flow chart of FIG. 2 are or can be successively performed. Such operation steps are preferably implemented by the software program stored in the storage device 15 beforehand.

<3D Virtual Assembling Method>

The reference layout data is inputted to or retrieved by the computer main body 16 preferably beforehand.

Here, the reference layout data is an electronic data (3D electronic data) of a 3D layout of the wiring harness in a 3D space modeling the wire layout object. For example, the 3D layout of the wiring harness is designed beforehand for a wire layout object such as an automotive vehicle or an electric appliance based on, e.g. the mount positions of various parts in the wire layout object; a coordinate information on the shape of the wiring harness in the 3D space at that time and a coordinate information of various parts to be mounted on the wiring harness are generated into a 3D electronic data as a 3D drawing using a design assisting software program such as a CAD; and this 3D electronic data is inputted to the computer main body 16 and stored in the storage device 15 (see FIG. 1). A CAD software program used here may be implemented on the same equipment e.g. on the computer main body 16 and the data on the shape of the wiring harness 3 in this case may be preferably manually inputted or obtained by means of the input devices 14 or otherwise retrieved or inputted. Alternatively, the 3D electronic data generated in the other CAD system may be transferred to the computer main body 16 via communication or a specified storage medium such as a magnetic disk, CD-ROM, floppy disk, DVD, magneto-optical disk, or the like.

(Step S1) 3D Design Data Inputting Step

Here, the 3D design data is an electronic data representing coordinates of a 2D electronic data used to produce a wiring harness on a two-dimensional assembling board 1 in the 3D space.

First, in Step S1 of FIG. 2, after dimensions such as lengths between the branched portions of the wiring harness 3 and the mount positions of connectors are designed based on the above 3D drawing, the 2D drawing (plan) of the wiring harness 3 is generated in the form of a 2D electronic data using a design assisting software program such as a CAD, considering the production of the wiring harness 3 on the assembling board 1 as shown in FIG. 14, and the generated 2D electronic data is inputted to the computer main body 16.

Next, in the computer main body 16, a coordinate axis (z-axis) normal to a coordinate plane of the inputted 2D electronic data is added to or combined with the 2D electronic data, and the resulting data is stored as a 3D design data in the storage device 15. The 2D electronic data may be manually inputted to the computer main body 16 using the input devices 14. Alternatively, the 3D electronic data generated by an other CAD system may be transferred to the computer main body 16 via communication or a specified storage medium such as a magnetic disk, CD-ROM, floppy disk, DVD, magneto-optical disk, or the like.

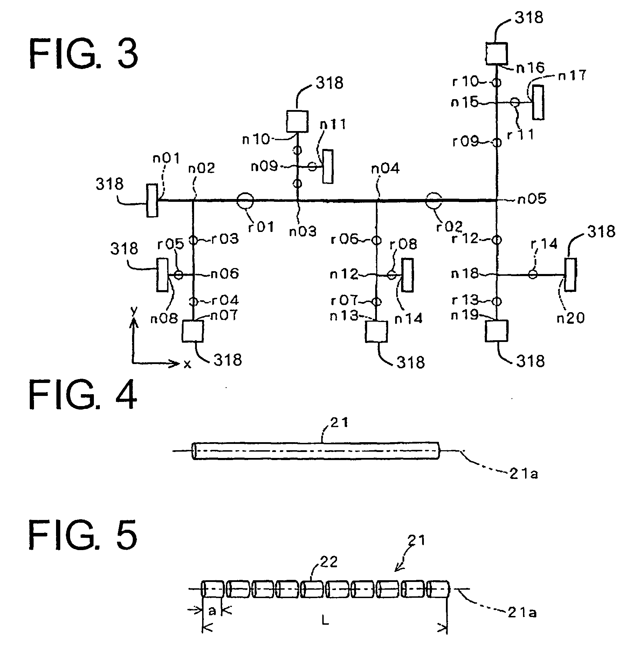

Here, pieces of information to be inputted as the 2D data include a 2D coordinate information of nodes n01 to n20 for specifying the shape of the respective wires forming the wiring harness on the assembling board 1 as shown in FIG. 3, a wire link information on links of the respective nodes n01 and n20, and an information on diameters r01 to r14 of the wires linking the nodes n01 to n20.

Further, in order to enable realistic deformation of the respective wires of the wiring harness 3 in a 3D design data deforming step to be described later, each wire 21 having a center or longitudinal axis 21 a as shown in FIG. 4 is divided along its longitudinal direction into a plurality of short wire segments 22 having a length "a" as shown in FIG. 5, and the length "a" of the respective wire segments 22 is also inputted in Step S1 considering that the respective wires 21 are deformed with the wire segment 22 as a unit. The length "a" is desirably from about 5 mm to about 15 mm, preferably about 10 mm. The respective wire segments may be equal or different. The wires 21 having a length L are finely divided into a plurality of short wire segments 22.

Further, a weight data of a plurality of wires forming the wiring harness 3 is also inputted (as described later). This weight data is a parameter representing a degree of difficulty to deform or bend the respective wires in the 3D design data deforming step to be described later. The larger the value of the weight data, the more difficult to move the wire when deforming it. Further, for a deformation to curve the wire, as the value of the weight data increases, the wire is more likely to be curved in its entirety instead of being deformed only at a point of deformation. Such a weight data is empirically obtained according to the diameters of the wires and other factors. The weight data may result from experiments and/or simulation of the deformation or bending properties or capability of the wires 21, in particular depending on the wire's specifications (such as material, cross-section. Structure, coating, etc.). In particular, when the wire 21 is stiffer or more rigid or more difficult to bend the segmentation length or the length "a" of the wire segments 22 is chosen to be longer while when the wire 21 is softer or easier to bend the segmentation length or the length "a" of the wire segments 22 is chosen to be shorter.

(Step S2) Reference Layout Data Image-Displaying Step

In Step S2, the reference layout data inputted beforehand is plotted in a virtual 3D space to be three-dimensionally displayed on the display device 11. In this virtual 3D space (as a 2D projection on the display means 11 or as a 3D virtual imaging technique e.g. based on a red/green display necessitating corresponding eyeglasses), a virtual viewpoint can be changed, for example, in accordance with an operation of the input device 14 such as the mouse 13.

This reference layout data represents a background image when the 3D design data is displayed in a manner as described later. In order to distinguish this data from the 3D design data, the virtual 3D display of the wiring harness 3 specified by the reference layout data is made, for example, in achromatic color.

(Step S3) 3D Design Data Displaying Step

Next, in Step S3, the 3D design data inputted in Step S1 is displayed on the reference layout data already image-displayed in Step 2 in the 3D space in a superimposed manner.

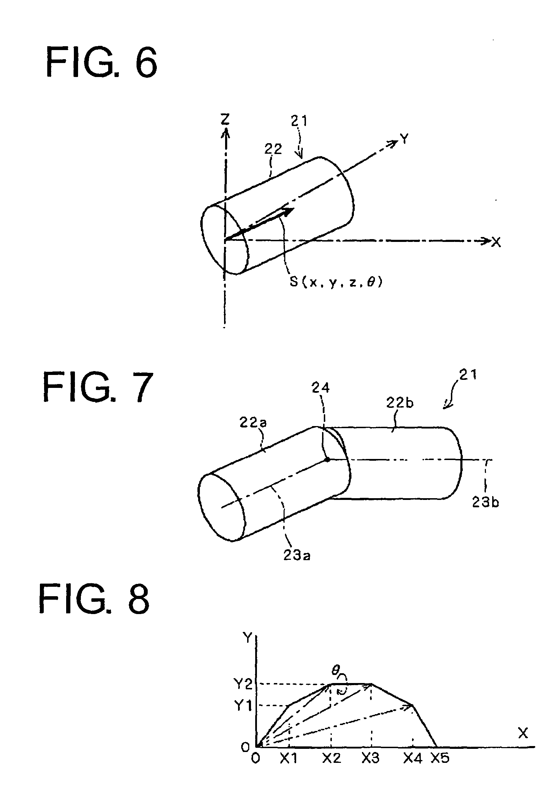

Here, in general shape representation by the 3D design data, the individual wires 21 or the respective wire segments 22 of an aggregate of a plurality of wires (wire bundle) are represented, for example, using cylindrical shapes as shown in FIGS. 4 and 6. However, the wires 21 may be represented using other shapes, such as a shape having a square, rectangular, elliptic or other cross section.

Specifically, as shown in FIG. 6, a vector S extending in a direction passing the center of a cylinder and having a length is defined for a data of the wire segment 22 having a length "a". The vector S can specify a single absolute position and a twisting degree by specifying a direction information and a length information in a 3D space defined by x-axis, y-axis and z-axis, and an angle of rotation information from a reference point by a twisted angle (angle of rotation centered on the axis of the wire) between this wire segment and the other wire segment adjacent thereto.

The data of the individual wire segments 22 are so displayed as to be continuously connected with each other (continuous connection). Here, a method of continuous connection is, as shown in FIG. 7, such that the coordinates of end points of center axes 23a, 23b are caused substantially to coincide in the case that wire segments 22a, 22b are to be connected.

The entire 3D design data is moved within the virtual 3D space using the input device 14 such as the mouse 13 to adjust an overall positional relationship between the 3D design data and the reference layout data. Step S3 is preferably ended when the 3D design data is substantially adjusted (positioned) to a position considered to be desirable by an operator.

(Step S4) 3D Design Data Deforming Step

In Step S4, the operator manually deforms the virtual shape of the wire 21 represented by the 3D design data using the input device 14 such as the mouse 13 so that this shape coincides with the image of the reference layout data displayed as a background image.

It is not impossible to represent the flexibility of the wire segment 22 by a data using a function of a usually used 3D simulation system. However, because such an operation is quite cumbersome, the result of the operation may not necessarily reflect the operator's intention.

Accordingly, in this 3D virtual assembling system, the following processing is performed to enable the representation of a flexible characteristic as intended by the operator.

The recognition of the respective wire segments 22 in the computer main body 16 is made by vector variables, i.e. vectors S (x, y, z, θ) in the 3D space as described above. A variable θ denotes a twisted angle between the two continuous wire segments 22a, 22b as shown in FIG. 8. Although vectors are shown in x,y plane by omitting z-axis in FIG. 8 in order to facilitate the description, the same applies to the 3D coordinate systems additionally having z-axis.

For example, the vectors S of five wire segments 22 have the following values in FIG. 8.

$$\text{vector } S1 = (X1, Y1, Z, \theta)$$

$$\text{vector } S2 = (X2, Y2, Z, \theta)$$

$$\text{vector } S3 = (X3, Y2, Z, \theta)$$

$$\text{vector } S4 = (X4, Y1, Z, \theta)$$

$$\text{vector } S5 = (X5, 0, Z, \theta)$$

After setting the vectors S as above, an end point of the wire segment 22 is moved within the 3D space by a special operation of the mouse 13 called "drag" with the end point of the wire segment 22 designated by means of the input device 14 such as the mouse 13, e.g. by manipulating a press button of the mouse 13.

Even in such a case, the continuous wire segments 22a, 22b are virtually held connected with each other at a connection point 24 thereof, for example, as shown in FIG. 7. Thus, if the position of the end point of the wire segment 22 is moved, it results in the representation of a curve of the wiring harness 3 due to the continuous connection. In other words, if a tension is exerted on one of the continuous wire segments 22, the other wire segment 22 is dragged. A movement vector of the other wire segment at this time is set by a specified operational equation based on an empirical rule so as to depend on a change or variation vector of the connection point with the one wire segment 22. By such a processing, the wiring harness 3 can be deformed without losing an information on the continuity of all the wires.

However, in the case that the position of point (X5, 0) in FIG. 8 is, for example, moved by means of the input device 14 such as the mouse 13, an influence of such a movement on the other connection points differ in degree. In other words, the connection points closer to the point moved by the input device 14 such as the mouse 13 are moved more than those more distant therefrom. Here, it is assumed that values of the vectors S after the change of the positions of the respective connection points are as follows.

$$\text{vector } S1 = (X1, Y1, Z, \theta1)$$

$$\text{vector } S2 = (X2, Y2, Z, \theta2)$$

$$\text{vector } S3 = (X3, Y2, Z, \theta3)$$

$$\text{vector } S4 = (X4, Y1, Z, \theta4)$$

$$\text{vector } S5 = (X5, 0, Z, \theta5)$$

where θ1< θ2<θ3<θ4<θ5. In this way, the curved shape of the wiring harness 3 can be represented by both the absolute coordinates and the twisted angles, and flexible representation such as a deflection can be freely made. It should be noted that a relationship of θ1 to θ5 (in particular reflecting the bending characteristic of the wire 21) is set beforehand e.g. based on an empirical rule or the like and is defined beforehand as a software program implementing the operations of the 3D virtual assembling system.

For the mutual influences of the different wires in the wiring harness 3, the weight parameters representing difficulties of the respective wires to deform are considered. Specifically, using a specified (predetermined or predeterminable) operational equation, the larger the value of the weight data of the wire, the smaller amount of movement is made during the deformation or the stiffer or rigid the wire 21 at least locally is. Further, concerning the curve or bend of the wire, as the value of the weight data of the wire increases, the wire is more likely to be moderately curved in its entirety instead of being deformed only at a point of deformation, in particular representing the overall stiffness or rigidity of the wire 21.

Frequently, the wiring harness 3 is comprised of not only an aggregate of the wires, but also various covering parts (e.g. vinyl tubes, corrugate tubes, various taping, etc.) 26 mounted around or on the wires 21. Accordingly, these shapes of the covering parts 26 need to be represented in association with the shape data of the wires 21.

For example, data having the same configuration as those of the wires 21, i.e. having pieces of information on the length and the diameter may be generated for the individual covering parts 26, the data of the wire segments 22 present within ranges where the covering parts 26 are mounted are deleted and the data of the covering parts 26 are inserted there instead or the data of the wire segments 22 is replaced by the data of the covering parts 26. The data on the diameters, designs and the dimensions of the covering parts 26 can be arbitrarily generated by a processing independent of the one for the wires 21. Therefore, the 3D shape of the wiring harness can be represented like a real wiring harness.

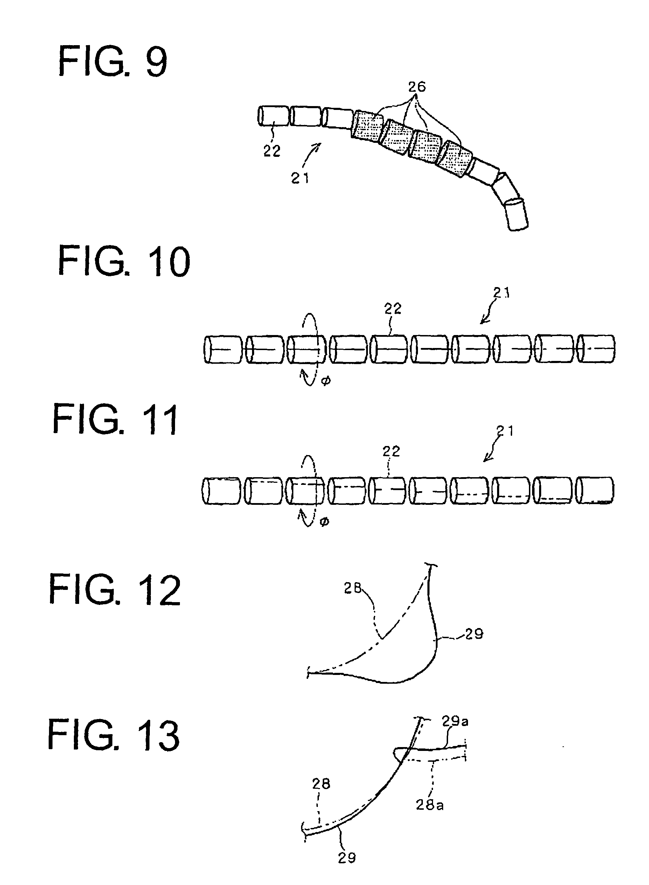

Although the parameter of a relative twisted angle φ (corresponding to the above θ) about the center axis of each wire segment is given in this embodiment as described above, unless the operator can recognize twisted states when looking at the 3D shape displayed on a screen of the display device 11, it is difficult for him to deal with them. In other words, in order to effectively carry out an actual 3D simulation, it is desirable to visually represent the "twist characteristic" on the display device 11. Thus, at an initial stage of the generation of the data on the wire segment 22, a mark, preferably a substantially straight line, is added on the outer circumferential surface of the wire segment 22 in the longitudinal direction. This case is described using a 3D model of the wire 21 shown in FIG. 10. It is assumed that the twisted angle φ which is a parameter of the vector S is set at a desired fixed value.

First, each wire segment 22 is displayed in cylindrical form, and a straight line (hereinafter, "surface line") is added on the outer circumferential surface of each cylindrical wire segment 22 along its longitudinal direction separately from the center axis thereof. Initially, the surface lines of all the wire segments 22 are set to substantially form a straight line in each wire 21.

Here, in the case that the twisted angles φ of all the wire segment data are same in the wire segments 22 continuously connected with each other, the straight lines in longitudinal direction on the outer surfaces of all the cylinders are represented as a continuous straight line. In this way, a state free from "twist" can be visually represented.

On the other hand, if the twisted angle φ is changed in some of the wire segments 22, the surface lines drawn on the outer circumferential surfaces of the respective wire segments 22 is displayed in a twisted manner as shown in FIG. 11 according to a degree of the angular change. In other words, in the case that a certain wire segment 22 is twisted, for example, due to a movement of a branch wire, the wire segments 22 adjacent thereto are so displayed as to represent a twist with the twisted angle φ reduced in accordance with a specified law, preferably based on or determined with a relaxation method. The "twist characteristic" can be visually represented only by drawing the surface lines on the outer circumferential surfaces of the cylindrical wire segments 22 in this way.

(Step S5)

The deformation results of the 3D design data of the wires 21 are displayed on the display device 11 e.g. with the aid of a conventional CAD-software such as ENVISION™, while being superimposed on the image of the reference layout data displayed as a background image, and a degree of coincidence or a degree of discrepancy of the two images is visually confirmed.

For example, if loosening of an image of the 3D design data with respect to an image 28 of the reference layout data as a background image is considerably large as shown in FIG. 12, it means that this wire is excessively long.

Further, if a branch wire 29a of the 3D design data is drawn out from base wires 28, 29 in a direction opposite from the one in which a branch wire 28a of the reference layout data as a background image is drawn as shown in FIG. 13, a design change is so made as to change a forming direction of the branch wire 29a with respect to the base wire 29.

Other problems including excessively short lengths of the wires and excessive twists can also be easily confirmed using the display result or content on the display device 11.

By the above 3D virtual assembling method, when designing the wiring harness, an efficient wire layout investigation can be made by virtually investigating the wire layout confirming to the result of designing without actually producing a trial product.

Accordingly, as compared to the prior art methods, time and labor taken for designing can be considerably reduced, thereby remarkably shortening a period of development up to the completion of the design.

This method is also effective for the actual investigation of designing since not only the coordinate information, but also the twists of the wires 21 can be investigated.

Accordingly, when designing the wiring harness, an efficient wire layout investigation can be made by virtually investigating the wire layout confirming to the result of the design without actually producing a trial product.

Thus, as compared to the prior art methods, time and labor taken for designing can be considerably reduced, thereby remarkably shortening a period of development up to the completion of the design.

Moreover, since the curved state and other state of the wiring harness can be subjected to a polygon processing and displayed by dividing the wiring harness into wire segments, an operation load of the control means can be reduced as compared to a case of performing an operation assuming a actually curved state as a physical data.

Furthermore, the continuous state of the wire segments can be maintained even after the deformation in the case that the wiring harness is divided into a plurality of wire segments. Thus, a processing can be performed to deform the wiring harness in such a manner approximate to an actual curved state of the wiring harness.

Further, since the data on the phase difference between the adjacent wire segments is given to each wire segment, whether or not there is any unnatural twist can be easily visually confirmed by displaying a change in this phase difference on the display means.

Still further, the surface line which is a straight line in parallel with the center axis is virtually drawn on the outer circumferential surface of the wiring harness before changing the shape of the wiring harness, and the surface line is displayed on the display means while being twisted according to the twisted angle of the wiring harness. Thus, twists of the wiring harness can also be investigated, which is effective for the actual investigation of designing.

Moreover, in the case that part of the wiring harness is covered by the covering part, the 3D design data of the covering part is used for each of the corresponding wire segments instead of the 3D design data of the wire segments. Thus, the 3D shape of the wiring harness can be represented like a real wiring harness.

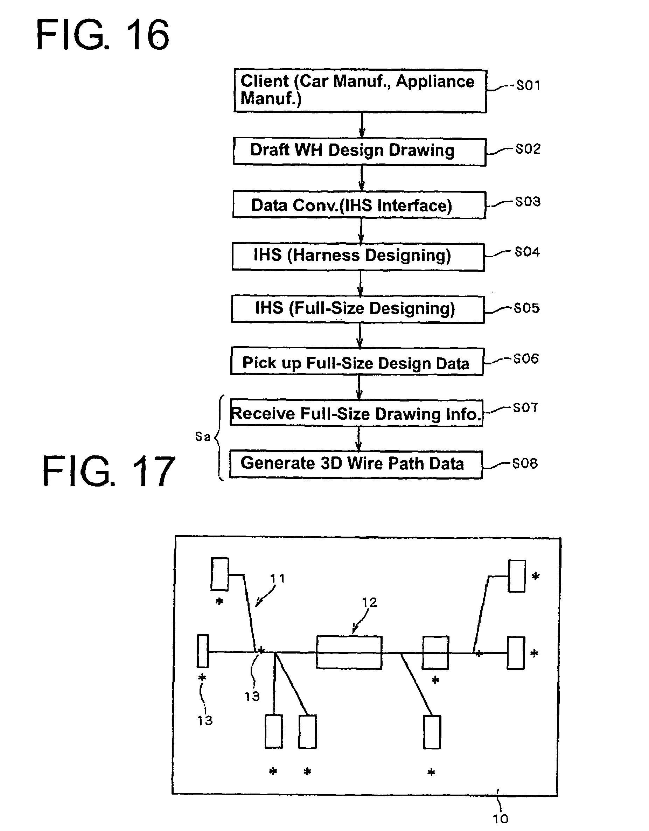

FIG. 16 is a flow chart showing a method for designing a wiring harness assembling table according to one embodiment of the present invention.

First, a client or a design provider such as a car manufacturer or an appliance manufacturer written in Step S101 of FIG. 16 drafts a design drawing of a wiring harness divided according to the type of an object (e.g. automotive vehicle, electric appliance, etc.) and according to sections (Step S102). At a later stage, a wiring harness is designed for each type and for each section. This design drawing includes an information on the specifications of various parts such as electric circuits, wires and accessories. An information output form of the design drawing to be drafted includes an electronic information of two-dimensional (2D) or 3D coordinates and a drawing printed as a plan based on the electronic information.

Subsequently, in Step S103, the electronic information obtained in Step S102 is so converted as to have a data format suited to a computer software program called IHS (wiring harness production designing system).

In Step S104, the wiring harness is designed on the computer by a skilled operator and a full-size production design drawing (full-size drawing) is drafted (Step S105). This full-size drawing is a simulation corresponding to the wiring harness 3 on the assembling table 1 shown in FIG. 15 and is, for example, a drawing in 2D coordinate systems as shown in FIG. 17. This full-size drawing includes an information on circuits 11 each of which is one wire or an aggregate of a plurality of wires, an information of terminals such as connectors and ground terminals, an information on various accessories 12 including protecting members or covering parts such as clamps, clips, tubes, taping and/or protectors, and an information on various dimensions and tolerances necessary for the production in a 2D space assuming the surface of the assembling table 1. This drawing also includes an information on various assembling assisting jigs (a multitude of jigs for terminals, clamping and/or branching are newly designed or selected according to application) 13 indicated by * in FIG. 17.

In Step S106, a full-size drawing design data for the full-size drawing drafted in Step S105 is sampled.

Here, the full-size drawing design data includes an information on nodes through which the respective circuits pass (node information), an information on spans connecting the respective nodes (span information) and an information on accessories to be connected with some of the nodes (part information).

Specifically, the node information includes the numbers and coordinates of the respective nodes.

The span information preferably includes the numbers of the nodes connected with each other, a diameter of the wiring harness, and the coordinates of passing points and bending points.

The part information includes the numbers of the nodes with which the respective accessories are connected, an information on the name of terminal parts or part codes, an information on the types, specifications and mounting directions of the parts.

Other pieces of information included in the full-size drawing design data preferably include a wire information, a circuit construction information and a circuit processing information.

A 3D wire path data is generated based on these pieces of information using a 3D simulation system (Step Sa).

Specifically, the 2D full-size drawing design data obtained in Step S106 is first received as a full-size drawing information in Step S107.

Then, in Step S108, the 3D wire path data is generated.

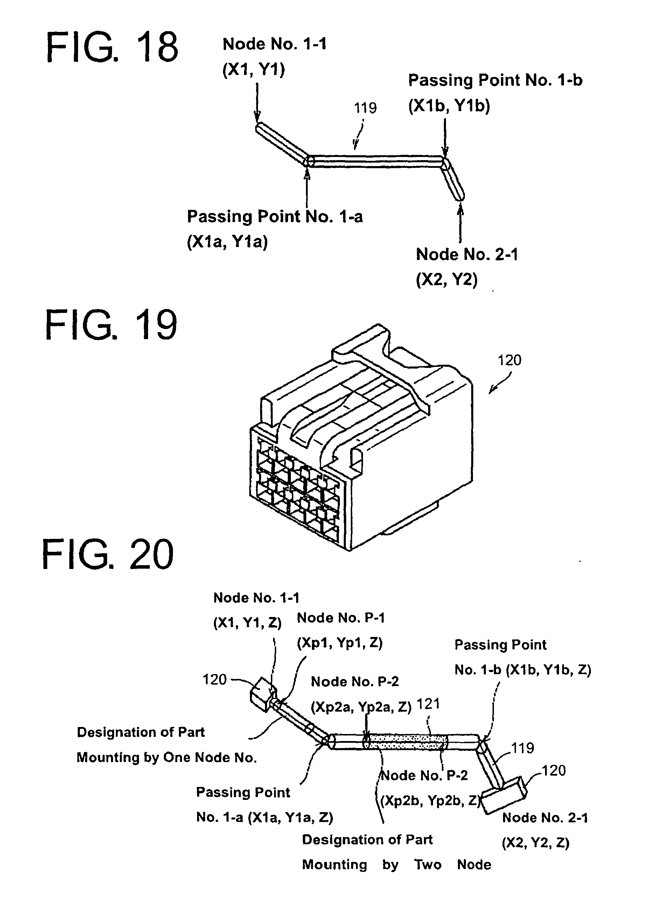

The operations performed in Step S108 are described in detail with reference to FIGS. 18 to 21. Here, it is assumed that the node numbers of the opposite end points of the wiring harness are node No. 1-1 and node No. 2-1 and the node numbers of the passing points are passing point 1-a, passing point 1-b. The operations of Step S108 are realized by a CPU being caused to operate in accordance with a software program stored beforehand in a specified storage medium such as a hard disk drive in the computer.

<u><1. 3D Wire Path Data Setting Step></u>

First, the respective pieces of the span or element or segment information are obtained. For example, the node numbers of the opposite end points of the span or element or segment, node No. 1-1, node No. 2-1, are sampled as a first span information as shown in FIG. 18. Further, the information on the diameter of the harness at this span is sampled. In this case, the thickness of the wire aggregate is calculated as a wire diameter in the displayed drawing and preferably is expressed in numerical value. Further, the passing points 1-a, 1-b which need to be passed when the wiring harness has a bending point are obtained. The span information is similarly obtained for the remaining spans or elements or segments.

After the span information is obtained for all the spans, 2D coordinates [X1, Y1], [X2, Y2] of the respective nodes are retrieved from the node information.

Subsequently, the coordinates of node No. 1-1, node No. 2-1 and the coordinates [X1a, Y1a], [X1b, Y1b], ... [X1n, Y1n] of the passing points are plotted.

Then, the coordinates of the respective nodes are grasped as 3D coordinates by setting a coordinate (z-coordinate) in a direction (height direction) normal to the 2D space at a constant value (Z) for the coordinates of the respective nodes in the 2D space (x-y coordinate systems). The value of Z at this time is set at a distance (e.g. 100 mm) of the wiring harness supported by the assisting jigs 2 from the assembling table 1 as shown in FIG. 15. Although this dimension may be manually inputted by an operator, a value in Z-axis may be automatically given by the computer preferably taking advantage of the fact that the respective dimensions of the assisting jigs 2 are already known.

Subsequently, two adjacent ones of a plurality of plotted points are designated, a data (D1) on the "harness diameter" is obtained, and a cylindrical shape data having a straight line connecting the two points as a center axis and having a diameter D is generated. Such cylindrical shape data are obtained for all pairs of adjacent points and, consequently, the 3D wire path data is or can be generated.

At this stage, the 3D coordinates of the respective nodes are as follows (see FIG. 18).

- Node No. 1-1 ... (X1, Y1, Z)
- Node No. 2-1 ... (X2, Y2, Z)
- Passing point 1-a ... (X1a, Y1a, Z)
- Passing point 1-b ... (X1b, Y1b, Z)

In this way, a virtual wiring harness 119 modelled into an aggregate of elements, preferably of cylindrical shapes, can be represented in the 3D space as shown in FIG. 18.

<2. Part Shape Data Setting Step>

<u>2-1. Part Information Obtaining Step</u>

Next, the part information to be described below is obtained from the full-size drawing design data obtained in Step S106.

First, the node No. 1 is obtained as a node number representing origin coordinates where this accessory is to be mounted. However, additional coordinates preferably are designated by the node No. 2 as the node number of the additional node in the case that the mount position of the accessory cannot be securely designated by the origin coordinates.

Then, the mounting direction of the accessory is designated. This direction information is included in the information of the node No. 1 or node No. 2. For example, if the node No. 1 is inputted, it means that the accessory is mounted at the coordinate position of the node No. 1 or is mounted toward the node No. 2 with the node No. 1 as an origin.

Further, an accessory specification data (name, code, type, length, etc. of the part) is sampled as a number by a uniformly administrable numerical value or by a specified (predetermined or predeterminable) data standard.

2-2. Step of Setting the 3D Shape of the Parts

The 3D shape of the part is stored in the storage device such as a hard disk of the computer beforehand. Here, a method for setting the 3D shape data of various parts stored in the storage device is described.

Parts for a wiring harness include wires, terminals, connectors, clamps (or clips), tubes, protectors (e.g. molded parts) and/or boxes (fuse boxes, junctions positions, etc.), etc. The 3D shape data of these parts need to be generated at first. Accordingly, the 3D shape data of the above various parts are obtained by the following method.

First, a 3D shape information registered in or generated by an existing CAD system is copied at the development and design stage of the accessories, and one data file is generated for a data of one part. FIG. 19 is a perspective view showing the 3D shape of a connector housing as an exemplary part. The name or code of the part is preferably used as the name of this data file.

For the accessory whose 3D shape data are not available, 2D drawings or actual accessories are obtained, and the 3D shape data of these accessories are set and inputted using a 3D CAD system. After the input of the data, one data file is generated for a data of one part and the name or code of the part is used as the name of this data file.

Peculiar retrieval indexes are preferably added or appended or combined part by part to or with the 3D shape data of various parts in use obtained by the above method, and are stored in the storage device such as a hard disk drive as a part information database.

2-3. Step of Connecting the 3D Shape Data with the 3D Wire Path Data

The 3D shape data are connected with the 3D wire path data (see FIG. 20). First, the name or the code.of the part is obtained from the part information, and the obtained information is used as a retrieval key to obtain the 3D shape data file of this accessory from the part information database.

Subsequently, the node No. 1 and the node No. 2 if necessary are obtained to obtain the coordinates of the mounting position of the accessory from the part information. Such a node information is retrieved to obtain or generate or provide the 2D coordinates [Xpan, Ypan].

Then, the 3D shape data of the accessory is attached at or related to a specified coordinate position.

First, one node number information is designated for a connector 20 at one end, the coordinates of a center point of a plane where terminals are to be inserted are obtained, and these coordinates are caused to substantially coincide with the node coordinates where the connector is mounted, whereby the 3D shape data of the accessory shown in FIG. 19 is attached to or combined with the 3D wire path data (see FIG. 20).

Further, for a clamp (also called as clip), one node number information is designated and, after the coordinates of a center point of this accessory (clamp) are obtained, these coordinates are caused to substantially coincide with the node coordinates where this accessory is to be mounted, whereby the 3D part shape data is attached to or combined with the 3D wire path data.

For the covering member (such as a corrugate tube, vinyl tube or taping: see 121 in FIG. 20), a data preferably on the type, diameter and/or length of the part is obtained based e.g. on the information on the name and the specification of the part, and a 3D shape data, preferably a 3D cylindrical shape data, in conformity with the diameter and length data of this part is generated. In order to enable a visual judgment of the type of the part, special display designs (display color, surface design, etc.) corresponding to the types of the parts are or can be determined beforehand, and the display design is selected based on the part type information and is reflected on the previously generated 3D cylindrical shape data. Subsequently, the node coordinates are obtained from the node number information, and a point expressed by these node coordinates is assumed to be a base point where the 3D cylindrical shape data is attached. In the case that there are two pieces of the node number information, the direction data is referred to and a point expressed by the node number indicated there is assumed to be a base point. The coordinates of the base point and those of an end point of a center line of the 3D cylindrical shape data are caused to coincide with each other, whereby the data is attached by a method for superimposing the 3D cylindrical shape data on the 3D wire path data. For example, in FIG. 20, the opposite end points of the cylindrical shape of the covering part 21 are expressed by the coordinates [Xp2a, Yp2a, Z], [Xp2b, Ypb, Z] at the opposite ends of a long node No. P-2.

In the case that the diameter and length data cannot be obtained, a 3D cylindrical shape data is generated using the coordinates of two node numbers and the diameter of the 3D wire path data including these node numbers.

The 3D cylindrical shape data may be sometimes attached after erasing the 3D wire path data within a range where the 3D cylindrical shape data is set.

A "3D wiring harness shape data" as shown in FIG. 20 can be obtained by the above procedure.

<3. Assembling Table Data Generating Step>

3-1. Step of Setting the 3D Shape Data of the Assisting Jigs

There are various kinds of supporting or assisting jigs 2 (see FIG. 15) depending on their functions. Generally used assisting jigs 2 include U-shaped jigs for fixing the terminal parts (connectors, terminals, etc.) and the wires, branch jigs used at branched points of the wires, and/or clamping jigs for positioning the clamps.
These jigs are or may be individually designed and produced or 2D drawing information of the assisting jigs or actual jigs are obtained and 3D shape data are set and registered as in the above "2-2. Step of Setting the 3D Shape of the Parts". In the administration of the data file in the "3-1. Step of Setting the 3D Shape Data of the Assisting Jigs" as well, a jig data base is generated or used, preferably using the names or codes of the parts as file names as in the "2-2. Step of Setting the 3D Shape of the Parts"
Since the U-shaped jig is a generally used jig and is not particularly selected in one-to-one relationship to the part name or part code. Thus, the name or code may be separately determined and registered therefor.

A. Step of Selecting and Mounting the Assisting Jigs

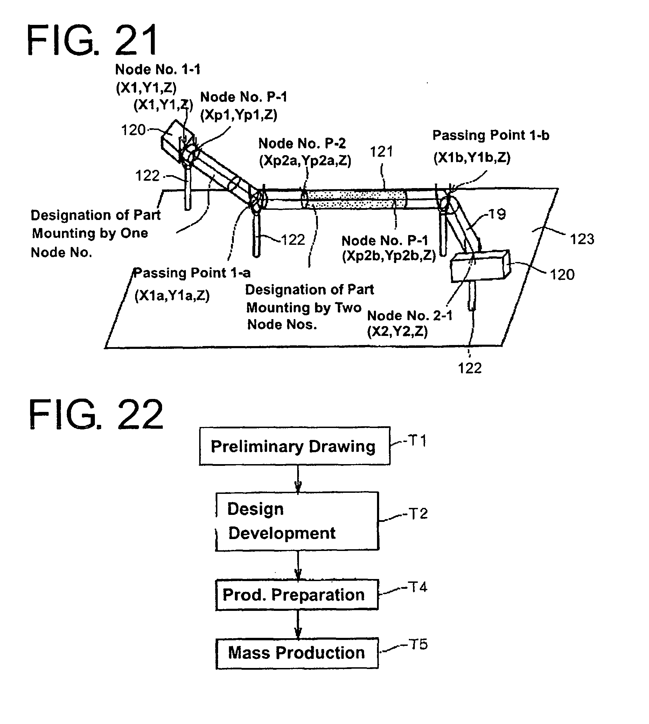

The breadth and length of the assembling table 1 (See FIG. 15) used for assembling the wiring harness are obtained from the full-size drawing information obtained in Step S107. Several sizes of the assembling table are available as production standards (e.g. 870 mm (breadth) × 3600 mm (length)), and a designer selects an optimal size in drafting a full-size drawing.
Next, with reference to the part information, the assisting jigs 2 are selected for the node coordinates included in the part information. A desired selection method is adopted, and an optimal jig is selected within such a range as not to impair an operability and not to hinder a guarantee of a quality (positioning precision, dimensional precision, etc.) preferably in consideration of the type, shape, size and the like of the parts and the wire diameter. Some assisting jigs 2 such as clamps are determined or defined in one-to-one relationship to the part names or part codes.
The assisting jigs 2 may be arbitrarily selected by the operator. However, since the dimension data of, e.g. the U-shaped jig such as the inner diameter of its holding section can be recognized by the computer, the type of the assisting jigs 2 may be automatically computer-selected according to the diameter of portions of the respective wires held by the assisting jig 2.
The 3D shape data (see 122 in FIG. 21) of the selected assisting jigs 2 is retrieved from the jig database and attached to the assembling table 123 for assembling the wiring harness.
The "3. Assembling Table Data Generating Step" is completed by the above operations.
The 3D wiring harness 19, the assisting jigs 122 and the assembling table 123 thus generated are displayed on a display screen of the computer or printed by a printer, so that they can be visually grasped without producing any trial product at an assembling site of the wiring harness.
Since the wiring harness and the assembling site can be easily virtually modeled by the computer, problems of the design can be pointed out and an improvement thereto can be made within a short time. Specifically, if the above wiring harness assembling table designing method is, for example, used at the design and development stage of the object in which the wiring harness is to be used as in Step T2 of FIG. 22, it is no longer necessary to produce a trial product of the wiring harness (Step T3 of FIG. 23) unlike the prior art. As a result, a development period of the object in which the wiring harness is to be used can be considerably shortened.
Accordingly, the wiring harness can be easily virtually modeled by the computer since the wiring harness assembling table designing method for investigating and designing the arrangement of the assembling table used to assemble the wiring harness and the assisting jigs for supporting the group of the wires laid along the specified path on the assembling table is provided with the step of setting a cylindrical wiring harness having a virtual thickness based on a design information of the wiring harness developed in a 2D plane and a wire diameter information included in the design information; the step of relating the set cylindrical wiring harness to the 3D data of accessories based on the design information, and the step of selecting optimal assisting jigs for receiving the wires to be laid and virtually making an optimal arrangement of the assisting jigs on the assembling table using the computer. Thus, problems of the design can be pointed out and an improvement thereto can be made without producing trial products of the wiring harness, the wiring harness can be developed within a shorter time, and the assisting jigs can be efficiently arranged and designed.
Further, the assembling table can be efficiently selected by preferentially selecting the predetermined assembling table. As a result, the development of the wire layout path and the virtual arrangement of the assisting jigs can be quickly made on the assembling table.
Moreover, a 3D model easy to visually grasp in accordance with an actual situation can be easily obtained based on the accessories to be mounted on the wiring harness.
Furthermore, the coordinate axis in the normal direction to the 2D plane of the wire layout path is added to the coordinate systems of the 2D plane in the assisting jig selecting and mounting step, and the value of the height at which the wiring harness is supported by the assisting jigs above the assembling table is set in the normal direction, thereby arranging the wire layout path in the 3D space. Thus, the coordinates of the wire layout path can be easily converted from the 2D coordinates to the 3D coordinates.

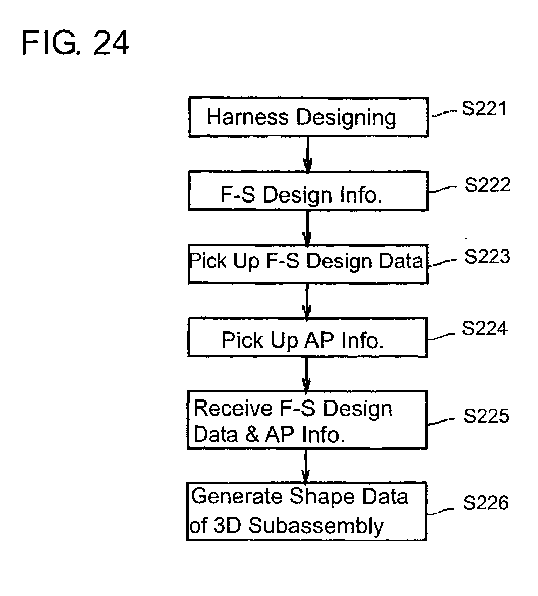

FIG. 24 is a flow chart showing a wiring harness designing method according to one preferred embodiment of the present invention. As shown in FIG. 24, a three-dimensional (3D) virtual simulation technology is utilized for a process from the separate designing of subassemblies forming a wiring harness to the arrangement of these subassemblies on a harness assembling table, preferably as described with reference to FIGS. 1 to 13, thereby generating the wiring harness and the harness assembling table having precise 3D structures in a virtual space. A trial product of the wiring harness is or can be virtually produced only by simulation, and productivity- and quality-related hindering factors are pointed out to study a method for improving such hindering factors.

The above operations are carried out in a computer system e.g. as shown in FIG. 1 preferably provided with a ROM, a RAM and a CPU while 3D images are displayed on a display 11. A method for these operations is described in detail below.

First, a full-size drawing is drafted (drafting of a drawing used to produce a wiring harness) in a procedure similar to the one shown in Steps S01 and S02 of FIG. 46. As a result, a harness design information (full-size design information: Step S222) is obtained from a production designing system (IHS: Step S221) as a software program of the computer, preferably as already described with reference to FIGS: 1 to 13.

The harness design information is a drawing information preferably developed in a two-dimensional (2D) plane which information is necessary to draft a 2D drawing, and 3D shape data as electronic data processable in the computer system are preferably generated based on this harness design information. Alternatively or additionally at least part of the harness design information may be already inputted as 3D data e.g. as possibly received from a car manufacturer.

Specifically, in Step S223, data are sampled from or inputted to the computer system for various items including the 3D shapes of the respective parts such as wires, connectors and covering parts and a part information, considering the full-size designing, and these data are compiled using a storage device such as a hard disk of the computer system.

During this time, the full-size design information obtained in Step S222 and a subassembly composition information (subassembly information) on a plurality of separately designed subassemblies forming the wiring harness as a final product are formed into a database (full-size design data generating step).

The data (full-size design data) to be sampled or inputted at this time include a node information including numbers of nodes (node Nos.) such as center points and end points and 3D coordinates of the respective nodes (node coordinates); a span or element or segment information specifying the nodes connected with each other; a part information indicating by which nodes various parts are connected with each other (i.e. nodes Nos., names or codes of terminal parts, types, specifications and mounting directions of the parts, etc.); a subassembly information including identification numbers (subassembly Nos.) for distinguishing a plurality of subassemblies from each other and an information on parts (e.g. circuit parts) forming the subassemblies; a circuit information including an information on the types, sizes, colors, processed lengths, diameters of the wires, the names of terminals mounted at the opposite ends of the wires, the part codes, the node Nos. of the connectors into which the terminals at the opposite ends of the wires are to be inserted, the names and codes of the connectors, and cavity numbers in the connectors to have the terminals inserted thereinto (insertion cavity Nos.); a circuit construction information; and a circuit processing information.

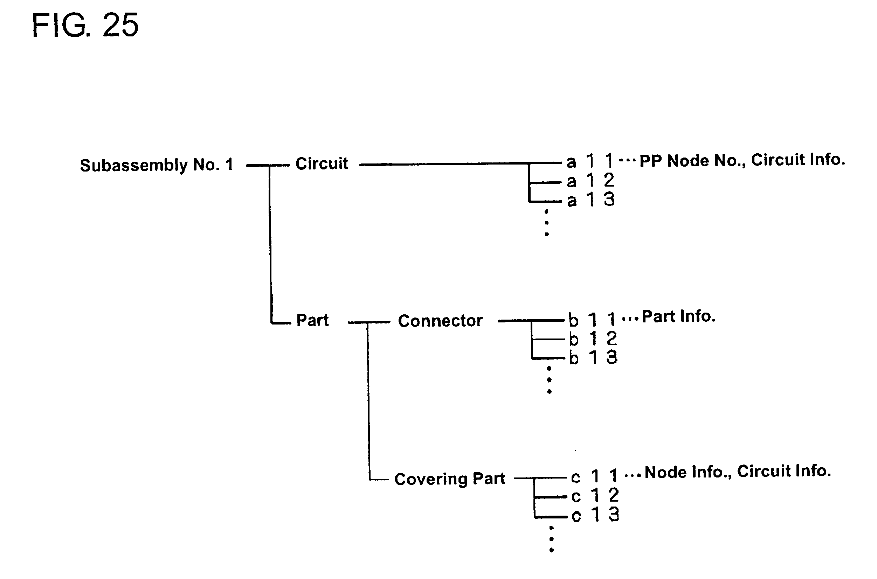

A preferred data configuration of the subassembly information is shown in FIG. 2. The subassembly information is organized in a retrieval tree structure as shown in FIG. 25.

In FIG. 25, circuits a11, a12, a13, ... of a subassembly No. 1 are an index information of each wire and include a circuit information used to define various pieces of information such as a plurality of passing nodes Nos. (node Nos.) used to detect coordinates where the respective wires pass on the full-size drawing and the diameters of the wires.

Connectors b11, b12, b13, ... as parts are an index information of the connectors and specifically include a connector specification information linked with the part information, and the part information on, e.g. the positions of the nodes where the respective connectors are located.

Covering parts c11, c12, c13 such as clamps, clips, protectors, tubes, taping, etc. as parts are an index information of various covering parts and include a relationship information linked with the circuit information and indicating which circuit is joined with which covering part, and an information (node information) on the positions of the nodes where the respective covering parts are located.

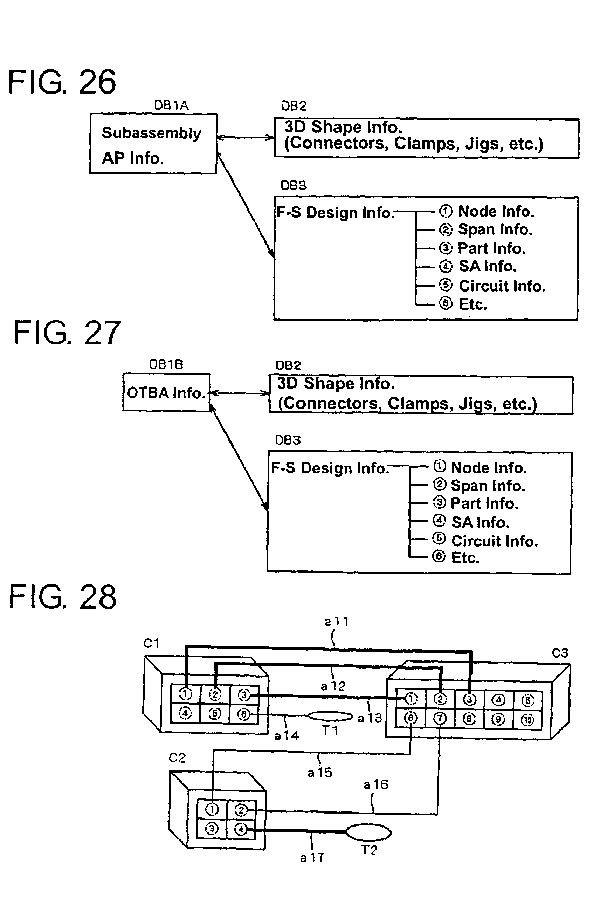

These pieces of the full-size design information are stored as a database (DB3 in FIGS. 26 and 27) in the storage device such as a hard disk of the computer system.

A 3D shape information on the 3D shapes of the connectors b11, b12, b13, ..., the covering parts c11, c12, c13, ... such as clamps, assembling jigs and other parts is stored as a database (DB2 in FIGS. 26 and 27) beforehand, and the respective data of the 3D shape information can be retrieved by referring to the above index information.

Separately from these pieces of the full-size design data, an information on the wiring harness assembling procedure (assembling procedure information) is also inputted or retrieved or obtained in Step S224 and stored as a database in the storage device such as a hard disk of the computer system. This assembling procedure information includes a subassembly assembling procedure information and an on-the-board assembling procedure information.

The subassembly assembling procedure information includes an order index (serial No.) indicating an assembling order, the names or codes of the parts such as the connectors to be assembled, the circuit Nos. of the wires to be assembled, terminal symbols indicating at which ends of each wire to be assembled the terminals are mounted (one terminal "A" and the other terminal "B"), flags indicating the presence or absence of the covering part to be mounted first (first mounting part), the specifications of the first mounting parts (names and processing specifications of the vinyl parts and the like), and other operation codes and specifications.

A data of the subassembly assembling procedure information is stored as a database DB1A. This subassembly assembling procedure information DB1A is linked with the database DB2 of the 3D shape information and the database DB3 of the full-size design information as shown in FIG. 26 with the subassembly Nos. as link keys.

The on-the-board assembling procedure information includes an order index (serial Nos.) indicating an assembling order on the harness assembling board, the subassembly Nos. for specifying the subassemblies to be brought onto the harness assembling table, the operation codes for identifying the operations as wire laying, terminal insertion, bundling, mounting of the covering parts, and branching, the circuit Nos. of the wires to be independently assembled not as part of the subassembly, terminal symbols indicating at which ends of each of these wires to be assembled the terminals are mounted (one terminal "A" and the other terminal "B"), and the specifications of other operations.

A data of this on-the-board assembling procedure information is also stored as a database DB1B. This on-the-board assembling procedure information DB1B is also linked with the database DB2 of the 3D shape information and the data base DB3 of the full-size design information as shown in FIG. 27 with the part information and the like as link keys.

Here, a specific example of the subassembly is shown in FIG. 28 and a procedure of assembling this subassembly is shown in TABLE-2.

TABLE-2

| ORDER | CONTENTS OF OPERATION |
|---|---|
| 1 | Take connector C3 out and hold it by left hand |
| 2 | Pull B-terminal side of circuit a15 out by right hand, and at least partly insert it into cavity ⑥ of connector C3 |
| 3 | Pull B-terminal side of circuit a16 out by right hand, and at least partly insert it into cavity ⑦ of connector C3 |
| 4 | Pull A-terminal side of circuit a13 out by right hand, and at least partly insert it into cavity ① of connector C3 |
| 5 | Pull A-terminal side of circuit a12 out by right hand, and at least partly insert it into cavity ② of connector C3 |
| 6 | Pull A-terminal side of circuit a11 out by right hand, and at least partly insert it into cavity ③ of connector C3 |

In FIG. 28, cavities ①, ②, ③ of a connector C1 and cavities ③, ②, ① of a connector C3 are connected by circuits (wires) a11, a12, a13, and cavities ①, ② of a connector C2 and cavities ⑥, ⑦ of the connector C3 are connected by circuits (wires) a15, a16. Further, a circuit a14 connected with a cavity ⑥ of the connector C1 is connected with a free terminal T1, and a circuit a17 connected with a cavity ④ of the connector C2 is connected with a free terminal T2. These free terminals T1, T2 are free circuit terminals which are not inserted into the cavities of the connectors at a subassembly assembling stage, but need to be at least partly inserted into the connectors on the harness assembling table 216 later on.

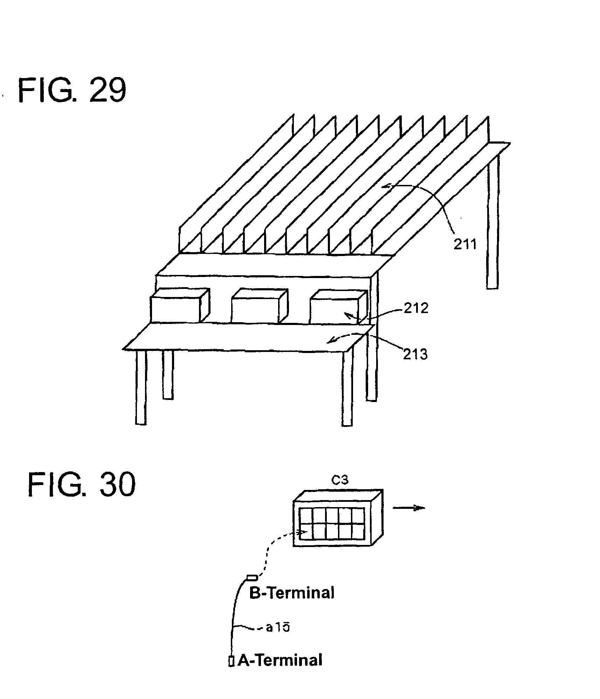

In the case of manually assembling the subassembly shown in FIG. 28, wires are accommodated in a wire accommodating tray 211 shown in FIG. 29, and parts in part accommodating cases 212 are connected with ends of the wires toward the front side in FIG. 29. Connecting operations at this time are performed on a work table 213.

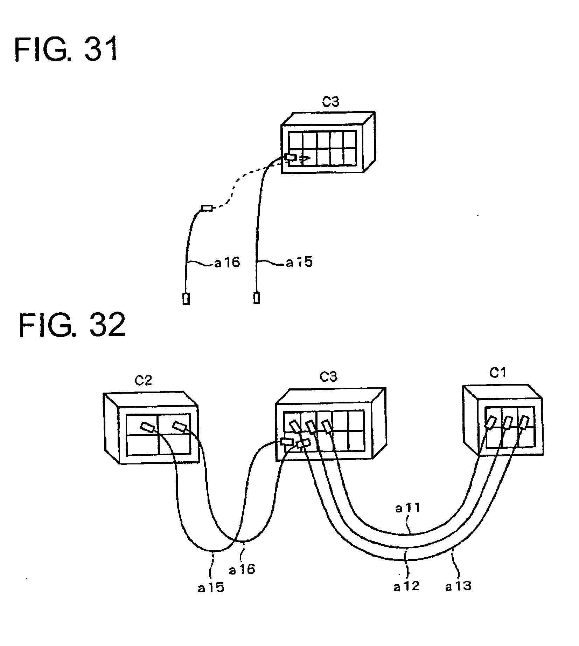

Specifically, a procedure of, for example, assembling the respective circuits a11, a12, a13, a15, a16 into the connector C3 is as shown in TABLE-2. First, the connector C3 is taken out of the part accommodating case 212 and held by left hand. Then, the B-terminal side of the circuit a15 accommodated in the wire accommodating case 211 is pulled out by right hand and at least partly inserted into the cavity ⑥ of the connector C3 (see FIGS. 28 and 30). Similarly, the B-terminal side of the circuit a16 is pulled out by right hand and inserted into the cavity ⑦ of the connector C3 (see FIGS. 28 and 31); the A-terminal side of the circuit a13 is pulled out by right hand and at least partly inserted into the cavity ① of the connector C3; the A-terminal side of the circuit a 12 is pulled out by right hand and at least partly inserted into the cavity ② of the connector C3; and the A-terminal side of the circuit a11 is pulled out by right hand and at least partly inserted into the cavity ③ of the connector C3 (see FIGS. 28 and 32).

The subassembly assembling procedure information is generated assuming the procedure of these manual operations. The subassembly assembling procedure information at this time (see FIG. 26) is as shown in TABLE-3 below.

TABLE-3

| SUBASS. NO. | SERIAL NO. | PART CODE | CIRCUIT NO. | TERMINAL SYMBOL | ... |
|---|---|---|---|---|---|
| | 001 | C3, 2 | | | |
| | 002 | | a15, 1 | B | |
| | 003 | | a16, 1 | B | |
| | 004 | | a13, 1 | A | |
| | 005 | | a12, 1 | A | |
| | 006 | | a11, 1 | A | |

In TABLE-3, an information "C3, 2" meaning that the connector C3 is held by left hand ("2") is stored in a part code column in a row of the serial No. of 001. Subsequently, an information "a15, 1" meaning that the circuit a15 is held by right hand ("1") is stored in a circuit No. column in a row of the serial No. of 002. Similarly, pieces of information "a16, 1", "a13, 1", "a12, 1" and "a11, 1" are stored in the rows of the succeeding serial Nos. The terminal symbols (A or B) are also stored together. This subassembly assembling procedure information is formed into a database as indicated by DB1A in FIG. 26.

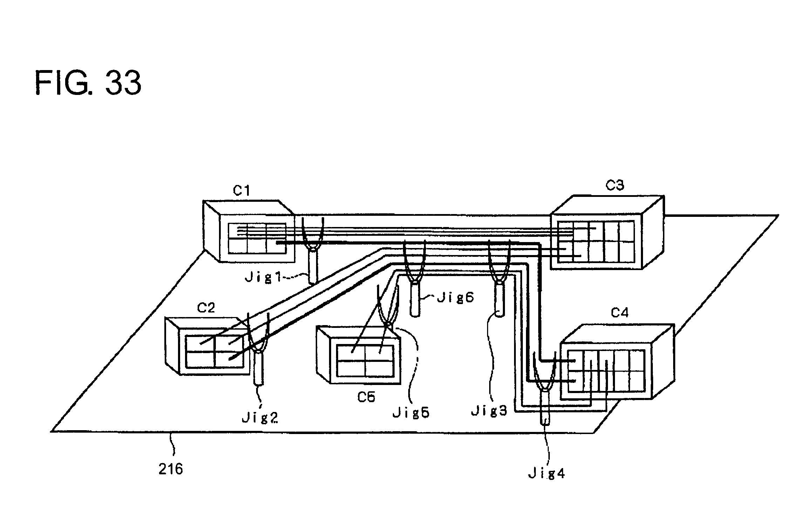

A state of a subassembly laid on a harness assembling table is shown in FIG. 33 and a corresponding wire laying procedure is shown in TABLE-4.

TABLE-4

| ORDER | CONTENTS OF OPERATION |
|---|---|
| 1 | Pass wires from connector C1 through a specified U-shaped jig |
| 2 | Pass wires from connector C2 through a specified U-shaped jig |
| 3 | Lay wires connected with connector C3 and free terminals along specified paths |
| 4 | Pass wires from connector C3 through a specified U-shaped jig |
| 5 | Lay wires connected with free terminals to the vicinity of connector C4 |
| 6 | Pass wires from connector C5 through a specified U-shaped jig |
| 7 | Lay wires connected with connector C4 along a specified path |
| 8 | Pass wires from connector C4 through a specified U-shaped jig |
| 9 | Insert free terminal connected with connector C2 into cavity ⑤ of connector C4 |
| 10 | Insert free terminal connected with connector C1 into cavity ① of connector C4 |

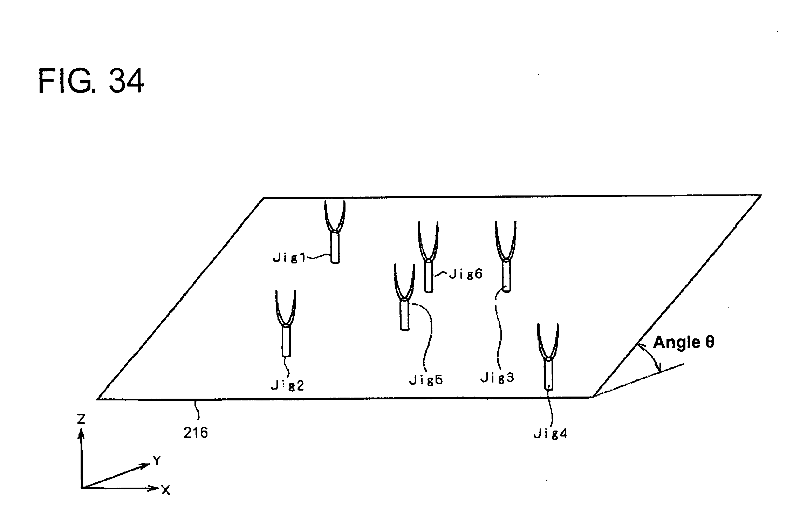

The harness assembling table 216 is used for assembling the wiring harness while being inclined only by an angle of θ with respect to a horizontal plane defined by X-axis and Y-axis as shown in FIG. 34. U-shaped jigs Jig1 to Jig6 for holding the wires and connectors C1 to C5 are mounted on the harness assembling table 216. The design of the harness assembling table 216 in particular with respect to the arrangement of the single subassemblies Sub1, Sub2, Sub3, ... and/or of the jigs Jig1, Jig2, Jig3, ... may be designed according to a method as described with reference to FIGS. 24 to 50.

As shown in TABLE-4, the wires connected with the connector C1 of the subassembly shown in FIG. 28 are passed through the U-shaped jig Jig1 on the harness assembling table 216. Similarly, the wires connected with the connector C2 of the subassembly are passed through the U-shaped jig Jig2.

Subsequently, the wires connected with the connector C3 and the wires having free terminals are laid along specified paths, and the wires connected with the connector C3 are passed through the U-shaped jig Jig3.

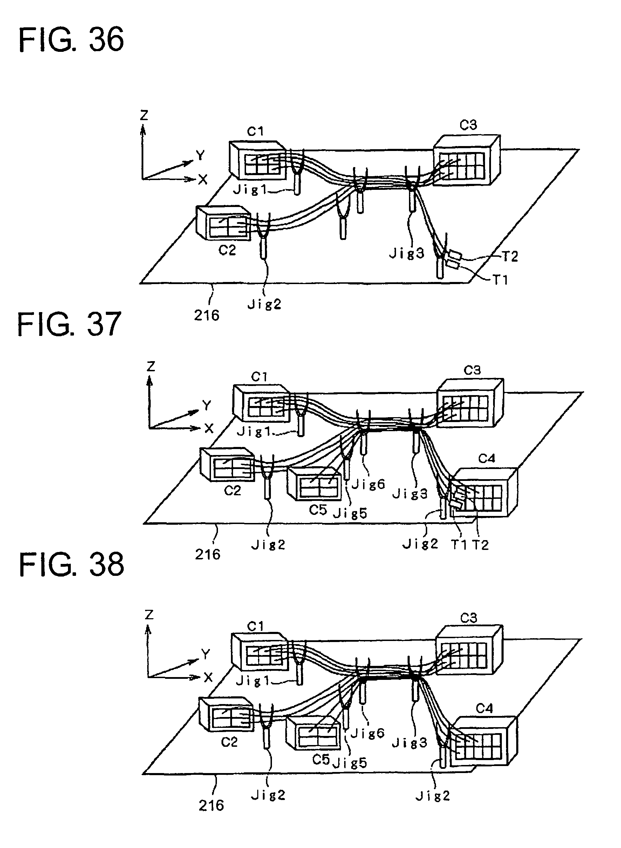

Then, as shown in FIG. 36, the wires connected with the free terminals T1, T2 are laid to the vicinity of the connector C4.

Subsequently, the wires connected with the connector C5 are passed through the specified U-shaped jig Jig5.

The wires connected with the connector C4 are laid along a specified path and are passed through the specified jig Jig4.

Thereafter, as shown in FIG. 37, the free terminal T2 extending from the connector C2 is inserted into a specified cavity of the connector C4, and the free terminal T1 extending from the connector C1 is inserted into a specified other cavity of the connector C4, with the result that a state of FIG. 38 is attained.

The on-the-board assembling procedure information is generated assuming the procedure of these manual operations. The on-the-board assembling procedure information at this time (see FIG. 37) is as shown in TABLE-5 below.

TABLE-5

| SERIAL NO. | SUBASS NO. | OPERATION | PART CODE | CIRCUIT NO. | TERMINAL SYMBOL | ... |
|---|---|---|---|---|---|---|
| 001 | 001 | wire laying | C1 | | | |
| 002 | 001 | wire laying | C2 | | | |
| 003 | 001 | wire laying | C3 | | | |
| 004 | 002 | wire laying | C5 | | | |
| 005 | 002 | wire laying | C4 | | | |
| 006 | 001 | terminal insertion | C4 | a14 | A | |
| 007 | 001 | terminal insertion | C4 | a17 | A | |

TABLE-5 defines that the wires are laid for the connectors C1 to C3 of the subassembly 001 in the rows of the serial Nos. of 001 to 003; the wires are laid for the connectors C5, C4 of the subassembly 002 in the rows of the serial Nos. 004, 005; and the A-terminals of the specified circuits are inserted into the connector C4 of the subassembly 001 in the rows of the serial Nos. of 006 and 007. This on-the-board assembling procedure information is formed into the database as indicated by DB1B in FIG. 37.

After the assembling procedure information sampling step (Step S224) shown in FIG. 24 is completed in this way, the full-size design data and the assembling procedure information are received by a 3D simulation system of an other computer system via a specified network by a method such as an FTP. Thereafter, the 3D shape data of the subassemblies and that of the wiring harness on the harness assembling table (including the assembling board and the U-shaped jigs) in the virtual 3D space are successively generated in this computer system, and are displayed on a display (Step S226).

The operation in this Step is described, starting with the 3D shape data of the subassemblies, which may be preferably generated by a method or system as described with reference to FIGS. 1 to 13.

First, the part code (C3, 2) is obtained based on the serial No. (001) of the subassembly assembling procedure information DB1A shown in FIG. 26 and TABLE-3.

Subsequently, the 3D shape information of the connector C3 is retrieved from the 3D shape information DB2 of the respective parts shown in FIG. 26, and this 3D shape is displayed on a screen of the display (not shown) of the computer system. A display position of the connector C3 on the screen of the display is arbitrarily set using a pointing device (not shown) such as a mouse, and the connector C3 is displayed such that a circuit insertion surface where the cavities of the connector C3 are formed is faced forward.

Then, the circuit No. (a15, 1) and the terminal symbol (B) are obtained based on the serial No. (002) of the subassembly assembling procedure information DB1A (see FIG. 26 and TABLE-3). An attribute information of the circuit a15 is retrieved and obtained from the circuit information of the full-size design information DB3 shown in FIG. 26. In this way, the data on the wires, the terminals, the connectors into which the terminals are to be inserted, and the cavity Nos. can be obtained.

After various pieces of information are thus obtained, the 3D shape data of the circuit a15 is generated in the virtual space and displayed on the display 11 (see FIGS. 1 and 30).

At this time, a full-size 3D wire having a pipe-like shape is generated and displayed using the information on the diameter, color and length of the wire.

An actual shape data or a simplified shape data (e.g. rectangular parallelepiped) is registered beforehand as the 3D shape of the terminals based on the terminal code information of both A-terminal and B-terminal of the circuit a15 (also other circuits), and this registered data is connected with the opposite ends of the wire data (see FIG. 30).

Then, the terminal at the B-end of the circuit a15 to be inserted is brought to the vicinity of the shape data of the connector C3. This state is displayed on the screen of the display 11 as shown in FIG. 30.

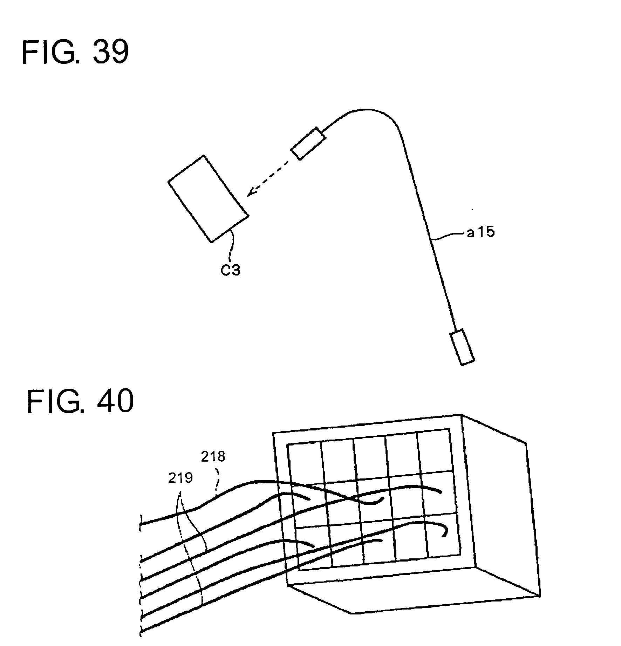

Next, a trace of movement from the center of the leading end of the B-terminal of the circuit a15 as a reference end toward a center point of the corresponding cavity of the connector C3 is set (see FIG. 39). In other words, a general trace of operation preferably by human hands or other operating means is measured and inputted using a pointing device such as a mouse 13, whereby a state approximate to an actual operation can be reproduced by moving images. Although a speed at which the trace of operation is followed is set at a value based on an actually measured value, there is also a function of arbitrarily changing or inputting such a speed.

In the serial Nos. of 003 and succeeding numbers of the subassembly assembling procedure information DB1, the respective pieces of the procedure information are obtained and the aforementioned method is repeated, whereby a virtual assembling operation of the subassembly shown in FIG. 28 is proceeded by the calculation of the computer system (see FIG. 31), preferably as described with reference to FIGS. 1 to 13.

The later-inserted circuits are frequently inserted while avoiding the circuits inserted earlier. Such a state is represented by selecting and setting such a trace of insertion of the terminal of a circuit 18 to be inserted later as not to interfere circuits 19 inserted earlier as shown in FIG. 40. An example shown in FIG. 40 is a simulation of the circuit insertion into the multi-contact connector. The position of the cavity into which the later-inserted circuit 18 is to be inserted is located at the center of the connector, and the circuits 19 are already inserted into the cavities around the former cavity. Thus, a supplementary operation of avoiding the circuits 19 inserted earlier is invariably accompanied. Therefore, when such moving images are reproduced on the screen of the display, a poor operability can be visually displayed. Similarly, the insertion of the circuits a11 to a15 into the corresponding cavities of the connectors C1, C2 is virtually displayed.

Upon the completion of all the procedures, the virtual assembling of the corresponding subassembly (001) is completed and an image is displayed on the screen of the display as shown in FIG. 32.

By representing the subassembly producing operation by the 3D virtual data by the above method without using an actual product, people in charge can objectively inspect whether or not the subassembly producing procedure decided by the research engineer is optimal and improve if necessary while looking at the display screen displaying the virtual operation. As a result, an optimal producing procedure can be decided or designed sooner.

Further, by using the traces of operation and the actually measured values as the operation speed, the operation steps can be understood as if an actual operation were performed and the remedy of the operation can be investigated for an improved operation efficiency.

Since the work table 213 shown in FIG. 29 is installed and the cases 211, 212 for accommodating the wires (a11, a12, ...) and the connectors (C1, C2, ...; b11, b12, ...) as components of the subassemblies are provided in the actual subassembly producing operation by human hands, operability including the layout of the work table 213 and the cases 2, 212 is studied. In other words, the arrangement of the accommodating cases 211, 212 is so investigated that the wires can be drawn out of the cases 211 and the connectors can be taken out of the cases 212 within a shorter time. This simulation can be so carried out as to approximate to an actual operation by generating the 3D shape data of the work table 213, the accommodating cases 211, 212 and the like and linking them with the simulation data of the subassembly producing procedure.

Next, a preferred method for virtually arranging and assembling the subassemblies, the independent parts and the like on the harness assembling table 216 in the computer system using the 3D shape information DB2, the full-size design information DB3 (see FIG. 27) and the on-the-board assembling procedure information DB1B which are stored as databases in the storage device of the compute system is described.

As shown in FIG. 34, the harness assembling table 216 is imaged and displayed on the display while being inclined by an angle θ with respect to the horizontal plane defined by X-axis and Y-axis preferably by an empirical rule conforming to an efficient actual operation.

The subassembly No. (001), the type of the operation (wire laying) and the part code (C1) are obtained based on the serial No. (001) of the on-the-board assembling procedure information DB1 B shown in FIG. 27 and TABLE-5. This subassembly No. (001) means the subassembly shown in FIG. 28.

The composition information of the subassembly No. (001) is obtained from the subassembly information of the full-size design information DB3.

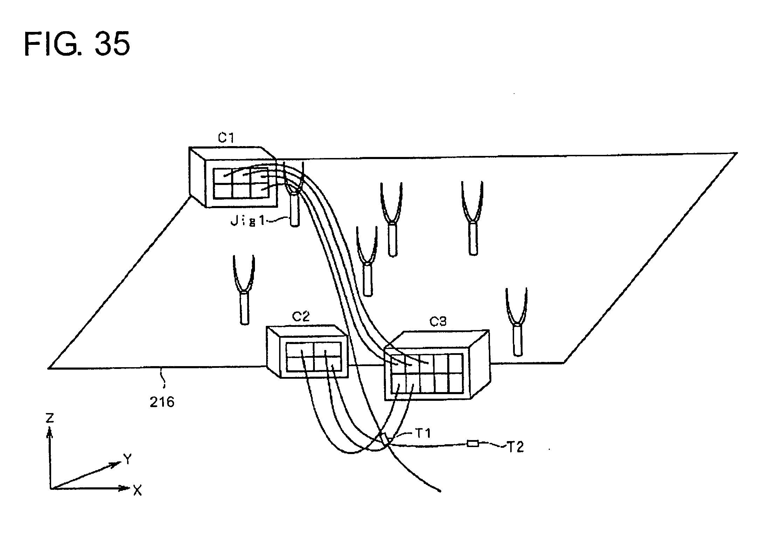

Subsequently, the node information of the connector C1 is obtained, and the connector C1 of the subassembly No. (001) is imaged in a 3D shape while being positioned at the specified node coordinates. The construction of the subassembly No. (001) connected with the connector C1 is imaged as shown in FIG. 35. At this time, since the components other than the connector C1 actually hang down due to gravity, they are imaged in consideration of such an influence. Again, for this purpose, preferably a method based on the one described with reference to FIGS: 1 to 13 may be used.

Subsequently, the subassembly No. (001), the type of the operation (wire laying) and the part code (C2) are obtained based on the serial No. (002) of the on-the-board assembling procedure information DB1B (see TABLE-5). The connector C2 is positioned at specified node coordinates, and all the circuits a11 to a17 (see FIG. 28) extending from the connectors C1 and C2 are retrieved from the composition information of the subassembly No. (001); the wire layout paths of the respective circuits a11 to a17 are obtained from the span information of the full-size design information DB3; and the passing node coordinates of the respective circuits a11 to a17 are obtained.

In the case that there is any circuit connecting the two positioned connectors C1, C2, this circuit is so imaged as to precisely follow the wire layout path while the other circuits are represented in an arbitrary manner.

Subsequently, the subassembly No. (001), the type of the operation (wire laying) and the part code (C3) are obtained based on the serial No. (002) in TABLE-5. After the connector C3 is positioned at specified node coordinates, the circuits connecting the connectors C1 and C3 and connecting the connectors C2 and C3, and the wire layout paths thereof are obtained, and the connecting circuits are displayed on the display. For the circuits connected with the free terminals T1, T2, the connector C4 (see FIGS. 37 and 38) into which the free terminals T1, T2 are to be finally inserted, the node coordinates thereof, and the wire layout paths to the connector C4 are obtained from the circuit information of the full-size design information DB3, and a display as shown in FIG. 36 is made on the display.

Subsequently, the subassembly No. (002), the type of the operation (wire laying) and the part code (C5) are obtained based on the serial No. (004) of the on-the-board assembling procedure information DB1B (see TABLE-5). Further, the subassembly No. (002), the type of the operation (wire laying) and the part code (C4) are obtained based on the serial No. (005) of the on-the-board assembling procedure information DB1B (see TABLE-5). Then, the other subassembly No. (002) is imaged by a procedure similar to the above. A state at this time is displayed on the display as shown in FIG. 37.

Thereafter, the subassembly No. (001), the type of the operation (terminal insertion), the part code (C4), the circuit No. (a17) and the terminal symbol (A) are obtained based on the serial No. (006) of the on-the-board assembling procedure information DB1B (see TABLE-5). Likewise, the subassembly No. (001), the type of the operation (terminal insertion), the part code (C4), the circuit No. (a14) and the terminal symbol (A) are obtained based on the serial No. (007) of the on-the-board assembling procedure information DB1B (see TABLE-5).

Then, the numbers of the cavities into which the A-terminals of the respective circuits are to be at least partly inserted are retrieved based on the circuit Nos. of the full-size design information DB1B, the procedure of inserting the terminals into the connector C4 is displayed by moving images and a final display will be as shown in FIG. 38.

A state where the subassemblies, the independent parts and the like are arranged on the harness assembling table 216 by the above procedure is represented as 3D moving images. An operation of assembling a similar wiring harness on the harness assembling table is observed, data thereof preferably are collected for the traces of operation and the operation speed, and the speed of the actual operation and a behavior characteristic of the product shape approximate to an actual product are generated as the 3D shape data and simulated.

Here, a specific example of the simulation is described.

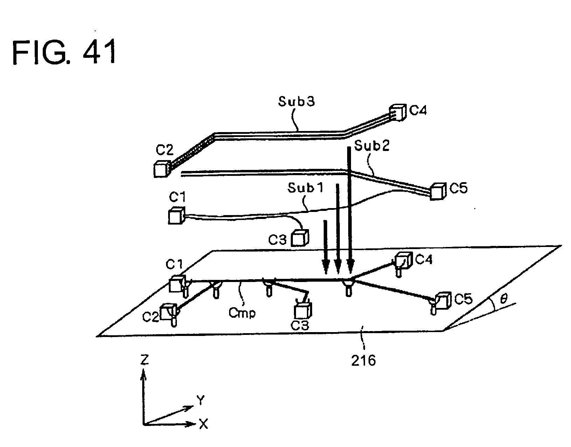

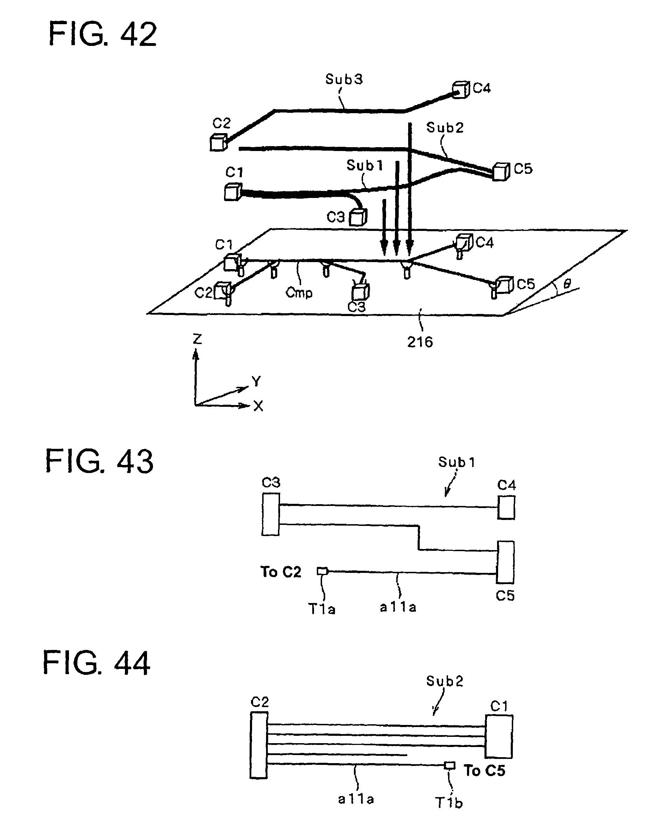

Based on the design information in which the wiring harness as a final product is divided into a plurality of subassemblies, the 3D virtual data of all the subassemblies are generated (e.g. by the method as described with reference to FIGS. 1 to 13), and all the 3D virtual data including the harness assembling table and the jigs generated based on the full-size design information are displayed (see FIGS. 41 and 42).

In the display at this time, the wires are represented one by one as shown in FIG. 41 and the wires, the connectors and other components of the same subassembly are or may be displayed in the same color, the different subassemblies having different display colors (individual display mode). Instead of representing the wires one by one, aggregates of the wires are or may be collectively displayed as shown in FIG. 42 (collective display mode). Preferably, whether the wires are represented one by one as shown in FIG. 41 or collectively represented as aggregates as shown in FIG. 42 can be easily selected using a specified selection menu.

At this time, if the assembling procedure is so designed that the subassemblies are assembled in the order of Sub1, Sub2, Sub3 to form a wiring harness as a final product Cmp, the virtual data of respective subassemblies Sub1, Sub2, Sub3 are displayed in a three-dimensional manner while arbitrarily changing only the coordinate value of the vertical axis (Z-axis) of the virtual 3D space as shown in FIGS. 41 and 42. Further, the display order of the respective subassemblies Sub1, Sub2, Sub3 can be freely changed by dragging the images thereof using a pointing device such as a mouse 13. Further, the shapes of the respective subassemblies Sub1, Sub2, Sub3 and the detailed shapes of the parts forming these subassemblies can be realistically and visually seen in terms of size, color and shape from every 3D angle.

As a result, the following items can be confirmed or predicted preferably automatically by the visual investigating method.

(1) Sizes of the respective subassemblies Sub1, Sub2, Sub3

Normally, there is a limit in the size of the subassemblies efficiently handled by one worker. For example, the number of connectors and the number of wires are desirably less than 5 and less than 20, respectively. If the subassemblies Sub1, Sub2, Sub3 have excessively large sizes, it results in a reduced production efficiency. However, since the forms of all the subassemblies Sub1, Sub2, Sub3 can be computed and/or visually seen in detail, it can be (automatically) immediately detected if the subassemblies are improper.

(2) Easiness to lay the respective subassemblies Sub1, Sub2, Sub3

This property is an index used to judge an easiness in laying the respective subassemblies Sub1, Sub2, Sub3 on the harness assembling table 216. The more easily the subassemblies are laid, the better the production efficient (performance) can be improved.

Usually, it is desirable to linearly lay the wires from left side to right side, and it is undesirable to have such a path that, for example, returns in an opposite direction, has an excessively large number of branched points, and/or has branches extending in many directions. Such points can be immediately (automatically) judged by simulating and/or looking at the visual shapes of the respective subassemblies Sub1, Sub2, Sub3.

If the shapes of the respective subassemblies Sub1, Sub2, Sub3 obtained by dividing the wiring harness into a plurality of sections are placed one over another, overlapping paths invariably exist. The more the overlapping paths, the more overlapping operations have to be done by the worker. This leads to a reduced production efficiency. Thus, it is effective to investigate the divided forms such that a total sum of the overlapping paths is minimized. Since the shape data of the respective subassemblies Sub1, Sub2, Sub3 can be freely moved and placed one over another in this embodiment, this investigation can be efficiently made.

(3) First insertion rate

Theoretically, the smaller subassemblies the wiring harness is divided into, the more free terminals (T1, T2 in FIG. 28) exist. These free terminals need to be inserted into the connectors on the harness assembling table 216 later on (see T1, T2 in FIG. 37). In other words, when the subassemblies Sub1, Sub2, Sub3 are laid on the harness assembling table 216, the free terminals are caught and/or twisted by the other circuits, the terminals or the U-shaped jigs (see Jig1 to Jig6 in FIG. 37) if there are many free terminals. Thus, the worker is obliged to correct them, which leads to a fairly poor operability. It is not good in view of quality control since it is a factor to deform the terminals.

Since the number of the free terminals can be immediately visually confirmed for each of the subassemblies Sub1, Sub2, Sub3, the subassemblies and the connectors having many free terminals can be pointed out and investigation can be concentrated on improvements for them.

(4) Operation procedure

As shown in FIGS. 41 and 42, the respective subassemblies Sub1, Sub2, Sub3 are placed one over another at a position distanced from the position of the 3D shape of the final product Cmp in the assembling procedure decided by the process designing. In order to minimize unnecessary operations by the worker, a procedure of successively laying the respective subassemblies Sub1, Sub2, Sub3 in one direction, for example, from left side to right side (or from upper side to lower side) is optimal.

For example, a subassembly Sub1 shown in FIG. 43 is assumed. This subassembly Sub1 has connectors C3 to C5 and a free terminal T1a to be connected with an other connector C2.

Usually, after one end of a circuit a11a is connected with the connector C5, such a free terminal T1a is mounted on the other end of the circuit a11a. However, the circuit connected with the free terminal T1a extends from the connector C5 in a direction (from right side to left side) opposite from the operating direction from left side to right side.

In such a case, the operating direction from left side to right side is realized in the subassembly Sub2 by connecting the circuit a11a with the connector C2 of the subassembly Sub1 to change the internal constructions of the subassemblies Sub1, Sub2 as shown in FIG. 44. Alternatively, the connector C5 may be included in the subassembly Sub2 instead of being included in the subassembly Sub1. The constructions of the subassemblies can be easily restudied in this way.

By changing the content of the composition information of the subassembly to a specified content in this way, such a change is immediately converted into the 3D virtual information and the result thereof is or can be displayed on the screen 11. Thus, the subassemblies put in an improper order are immediately pointed out or (automatically) detected to study improvements.

(5) Feedback of a subassembly division change result information to the full-size design information

The production designing system (IHS) preferably carries out a unitary administration and a history administration of the generated (inputted) full-size design information, and is linked with various other production administering systems for information administrations. Accordingly, if the division of the wiring harness into the subassemblies is changed, it is necessary to transmit the resulting information to the IHS, to generate and store a new information file in which a history code information of the full-size design information is renewed.

In this case, harness designing is proceeded considering a flow which returns from Step S226 to Step S222 of the flow chart of FIG. 24 as shown in FIG. 45. Specifically, the subassembly division change result information (inputted by an operator using a keyboard and/or a mouse) is obtained in Step S227, and this change result information is data-converted into a receiving format of the full-size design information in Step S228. Thereafter, the resulting data is or can be transferred via a network (e.g. a LAN) for a feedback to the full-size design information of the IHS.

By adopting the above method, the operator can easily change the full-size design information while looking at the screen and adjustments and changes such as an automatic extension of the circuit having no sufficient length can be automatically made by the computer system, whereby trials and errors can be virtually made for the design. Thus, a degree of perfection of the trial product designing level (?) can be improved for the subassembly assembling procedures and the harness assembling procedure on the board at an early stage even without producing actual trial products. Therefore, an operation of designing the wiring harness can be made easier by reducing the number of productions of the actual trial products and the number of operation steps.

Although the virtual data of the respective subassemblies Sub1, Sub2, Sub3 are displayed while being arbitrarily moved along the vertical axis (Z-axis) of the virtual 3D space as shown in FIGS. 41 and 42 in this embodiment, they may be displayed while being arbitrarily moved, for example, in a normal direction to the assembling table 216.

Accordingly, the wires and the other parts forming the wiring harness as a final product are divided into a plurality of subassemblies, the full-size design data including the subassembly information defining 3D shapes of the respective subassemblies and of the components thereof is generated, and the generated full-size design data is inputted in the computer system in the full-size design data generating step; and the 3D shapes of the plurality of subassemblies are combined and displayed on the specified display in such a state arranged on the harness assembling table in the 3D shape displaying step. Thus, it is not necessary to design and investigate the wiring harness by producing actual trial products of the subassemblies. Therefore, a period necessary to develop a novel wiring harness can be considerably shortened, and a degree of perfection of the design plan can be improved at an earlier stage than before.

Further, since the 3D shapes of the respective subassemblies are made arbitrarily movable in the specified one direction on the harness assembling table, the subassembly assembling order can be so displayed as to be understandable at a glance by arbitrarily moving the display position of the subassembly in one direction in accordance with the subassembly assembling order.

Moreover, since a plurality of wires bundled in each subassembly are individually displayed and all the wires and other parts of the same subassembly are displayed in the same display color in the 3D shape displaying step, the different subassemblies can be easily distinguishably displayed while specifically displaying the wires one by one.

Furthermore, since a plurality of wires bundled in each subassembly are collectively displayed as an aggregate of the wires in the 3D shape displaying step, the different subassemblies can be easily distinguishably displayed.

Still further, since the individual display mode and the collective display mode are made selective using the specified selection menu, two modes which enable the easy distinguishment of the subassemblies can be freely changed according to the preference of the operator.

Moreover, the on-the-board assembling procedure information defining the procedure of assembling the plurality of subassemblies on the harness assembling table is inputted between the full-size design data generating step and the 3D shape displaying step, and the operation of assembling the plurality of subassemblies is represented and displayed by moving images on the image of the harness assembling table having a virtual 3D shape in accordance with the procedure defined by the on-the-board assembling information in the 3D shape displaying step. Thus, the operation process on the harness assembling table can be understood as if it were actually performed, and such a virtual process can be used to study improvements in the operation for a better operation efficiency. Therefore, a plurality of people in charge can objectively inspect whether or not the design plan for the wiring harness assembling procedure is optimal and improve if necessary. As a result, an optimal producing procedure can be decided sooner.

Moreover, the subassembly assembling procedure information defining procedures of assembling the respective wires and the other parts forming the respective subassemblies is inputted between the full-size design data generating step and the 3D shape displaying step, and the operation of assembling the respective wires and the other parts is represented and displayed by moving images in accordance with the procedures defined by the subassembly assembling information in the 3D shape displaying step. Thus, the process of forming the subassemblies can be understood as if they were actually formed, and such a virtual process can be used to study improvements in the operation for a better operation efficiency. Therefore, a plurality of people in charge can objectively inspect whether or not the design plan for the subassembly assembling procedure is optimal and improve if necessary. As a result, an optimal producing procedure can be decided sooner. The wiring harness designing system constructed as described with reference to FIG. 1 operates on a software program stored in the storage device 15 preferably beforehand.

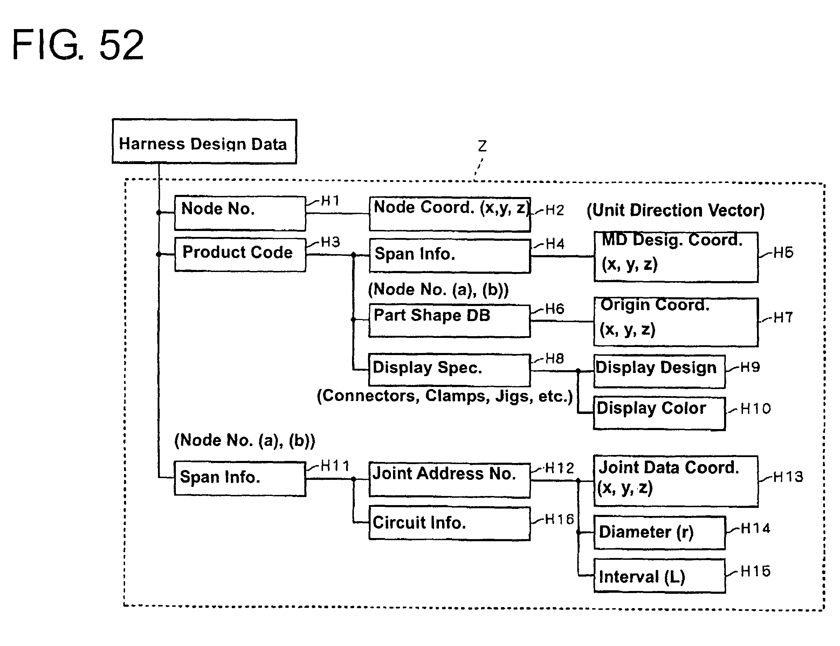

By using the wiring harness designing system, a harness design data A (see, e.g. FIG. 52) which is a 3D design data of a wiring harness is displayed in a virtual 3D space displayed on the display device 11 to enable or allow the virtual assembling of the wiring harness and the designing of the wiring harness and an assembling board therefor.

The harness design data A generated by using the wiring harness designing system and a board design data D (see, e.g. FIG. 52) which is a 3D design data of the assembling board are at least temporarily saved in the storage device 15. The board design data D also includes assisting jig data E1, E2, E3, ... (reference numeral "E" is given when these data are collectively named) (see FIG. 52) corresponding to assisting jigs provided on the board for holding the wiring harness on or above the assembling board. These assisting jig data E may be preferably computed by a method or system as described with reference to FIGS. 16 to 23.

Here, a method for generating the harness design data A and the contents thereof are briefly described. The harness design data A is an electronic data of a representation in 3D coordinate systems corresponding to a two-dimensional (2D) electronic data used when the wiring harness is produced on a 2D board.

The harness design data A is generated as follows. First, after dimensions such as lengths between the branched portions of the wiring harness and the mount positions of connectors are designed based on the above 2D electronic data in the wiring harness designing system, a 2D drawing (plan) of the wiring harness is generated in the form of a 2D electronic data using a design assisting software program such as a CAD, considering the actual production of the wiring harness on the assembling board.

Next, in the computer main body 16, a coordinate axis (z-axis) normal to a coordinate plane of the inputted 2D electronic data is added to the 2D electronic data, and the resulting data is stored as the harness design data A in the storage device 15. At least part of the 2D electronic data may be manually inputted to the computer main body 16 using the input devices 14. Alternatively or additionally, at least part of the 3D electronic data generated by an other CAD system may be transferred to the computer main body 16 via communication or a specified storage medium such as a magnetic disk, CD-ROM, floppy disk, DVD, magneto-optical disk, or the like.

Here, pieces of information to be inputted as the 2D electronic data include a 2D coordinate information of nodes n01 to n20 for specifying the shape of the respective wires forming the wiring harness on the assembling board as shown in FIG. 3, a wire link information on links of the respective nodes n01 and n20, and an information on diameters r01 to r14 of the wires linking the nodes n01 to n20.

Further, in order to enable realistic deformation of the respective wires of the wiring harness in a step of deforming the harness design data A to be described later, each wire 21 having a center axis 21 a as shown in FIG. 4 is divided along its longitudinal direction into a plurality of short wire segments or elements (joints) 22 having a length "a" as shown in FIG. 5, and the length "a" of the respective wire segments 22 is also inputted, considering that the respective wires 21 are deformed with the wire segment 22 as a unit. The length "a" is desirably between about 5 mm to about 15mm, preferably about 10 mm. The respective wire segments may be equal or different. The wires 21 having a length L are finely divided into a plurality of short wire segments 22.

Further, a weight data of a plurality of wires forming the wiring harness is also inputted (as described later). This weight data is a parameter representing a degree of difficulty to deform the respective wires in the harness design data deforming step to be described later. The larger the value of the weight data, the more difficult to move the wire when deforming or bending it. Further, for a deformation to curve the wire, as the value of the weight data increases, the wire is more likely to be curved in its entirety instead of being deformed only at a point of deformation. Such a weight data may be empirically obtained or obtained by means of a numerical simulation (e.g. based on a mathematical relaxation method) according to the diameters of the wires, the wire material, the coating material, the wire structure, and other factors.

3D shape data of accessories (connectors 18 (see FIG. 3), clamps, and covering parts (such as protectors, vinyl tubes and corrugate tubes), etc.) to be mounted on the wiring harness are generated as accessory data beforehand, and are assigned to corresponding sections of a wire path after a main part of the harness design data A forming the wire path of the wiring harness is formed. In this way, the harness design data A is completed.

As such a harness design data A is generated, the assembling board used to assembling the wiring harness corresponding to the harness design data A is also designed using the wiring harness designing system.

Here, in general shape representation by the harness design data A, the individual wires 21 or the respective wire segments 22 of an aggregate of a plurality of wires (wire bundle) are represented, for example, using cylindrical shapes as shown in FIGS. 4 and 5 or other shapes such as those having quadratic, rectangular, elliptical etc. cross-section..

Specifically, as shown in FIG. 6, a vector S extending in a direction passing the center of a cylinder and having a length is defined for a data of the wire segment 22 having a length "a". The vector S can specify a single absolute position and a twisting degree by specifying a direction information and a length information in a 3D space defined by x-axis, y-axis and z-axis, and an angle of rotation information from a reference point by a twisted angle (angle of rotation centered on the axis of the wire) between this wire segment and the other wire segment adjacent thereto.

The data of the individual wire segments 22 are so displayed as to be continuously connected with each other (continuous connection). Here, a method of continuos connection is, as shown in FIG. 7, such that the coordinates of end points of center axes 23a, 23b are caused to coincide in the case that wire segments 22a, 22b are to be connected.

The thus generated harness design data A is three-dimensionally deformable in the virtual 3D space using the input device 14 such as the mouse 13. By using this characteristic, an operation of laying (or mounting) the wiring harness in a vehicle body can be virtually performed by three-dimensionally deforming the harness design data A in the virtual 3D space.

Accordingly, in this wiring harness designing system, the following processing may be preferably performed to enable the representation of a flexible characteristic as intended by the operator.

The recognition of the respective wire segments 22 in the computer main body 16 is made by vector variables, i.e. vectors S (x, y, z, θ) in the 3D space as described above. A variable θ denotes a twisted angle between the two continuous wire segments 22a, 22b as shown in FIG. 8. Although vectors are shown in x,y plane by omitting z-axis in FIG. 8 in order to facilitate the description, the same applies to the 3D coordinate systems additionally having z-axis. For example, the vectors S of five wire segments 22 have the following values in FIG. 8.

$$\text{vector S1} = (X1, Y1, Z, \theta)$$

$$\text{vector S2} = (X2, Y2, Z, \theta)$$

$$\text{vector S3} = (X3, Y2, Z, \theta)$$

$$\text{vector S4} = (X4, Y1, Z, \theta)$$

$$\text{vector S5} = (X5, 0, Z, \theta)$$

After setting the vectors S as above, an end point of the wire segment 22 is moved within the 3D space by a special operation of the mouse 13 called "drag" with the end point of the wire segment 22 designated by means of the input device 14 such as the mouse 13.

Even in such a case, the continuous wire segments 22a, 22b are held connected with each other at a connection point 24 thereof, for example, as shown in FIG. 7. Thus, if the position of the end point of the wire segment 22 is moved, it results in the representation of a curve of the wiring harness due to the continuous connection. In other words, if a tension is exerted on one of the continuous wire segments 22, the other wire segment 22 is dragged. A movement vector of the other wire segment at this time is set by a specified operational equation based on an empirical rule so as to depend on a change vector of the connection point with the one wire segment. By such a processing, the wiring harness can be deformed without losing an information on the continuity of all the wires.

However, in the case that the position of point (X5, 0) in FIG. 8 is, for example, moved by means of the input device 14 such as the mouse 13, an influence of such a movement on the other connection points differ in degree. In other words, the connection points closer to the point moved by the input device 14 such as the mouse 13 are moved more than those more distant therefrom. Here, it is assumed that values of the vectors S after the change of the positions of the respective connection points are as follows.

$$\text{vector S1} = (X1, Y1, Z, \theta1)$$

$$\text{vector S2} = (X2, Y2, Z, \theta2)$$

$$\text{vector S3} = (X3, Y2, Z, \theta3)$$

$$\text{vector S4} = (X4, Y1, Z, \theta4)$$

## vector S5 = (X5, 0, Z, θ5)

where θ1< θ2<θ3<θ4<θ5. In this way, the curved shape of the wiring harness can be represented by both the absolute coordinates and the twisted angles, and flexible representation such as a deflection can be freely made. It should be noted that a relationship of θ1 to θ5 is set beforehand based on an empirical rule or the like and is defined beforehand as a software program implementing the operations of the wiring harness designing system.

For the mutual influences of the different wires in the wiring harness, the weight parameters representing difficulties of the respective wires to deform are considered. Specifically, using a specified operational equation, the larger the value of the weight data of the wire, the smaller amount of movement is made during the deformation. Further, concerning the curve of the wire, as the value of the weight data of the wire increases, the wire is more likely to be moderately curved in its entirety instead of being deformed only at a point of deformation.

The thus constructed harness design data has, for example, a data configuration Z as shown in FIG. 52. A data item H1 in this data configuration Z includes an information on the numbers of the respective nodes provided at specified intervals along the wire path of the harness design data; and a data item H2 below the data item H1 includes an information on the coordinates of the corresponding nodes in the virtual 3D space.

Data items H3 to H10 include pieces of information on the accessory data of the accessories to be attached to the harness design data. The data item H3 includes part codes for specifying the accessories; the data item H4 includes a span or segment or element information of the accessory data; the data item H6 includes an information on the 3D shapes of the accessory data; the data item H7 includes an information on the coordinates of mounting origins as references for specifying the display positions of the accessory data in the virtual 3D space; and the data item H5 includes an information (information on unit vectors for specifying a mounting method) for specifying a display direction when the accessory data is displayed in the virtual 3D space. Data items H8 to H10 include pieces of information on how the accessory data is displayed (e.g. display specifications H8, display designs H9 and display colors H10).

Data items H11 to H15 include pieces of information on the respective pieces of span information corresponding to the wire path of the harness design data. The data item H11 includes an information for specifying the corresponding spans in the harness design data A (including an information on the corresponding node numbers); the data item H12 includes an information on the data addresses of the wire segments 22 (joints) of the respective spans; the data item H13 includes an information for specifying the display coordinates and display methods (directions) of the respective wire segments 22 in the virtual 3D space; the data item H14 includes an information on the diameters of the respective spans; and the data item H15 includes an information on the length (interval) "a" of the respective spans or wire segments 22 or on the length L of the wire 21. A data item H16 includes an information on the circuits formed by the respective spans. The harness design data A may comprise information on subsassemblies generated or computed preferably by means of a method or system as described with reference to FIGS. 24 to 51.

In the wiring harness designing system according to this embodiment, the harness design data A preferably configured as above is displayed in the virtual 3D space displayed on the display device 11 while being preferably superimposed on the board design data D by the control of the computer main body 16; if the harness design data is partly changed by an input made by the designer via the input device 14, a section of the harness design data A corresponding to a content of the change is automatically corrected; and a correction result is automatically reflected on display contents of the display device 11 and stored contents of the storage device 15.

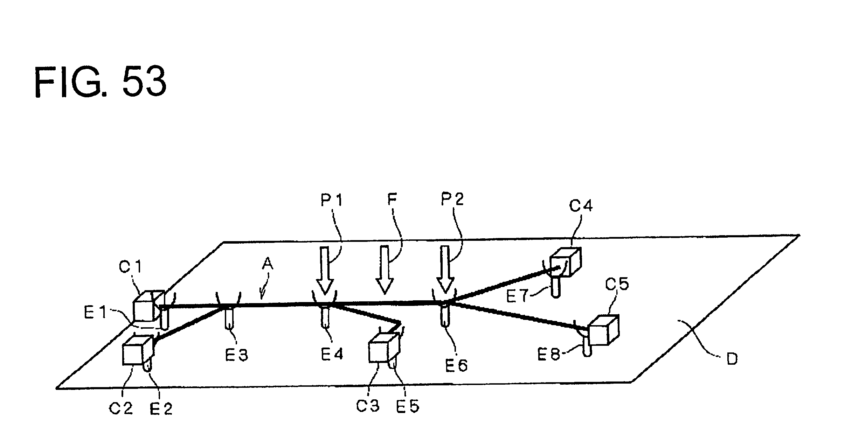

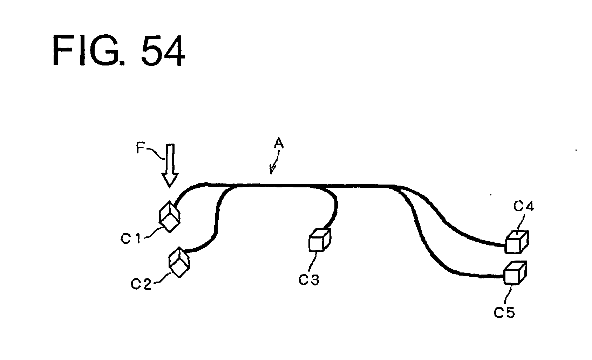

There are roughly two display modes of the harness design data A in the virtual 3D space: a display mode in which the data is developed in a plane as shown in FIG. 53 and a display mode in which the data is three-dimensionally deformed or displayed as shown in FIG. 54 so that e.g. in the configuration in which the wiring harness can be laid in a vehicle body.

The harness design data A of the display mode shown in FIG. 53 corresponds to a state where the wiring harness is laid on or above the assembling board (including the jigs), and is used to attain various improvements for better productivity and quality of the wiring harness and to verify, for example, whether or not the assembling operation holds. In FIG. 53, identified by C1 to C5 are the accessory data of the connectors (merely "C" when they are collectively named). Although the harness design data A is displayed while being superimposed on the board design data corresponding to the assembling board in the example shown in FIG. 53, the display of the board design data can be deleted depending on setting. The board design data D including possible assisting jig data E may be preferably generated by means of a method or system as described with reference to FIGS: 16 to 23. The harness design data A of the display mode shown in FIG. 54 is used for the verification of the mounted state of the wiring harness.

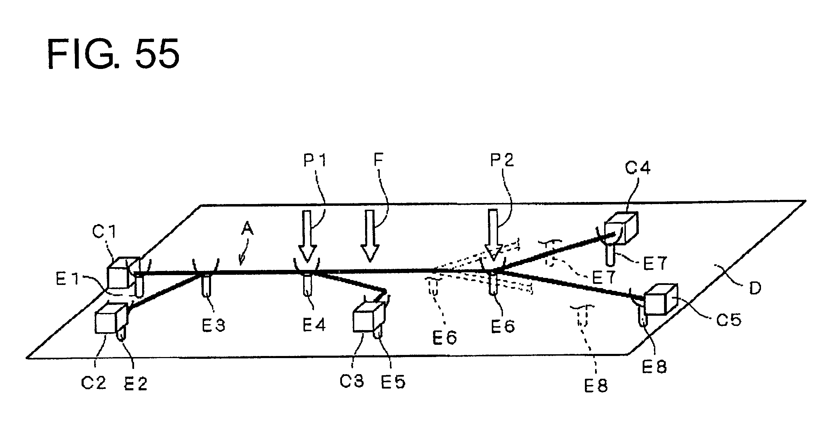

First, a case where a change is made to the harness design data A of the display mode shown in FIG. 53 is described. For example, if a length between points P1 and P2 in a main part corresponding to the wire path of the harness design data A shown in FIG. 53 is changed by an instruction inputted e.g. by a designer via the input device 14 (e.g. designation of a section whose length is to be changed, a designation of an amount of change, etc.), a correction is made by the corresponding processing of the computer main body 16 by moving the coordinates in the virtual 3D space of an end section of the harness design data A located more toward a corresponding end than the changed section when viewed from a reference portion F as a reference of the harness design data A according to a changed amount of the length without changing the 3D shape of this end section (parallel movements, rotational movements and combinations of these movements) as shown in FIG. 55. Here, which section of the harness design data A is set as the reference portion F can be arbitrarily changed by the instruction inputted via the input device 14. For example, the origin coordinate position in the middle of the harness design data A is set as the reference portion F.

As the end section of the harness design data is moved, the coordinates of the corresponding assisting jig data E6 to E8 included in the board design data D are moved according to the amount of the change in the length for corrections by the processing of the computer main body 16. These correction results preferably are immediately reflected on the display contents of the display device 11 and the stored contents of the storage device 15.

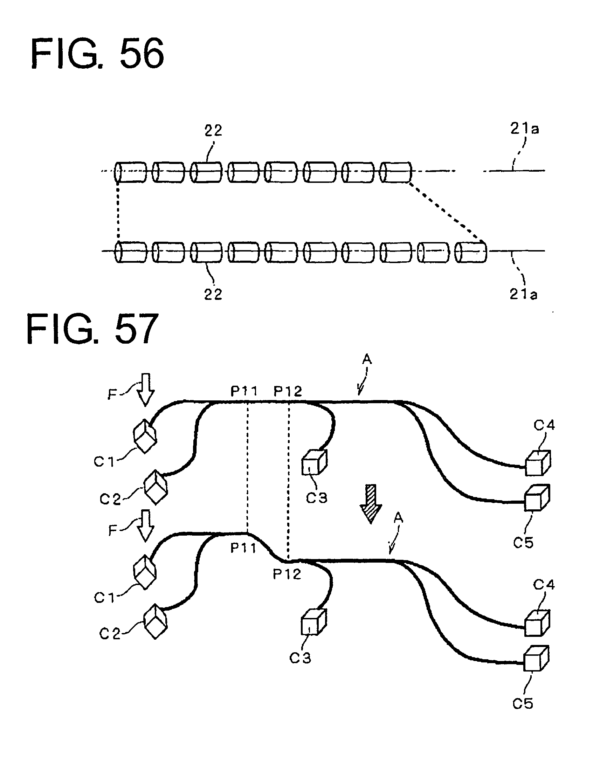

Such a change in the length of a section of the harness design data A is or can be made by inputting an instruction via the input device 14. There are a method for changing the length by increasing or decreasing the number of the wire segments 22 included in that section as shown in FIG. 56 and a method for changing the length by increasing or decreasing the length "a" of all or some of the wire segments 22 included in that section. Which method is adopted to change the length is selected by the designer.

Next, a case where a change is made to the harness design data A of the display mode shown in FIG. 54 is described. For example, in the case that the length and path shape (including a twisted degree) of a section between points P11 and P12 of the main part of the harness design data A are changed e.g. by an instruction inputted by the designer via the input device 14 as shown in FIG. 57, a correction preferably is automatically made by the corresponding processing of the computer main body 16 by moving the coordinates in the virtual 3D space of an end section of the harness design data A located more toward a corresponding end than the changed section when viewed from a reference portion F according to a changed amount of the length and a changed content of the path shape without changing the 3D shape of this end section. This correction result preferably is immediately reflected on the display contents of the display device 11 and the stored contents of the storage device 15.

Contents to be changed for the harness design data A include changes in the accessory data. For example, since the types of the assisting jigs on the assembling board to be used may differ depending on the types of the connectors, the accessory data C of a plurality of types of usable connectors are stored in correspondence with at least one type of assisting jig data E applicable for the accessory data C. Accordingly, if the designer changes the type of the accessory data C of the connector, an information on the assisting jig data E applicable for the accessory data C after such a change is read from the storage device 15 and displayed in a list format on the display device 11. When the designer selects a desired assisting jig data E from this list, the old assisting jig data E having been used thus far is replaced by the selected assisting jig data E, and this correction result is reflected on the displayed contents of the display device 11 and the stored content of the storage device 15.

As a modification, when the designer changes the accessory data of the connector, the computer main body 16 may automatically select the assisting jig data E optimal for the accessory data C after such a change and replace the old assisting jig data E thereby.

In the storage device 15 are stored a plurality of harness design data A which have a common data configuration (e.g. data configuration Z shown in FIG. 52) mutually compatible with each other and are related to each other. A basic harness design data A (e.g. harness design data A of FIG. 53) developed in a plane, and a harness design data A (e.g. harness design data A of FIG. 54) generated by the basic harness design data A in the virtual 3D space as described above and corresponding to a layout in a vehicle body are, for example, set as a plurality of harness design data A related to each other. If necessary, at least one harness design data A having a transitional shape created while the planar or 2D shape of the basic harness design data A is transitioned to the 3D shape of the latter harness design data A may also be set.

If any one of the plurality of harness design data A is partly changed by an instruction e.g. inputted via the input device 14 as mentioned above, a section of this one harness design data A relating to a content of the change is automatically corrected, and the content of the change and a content of the automatic correction are automatically reflected on the other harness design data A related to this one harness design data A.

A specific example of such a correction is given here. In the case that the harness design data of FIG. 53 and that of FIG. 54 are related to each other, if the length between the points P1 and P2 is changed for the harness design data A of FIG. 53 as shown in FIG. 55 by an instruction inputted via the input device 14, the harness design data A of FIG. 53 is automatically corrected according to the content of such a change; the length of a section of the harness design data of FIG. 54 corresponding to the section between the points P1 and P2 is automatically corrected by the same amount of change as that of the harness design data A of FIG. 53; the coordinates of an end portion of the harness design data A located more toward a corresponding end than the changed section when viewed from the reference portion F are automatically corrected by being moved according to an amount of the change in the length without changing the 3D shape of this end section.

Another specific example is such that, in the case that the accessory data C of connectors, covering parts (protectors, etc.), clamps and the like attached to the harness design data A of FIG. 53 is changed (the type of the accessory is changed, the mount position is changed, the accessory is added or deleted, etc.) by an instruction inputted via the input device 14, the content of such a change is automatically reflected on the related harness design data A of FIG. 54.

As described above, according to this embodiment, when the designer partly changes the harness design data A e.g. via the input device 14 (e.g. the length or path shape of the section is changed), a correction is automatically made, for example, by moving the coordinates according to the content of such a change for the corresponding sections of the harness design data A and the board design data D which are related to the content of the change of the changed section, and the correction results are automatically immediately reflected on the display contents of the display device 11 and the stored contents of the storage device 15. Thus, it is not necessary for the designer to correct all the data related to the content of the change via the input device 14, and the forms of the harness design data and the like A after the change can be immediately confirmed. As a result, the wiring harness can be more efficiently designed.

Further, if any one of the plurality of harness design data A related to each other is partly changed by an instruction inputted via the input device 14, a section of this one harness design data A corresponding to the content of the change is automatically corrected, and the content of the change made in this one harness design data A is also automatically reflected on the other harness design data A related to this one harness design data A. Thus, the plurality of related harness design data A can be easily changed at once.

Further, since the plurality of related harness design data A have the common data configuration, if any one of the harness design data A is partly changed by the designer, corresponding sections of the other harness design data A can be easily automatically changed and data administration such as data renewal (including corrections) and deletion can also be easily performed.

Furthermore, since the main part of the harness design data A corresponding to the wire path is formed by connecting a plurality of wire segments 22 along the wire path, the length of a specific section of the main part or the wire path can be easily changed by increasing or decreasing the number of the joints in this specific section or increasing or decreasing the length of the joints in this specific section, and a deformation characteristic and the like of real wires can be realistically represented.

Accordingly, when the designer partly changes the harness design data via the input means, the section of the harness design data related to the content of the change is automatically corrected and the correction result is automatically reflected on the display contents of the display means and the stored contents of the storage means. Thus, it is not necessary for the designer to correct all the data related to the content of the change, and the form of the harness design data after the change can be immediately confirmed. As a result, the wiring harness can be more efficiently designed.

Further, when the harness design data is changed, the wiring harness designing system automatically corrects the section of the harness design data and the section of the board design data related to the content of the change.

Moreover, if the length or path shape of the section of the harness design data is changed, a correction is automatically made by moving the coordinates in the virtual 3D space of the end section of the harness design data located more toward the corresponding end than the changed section when viewed from the reference portion of the harness design data according to the amount of the change in the length of the changed section or the changed content of the path shape without changing the 3D shape of the end section.

Thus, if the length or path shape of the section of the harness design data is changed, a correction is automatically made by moving the coordinates in the virtual 3D space of the end section of the harness design data located more toward the corresponding end than the changed section when viewed from the reference portion of the harness design data and the coordinates of the assisting jig data included in the board design data and corresponding to the end section of the harness design data according to the amount of the change in the length of the changed section of the changed content or the path shape.

Further, if the accessory data included in the harness design data is changed, the assisting jig data included in the board design data and related to the accessory data is automatically corrected.

Still further, if any one of the plurality of related and stored harness design data is partly changed by the input made via the input means, the section of this changed harness design data related to the content of the change is automatically corrected, and the content of the change made in the changed harness design data is automatically reflected on the other harness design data related to the changed harness design data. Thus, the plurality of related harness design data can be easily changed at once.

Further, since the plurality of related harness design data have the common data configuration, if any one of the harness design data is partly changed by the designer, the corresponding sections of the other harness design data can be easily automatically changed and the data administration such as data renewal (including corrections) and deletion can also be easily performed.

Moreover, since the main part of the harness design data is formed by connecting a plurality of joints along the wire path, the length of a specific section of the main part or the wire path can be easily changed by increasing or decreasing the number of the joints in this specific section or increasing or decreasing the length of the joints in this specific section.

Reference is made to FIG. 1 and to the corresponding description for a block diagram of a wiring harness designing system to which a wiring harness designing method according to one preferred embodiment of the present invention is applied.

By using these hardware sources 11 to 16 in combination (the display devce 11, the input means 14 (including the keyboard 12 and the mouse 13), the storage 15 and the computer 16 including a CPU), the wiring harness designing method according to this embodiment can be realized. Such a wiring harness designing method is specified by the software program stored in the storage device 15 beforehand.

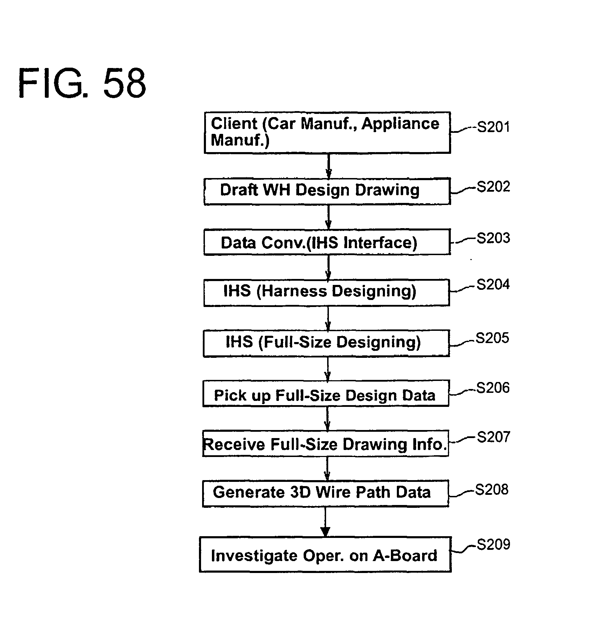

FIG. 58 is a flow chart showing a process of designing a wiring harness assembling board and a wiring harness by the wiring harness designing method according to this embodiment.

Similar to the process described with reference to FIG. 24, first, a client such as a car manufacturer or an appliance manufacturer written in Step S201 of FIG. 58 drafts a design drawing of a wiring harness divided according to the type of an object (automotive vehicle, electric appliance, etc.) and according to sections (Step S202). At a later stage, a wiring harness is designed for each type and for each section. This design drawing includes an information on the specifications of various parts such as electric circuits, wires and accessories. An information output form of the design drawing to be drafted includes an electronic information of two-dimensional (2D) or 3D coordinates and a drawing printed as a plan based on the electronic information.

Subsequently, in Step S203, the electronic information obtained in Step S202 is so converted as to have a data format suited to a computer software program called IHS (wiring harness production designing system).

In Step S204, the wiring harness is designed on the computer by a skilled operator and a full-size production design drawing (full-size drawing) is drafted (Step S205). This full-size drawing is a simulation corresponding to the wiring harness on the assembling table shown in FIG. 8 and is, for example, a drawing in 2D coordinate system. This full-size drawing includes an information on circuits 11 each of which is one wire or an aggregate of a plurality of wires, an information of terminals such as connectors and ground terminals, an information on various accessories including protecting members or covering parts such as clamps, clips, tubes, taping and protectors, and an information on various dimensions and tolerances necessary for the production in a 2D space assuming the surface of the assembling table.

In Step S206, a full-size drawing design data for the full-size drawing drafted in Step S205 is sampled.

Here, the full-size drawing design data includes an information on nodes through which the respective circuits pass (node information), an information on spans connecting the respective nodes (span information) and an information on accessories to be connected with some of the nodes (part information).

Specifically, the node information includes the numbers and coordinates of the respective nodes.

The span information includes the numbers of the nodes connected with each other, a diameter of the wiring harness, and the coordinates of passing points and bending points.

The part information includes the numbers of the nodes with which the respective accessories are connected, an information on the name of terminal parts or part codes, an information on the types, specifications and mounting directions of the parts.

Other pieces of information included in the full-size drawing design data include a wire information, a circuit construction information and a circuit processing information.

In succeeding Steps S207 and S208, a 3D wire path data (3D design data) is generated using the wiring harness designing system of FIG. 1 based on these pieces of information.

First, in Step S207, the wiring harness designing system receives a 2D full-size drawing design data obtained in Step S206 as a full-size drawing information.

Then, in Step S208, the 3D design data is generated.

Here, the 3D design data is an electronic data representing coordinates of a 2D electronic data used to produce a wiring harness on a two-dimensional assembling board in the 3D space.

First, after dimensions such as lengths between the branched portions of the wiring harness and the mount positions of connectors are designed based on the above 2D electronic data (including the full-size information), a 2D drawing (plan) of the wiring harness is generated in the form of a 2D electronic data using a design assisting software program such as a CAD, considering actual production of the wiring harness on the assembling board.

Next, in the computer main body 16, a coordinate axis (z-axis) normal to a coordinate plane of the inputted 2D electronic data is added to the 2D electronic data, and the resulting data is stored as a 3D design data in the storage device 15. The 2D electronic data may be manually inputted to the computer main body 16 using the input devices 14. Alternatively, the 3D electronic data generated by an other CAD system may be transferred to the computer main body 16 via communication or a specified storage medium such as a magnetic disk.

Here, pieces of information to be inputted as the 2D data include a 2D coordinate information of nodes n01 to n20 for specifying the shape of the respective wires forming the wiring harness on the assembling board as shown in FIG. 3, a wire link information on links of the respective nodes n01 and n20, and an information on diameters r01 to r14 of the wires linking the nodes n01 to n20.

Further, in order to enable realistic deformation of the respective wires of the wiring harness in a 3D design data deforming step to be described later, each wire 21 having a center axis 21a as shown in FIG. 4 is divided along its longitudinal direction into a plurality of short wire segments (joints) 22 having a length "a" as shown in FIG. 5, and the length "a" of the respective wire segments 22 is also inputted considering that the respective wires 21 are deformed with the wire segment 22 as a unit. The length "a" is desirably about 10 mm. The respective wire segments may be equal or different. The wires 21 having a length L are finely divided into a plurality of short wire segments 22.

Further, a weight data of a plurality of wires forming the wiring harness is also inputted (as described later). This weight data is a parameter representing a degree of difficulty to deform the respective wires in the 3D design data deforming step to be described later. The larger the value of the weight data, the more difficult to move the wire when deforming it. Further, for a deformation to curve the wire, as the value of the weight data increases, the wire is more likely to be curved in its entirety instead of being deformed only at a point of deformation. Such a weight data is empirically obtained according to the diameters of the wires and other factors.

3D shape data of accessories (connectors 18 (see FIG. 3), clamps, and covering parts (such as protectors, vinyl tubes and corrugate tubes), etc.) to be mounted on the wiring harness are generated preferably beforehand, and are assigned to corresponding sections or elements or segments of a wire path after a main part of the 3D design data forming the wire path of the wiring harness is formed. In this way, the 3D design data is completed.

As such a 3D design data is generated, preferably by use of a wire harness designing method or system as described with reference to FIGS. 1 to 8 and 52-57, the assembling board used to assemble the wiring harness corresponding to the 3D design data is also designed using the wiring harness designing system.

In Step S209, an investigation is made on an operation of designing the wiring harness assembling board and an operation of assembling (laying) the wiring harness based on the 3D design data of the wiring harness generated in Step S208 and the assembling board data. The investigation results are fed back to the client of Step S201 or the harness designing step of Step S204, and the wiring harness designing step is restudied and corrected.

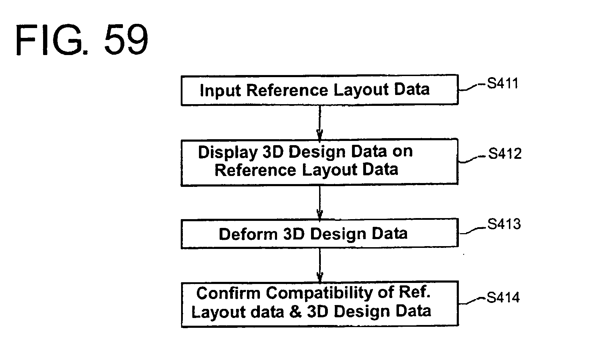

FIG. 59 is a flow chart showing a virtual harness laying operation according to the wiring harness designing method of this embodiment.

In Step S411, a reference layout data is inputted to the computer main body 16.

Here, the reference layout data is an electronic data (3D electronic data) of a 3D layout of the wiring harness in a 3D space modeling the wire layout object. For example, the 3D layout of the wiring harness is designed beforehand for a wire layout object such as an automotive vehicle or an electric appliance based on, e.g. the mount positions of various parts in the wire layout object; a coordinate information on the shape of the wiring harness in the 3D space at that time and a coordinate information of various parts to be mounted on the wiring harness are generated into a 3D electronic data as a 3D drawing using a design assisting software program such as a CAD; and this 3D electronic data is inputted to the computer main body 16 and stored in the storage device 15 (see FIG. 1). A CAD software program used here may be implemented on the same equipment as the computer main body 16 and the data on the shape of the wiring harness in this case may be manually inputted by means of the input devices 14. Alternatively, the 3D electronic data generated in the other CAD system may be transferred to the computer main body 16 via communication or a specified storage medium such as a magnetic disk.

In Step S202, the reference layout data inputted is plotted in a virtual 3D space to be three-dimensionally displayed on the display device 11. In this virtual 3D space, a virtual viewpoint can be changed, for example, in accordance with an operation of the input device 14 such as the mouse 13.

This reference layout data represents a background image when the 3D design data is displayed in a manner. In order to distinguish this data from the 3D design data, the virtual 3D display of the wiring harness specified by the reference layout data is made, for example, in achromatic color.

Then, the 3D design data generated in Step S208 is displayed in the 3D space while being superimposed on the reference layout data.

Here, in general shape representation by the 3D design data, the individual wires 21 or the respective wire segments 22 of an aggregate of a plurality of wires (wire bundle) are represented, for example, using cylindrical shapes as shown in FIGS. 4 and 5.

Specifically, as shown in FIG. 6, a vector S extending in a direction passing the center of a cylinder and having a length is defined for a data of the wire segment 22 having a length "a". The vector S can specify a single absolute position and a twisting degree by specifying a direction information and a length information in a 3D space defined by x-axis, y-axis and z-axis, and an angle of rotation information from a reference point by a twisted angle (angle of rotation centered on the axis of the wire) between this wire segment and the other wire segment adjacent thereto.

The data of the individual wire segments 22 are so displayed as to be continuously connected with each other (continuous connection). Here, a method of continuos connection is, as shown in FIG. 7, such that the coordinates of end points of center axes 23a, 23b are caused to coincide in the case that wire segments 22a, 22b are to be connected.

The entire 3D design data is moved within the virtual 3D space using the input device 14 such as the mouse 13 to adjust an overall positional relationship between the 3D design data and the reference layout data. Step S412 is ended when the 3D design data is adjusted (positioned) to a position considered to be desirable by an operator.

In Step S413 (3D design data deforming step), the operator manually deforms the shape of the wire 21 represented by the 3D design data using the input device 14 such as the mouse 13 so that this shape coincides with the image of the reference layout data displayed as a background image.

It is not impossible to represent the flexibility of the wire segment 22 by a data using a function of a usually used 3D simulation system. However, because such an operation is quite cumbersome, the result of the operation may not necessarily reflect the operator's intention.

Accordingly, in this wiring harness designing system, a processing can be performed to enable the representation of a flexible characteristic as intended by the operator, which is similar to the processing described regarding the 3D virtual assembling system and method with reference to FIG. 8.

Often, the wiring harness is comprised of not only an aggregate of the wires, but various covering parts (e.g. vinyl tubes, corrugate tubes, various taping, etc.) 26 are also mounted around the wires 21 as shown in FIG 9. Accordingly, the shapes of these covering parts 26 need to be represented in association with the shape data of the wires 21.

As described above, in Step S413, the deformation results of the 3D design data of the wires 21 are displayed on the display device 11 while being superimposed on the image of the reference layout data displayed as a background image, and a degree of coincidence or a degree of discrepancy of the two images is visually confirmed.

In Step S414, the compatibility of the reference layout data and the deformed 3D design data is preferably investigated based on the deformation result of the 3D design data and the displayed content in Step S413, and whether or not there is any problem in the wire harness laying operation virtually performed in Step S413 is investigated. The investigation results are fed back to the client of Step S201 and the harness designing step of Step S204, and the wiring harness designing step is restudied and corrected.

For example, if loosening of an image of the 3D design data with respect to an image 28 of the reference layout data as a background image is considerably large as shown in FIG. 12, it means that this wire is excessively long.

Further, if a branch wire 29a of the 3D design data is drawn out from base wires 28, 29 in a direction opposite from the one in which a branch wire 28a of the reference layout data as a background image is drawn as shown in FIG. 13, a design change is so made as to change a forming direction of the branch wire 29a with respect to the base wire 29.

Other problems including excessively short lengths of the wires and excessive twists can also be easily confirmed using the display result or content on the display device 11.

In the wiring harness designing method according to this preferred embodiment a plurality of 3D design data having a common data configuration (having a data compatibility) and different 3D shapes are generated by three-dimensionally deforming the basic 3D design data of the wiring harness to be displayed in the virtual 3D space displayed on the display device and stored in the storage device 15 while being formed into the database, and any one of the plurality of stored 3D design data is selected and displayed in the virtual 3D space via the display device 11.

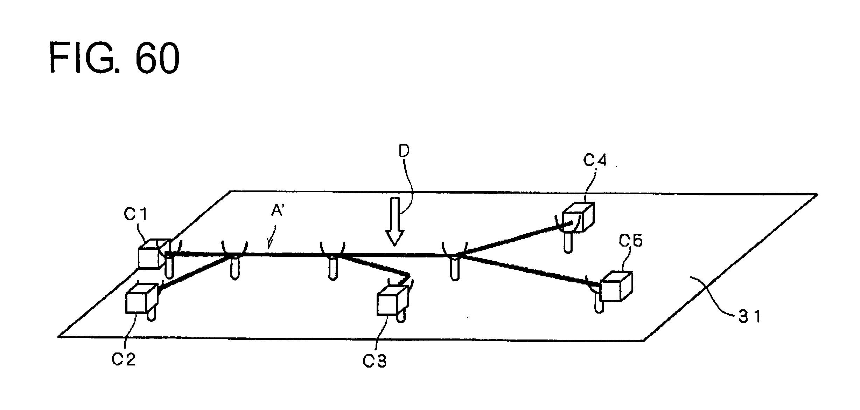

Specifically, the basic 3D design data A' (see FIG. 60) of the wiring harness generated in Step S208 corresponds to a layout of the wiring harness on the assembling board (including the jigs), and is used to attain various improvements for better productivity and quality of the wiring harness at the production of the wiring harness and to verify, for example, whether or not the assembling operation holds. Thus, as shown in FIG. 60, the 3D design data A' generated in Step S208 has a form developed in a plane in the virtual 3D space. In FIG. 60, identified by C1 to C5 are connectors. Although the 3D design data A' is displayed while being superimposed on an assembly board 31 in an example of FIG. 60, the display of the assembling board can be deleted depending on setting.

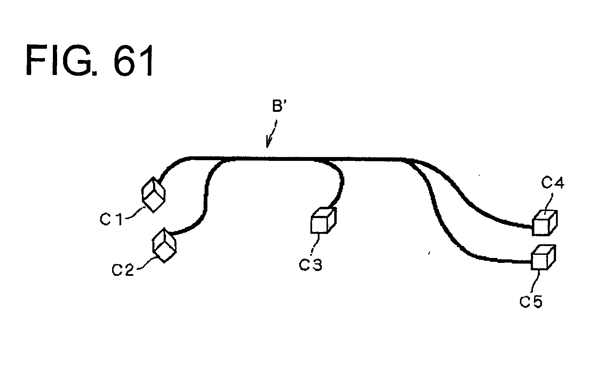

On the other hand, a 3D design data B' (see FIG. 61) corresponding to a layout in a vehicle body which data is generated by three-dimensionally deforming the basic 3D design data A' so as to follow along the layout path of the reference layout data is used to verify, for example, the mounted state of the wiring harness.

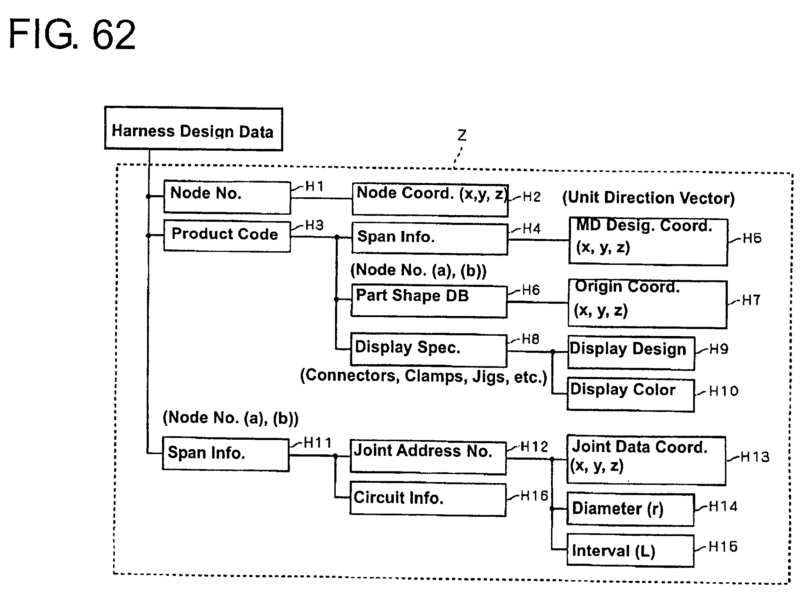

These 3D design data A', B' have a common data configuration Z having a data compatibility, for example, as shown in FIG. 62, are related to each other and stored in the storage device 15 while being formed into a database. The contents of the data configuration Z is briefly described with respect to the 3D design data A'. A data item H1 includes an information on the numbers of the respective nodes provided at specified intervals along the wire path of the 3D design data A'; and a data item H2 below the data item H1 includes an information on the coordinates of the corresponding nodes in the virtual 3D space.

Data items H3 to H10 include pieces of information on the accessory data which is an accessory design data to be attached to the 3D design data A'. The data item H3 includes part codes for specifying the accessories; the data item H4 includes a span information of the accessory data; the data item H6 includes an information on the 3D shapes of the accessory data; the data item H7 includes an information on the coordinates of mounting origins as references for specifying the display positions of the accessory data in the virtual 3D space; and the data item H5 includes an information (information on unit vectors for specifying a mounting method) for specifying a display direction when the accessory data is displayed in the virtual 3D space. Data items H8 to H10 include pieces of information on how the accessory data is displayed (e.g. display designs and display colors).

Data items H11 to H15 include pieces of information on the respective pieces of span information corresponding to the wire path of the 3D design data A'. The data item H11 includes an information for specifying the corresponding spans in the 3D design data (including an information on the corresponding node numbers); the data item H12 includes an information on the data addresses of the wire segments 22 (joints) of the respective spans; the data item H13 includes an information for specifying the display coordinates and display methods (directions) of the respective wire segments 22 in the virtual 3D space; the data item H14 includes an information on the diameters of the respective spans; and the data item H15 includes an information on the length (interval) "a" of the respective spans. A data item H16 includes an information on the circuits formed by the respective spans.

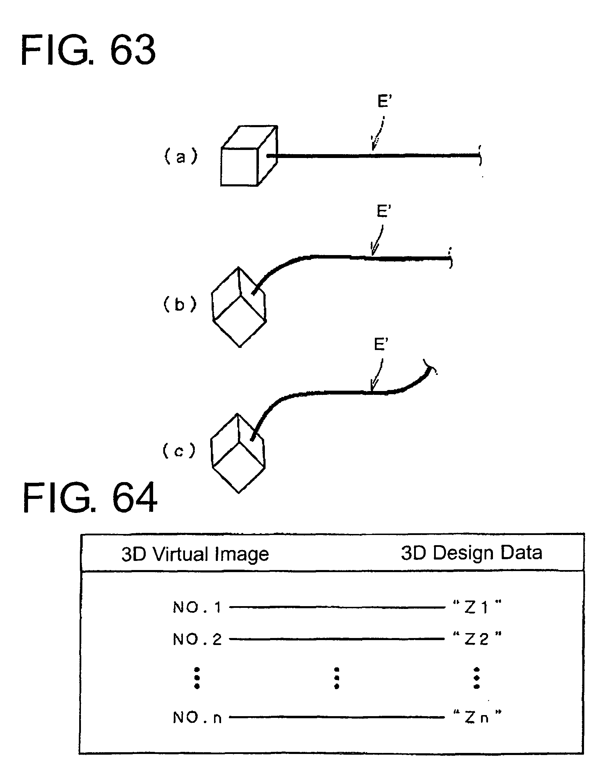

Further, in this embodiment, at least one (here, there) 3D design data E' having intermediate shapes (see FIGS. 63(a) to 63(c)) created during a shape transitioning process of generating the 3D design data B' by deforming the 3D design data A' in Step S413 are suitably stored in the storage device 15 as process shape data representing the shape transitioning process according to an instruction inputted by the designer via the input device 14. These 3D design data of intermediate shapes have the data configuration Z common to the aforementioned 3D design data A', B' and stored in the storage device 15 while being formed into a database.

**[0356]** [0080] Here, the 3D design data A', B', E' are formed into data files Z1, Z2, ... for each data as shown in FIG. 64 and stored in the storage device 15 with identification data (here, identification numbers of, e.g. No. 1, No. 2, ...) affixed thereto. Since the respective 3D design data B', E' are generated by three-dimensionally deforming the basic 3D design data A', the data items H1 to H16 of the data configuration Z which have different data contents among the respective 3D design data A', B', E' are only those concerning the wire segments 22 (joints), the display positions of the parts and the like (coordinates) and the directions (e.g. H2, H5, H7, H13) in the virtual 3D space.

If the identification numbers corresponding to the 3D design data A', B', E' to be displayed on the display device 11 are inputted via the input device 14, the 3D design data A', B', E' corresponding thereto are read from the storage device 15 and preferably displayed in the virtual 3D space via the display device 11.

Thus, contents of the design can be investigated while easily switching the 3D design data A', B', E' displayed on the display device 11 from one to another by inputting the identification numbers corresponding to the 3D design data A', B', E' desired to be displayed.

Further, in this embodiment, the basic 3D design data A', at least one 3D design data E' having an intermediate shape, and the 3D design data B' representing the layout in the vehicle body are successively switched and displayed in the virtual 3D space via the display device 11 in an order corresponding to the shape transitioning process by inputting a specified instruction via the input device 14. A switching timing of the displays of the 3D design data A', B', E' can be preferably adjusted by an instruction inputted via the input device 14.

Here, a method for setting the display positions when the 3D design data A', B', E' are displayed on the display device 11 is described. For example, in the case of the 3D design data A', a position indicated by an arrow D in FIG. 60 is determined as data origin coordinates, and the 3D design data A' is so displayed as to be located at a specified reference position (for example, center position) within the virtual 3D space. In other words, the coordinate positions of the respective sections of the 3D design data A' are specified by relative coordinates with respect to the data origin coordinates as a reference point. Similarly, the data origin coordinates are set and the data is constructed and displayed with respect to the set data original coordinates in the case of the other 3D design data B' as well.

Further, in this embodiment, if any one of a plurality of 3D design data A', B', E' is partly changed e.g. by an instruction inputted via the input device 14, a content of the change is automatically reflected on the others of the plurality of 3D design data related to the changed 3D design data by the processing of the computer main body 16.

One specific example is as follows. If the length of a section of the 3D design data A' is changed by an instruction inputted via the input device 14, the lengths of sections of the other 3D design data B', E' corresponding to the length-changed section are automatically changed according to an amount of the change in the length made in the 3D design data A' by the processing of the computer main body 16. Another specific example is as follows. If the accessory data of the connectors, covering parts (such as protectors), the clamps and the like attached to the 3D design data A' is changed (the type of the accessories are changed, the set positions thereof are changed, added and deleted, etc.) by an instruction inputted via the input device 14, a content of the change is automatically reflected on the other 3D design data B', E'.

As described above, according to this embodiment, a plurality of 3D design data B', E' of different 3D shapes generated by deforming one kind of 3D design data A' of the wiring harness in the virtual 3D space are stored together with the 3D design data A' in the storage device 15 while being formed into the database, and any one of the plurality of 3D design data A', B', E' is selected and displayed in the virtual 3D space via the display device 11. Thus, the 3D design data A', B', E' displayed in the virtual 3D space can be easily switched to the other 3D design data A', B', E'. Therefore, the contents of the design can be inspected while switching the 3D design data A', B', E' displayed in the virtual 3D space, thereby making the wiring harness designing operation and the like more efficient.

Particularly, the basic 3D design data A' developed in a plane is suitably used to attain various improvements for better productivity and quality of the wiring harness at the production of the wiring harness and to verify, for example, whether or not the assembling operation holds, and the 3D design data B' representing the layout in the vehicle body is suitably used to inspect the layout of the wiring harness in the vehicle body. Thus, the designing operation can be made even more efficient by making verifications and inspections while switching the 3D design data displayed in the virtual 3D space between the basic 3D design data A and the 3D design data B' representing the layout in the vehicle body.

If any one of the plurality of 3D design data A', B', E' which are stored while being related to each other is partly changed by an instruction inputted via the input device 14, a content of the change made in the changed 3D design data is automatically reflected on the others of the 3D design data A', B', E' related to the changed 3D design data. Thus, the plurality of related 3D design data A', B', E' can be easily changed at once. Therefore, how a partial change made in one of the 3D design data A', B', E' displayed on the display device 11 has changed (automatically changed) the others of the 3D design data A', B', E' can be easily confirmed by switching the 3D design data A', B', E' displayed on the display device 11, and the contents of the designs of the 3D design data A', B', E' can be more efficiently changed and investigated.

Since the plurality of related 3D design data A', B', E' have the common data configuration, if any one of them is partly changed by the designer, the corresponding sections of the others of them can be easily automatically changed, and data administration such as renewal of data (including corrections) and deletion can be easily performed.

Further, since the plurality of 3D design data B', E' generated during the shape transitioning process of the 3D design data A' are successively switched and displayed in the virtual 3D space via the display means in the order corresponding to the shape transitioning process, an operation of laying the wiring harness in the vehicle body can be inspected and demonstrated by means of the 3D design data A', B', E' switchingly displayed in this order.

Furthermore, since the main part of each 3D design data A', B', E' corresponding to the wire path is formed by connecting a plurality of wire segments 22 along the wire path, the length of a specific section of the main part or the wire path can be easily changed by increasing or decreasing the number of the joints in this specific section or increasing or decreasing the length of the joints in this specific section, and a deformation characteristic and the like of real wires can be realistically represented.

Accordingly, a plurality of 3D design data of different 3D shapes generated by three-dimensionally deforming one kind of 3D design data of the wiring harness in the virtual 3D space are stored in the storage means while being formed into the database, and any one of the plurality of 3D design data is selected and displayed in the virtual 3D space via the display means. Thus, the 3D design data displayed in the virtual 3D space can be easily switched to the other 3D design data. Therefore, the contents of the design can be inspected while switching the 3D design data displayed in the virtual 3D space, thereby making the wiring harness designing operation and the like more efficient.

Further, if any one of the plurality of 3D design data which are stored while being related to each other is partly changed by an instruction inputted via the input means, the content of the change made in the changed 3D design data is automatically reflected on the other 3D design data related to the changed 3D design data. Thus, the plurality of related 3D design data can be easily changed at once. Therefore, how a partial change made in one of the 3D design data displayed on the display means has changed (automatically changed) the other 3D design data can be easily confirmed by switching the 3D design data displayed on the display means, and the contents of the designs of the 3D design data can be more efficiently changed and investigated.

Further, since the plurality of related 3D design data have the common data configuration, if any one of them is partly changed by the designer, the corresponding sections of the others of them can be easily automatically changed, and data administration such as renewal of data (including corrections) and deletion can be easily performed.

Moreover, the basic 3D design data developed in a plane is suitably used to attain various improvements for better productivity and quality of the wiring harness at the production of the wiring harness and to verify, for example, whether or not the assembling operation holds, and the 3D design data representing the layout in the vehicle body is suitably used to inspect the layout of the wiring harness in the vehicle body. Thus, the designing operation can be made even more efficient by making verifications and inspections while switching the 3D design data displayed in the virtual 3D space between the basic 3D design data and the 3D design data representing the layout in the vehicle body.

Further, since the plurality of 3D design data generated during the shape transitioning process of the 3D design data are successively switched and displayed in the virtual 3D space via the display means in the order corresponding to the shape transitioning process, an operation of laying the wiring harness in the vehicle body can be inspected and demonstrated by the 3D design data switchingly displayed in this order.

Still further, since the main part of each 3D design data corresponding to the wire path is formed by connecting a plurality of joints along the wire path, the length of a specific section of the main part or the wire path can be easily changed by increasing or decreasing the number of the joints in this specific section or increasing or decreasing the length of the joints in this specific section.

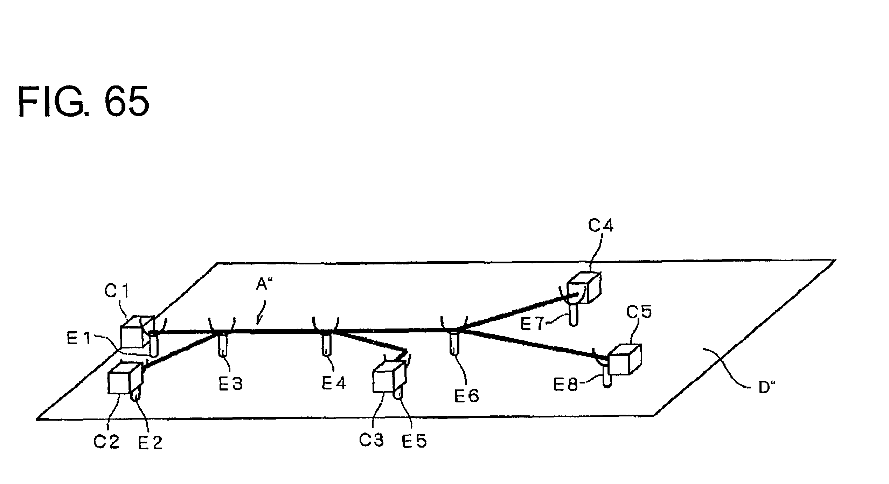

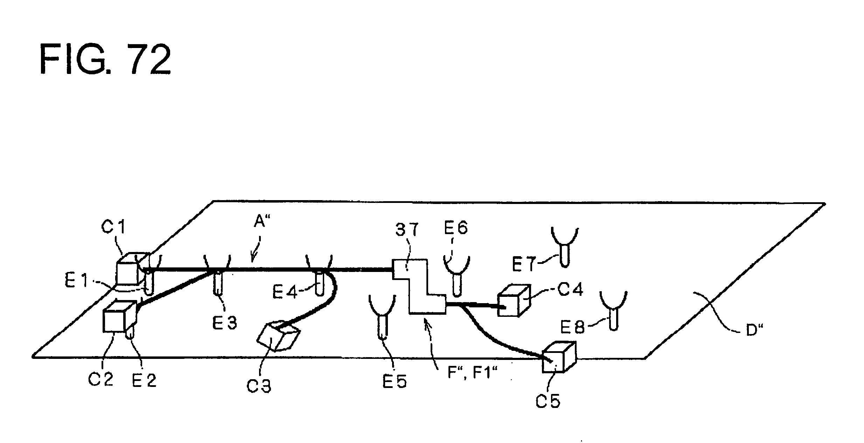

With reference to FIGS. 65 to 76, according to the wiring harness designing method of this further preferred embodiment, the accessories (covering parts such as protectors and covering tubes, electrical connection means such as electrical connection boxes, etc.) are or can be virtually mounted on the wiring harness in the virtual 3D space using the harness design data A" and the accessory data F of the one or more accessories, and the contents of the designs of the wiring harness and the accessories, the accessory mounting operation and the like can be investigated before the wiring harness is actually produced.

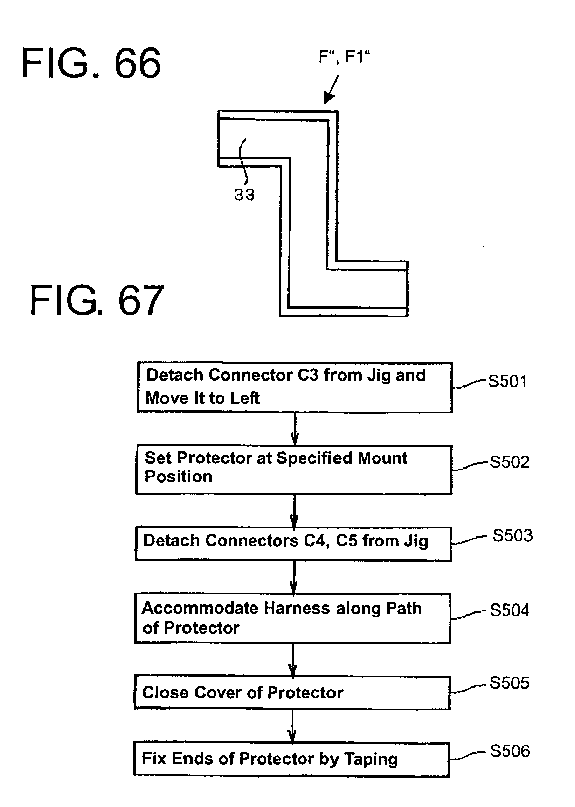

First, as a preparatory step, the harness design data A", for example, as shown in FIG. 65 needs to be generated as described above with reference to the preceding embodiments, in particular the embodiment described with reference to FIGS. 1 to 13 and 58 to 64, using the wiring harness designing system or method or the harness design data A" (similar to the previously described harness design data A or basic 3D design data A') generated in an other system needs to be transferred to the wiring harness designing system. The accessory data F (see FIG. 66) which are 3D design data of the accessories to be mounted on the wiring harness needs to be generated using the wiring harness designing system or need to be transferred to the wiring harness designing system. Here, a virtual protector mounting process is described. In FIG. 65, identified by C1 to C5 are connector data which are 3D design data of the connectors.

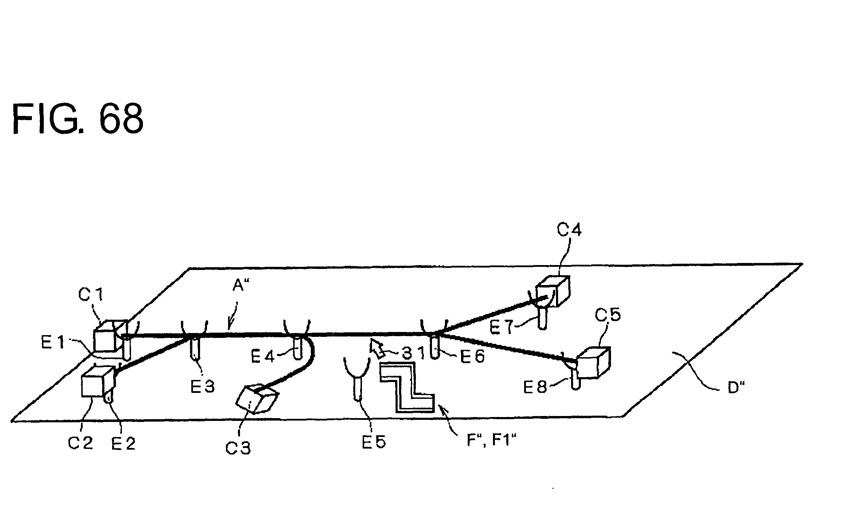

FIG. 67 is a flow chart showing a process of virtually mounting a protector on a wiring harness. First, in Step S501 of FIG. 67, by inputting an instruction to the computer main body 16 via the input device 14, the computer main body 16 is caused to display the harness design data A" set on the board design data D and an accessory data F1 of the protector in the virtual 3D space of the display device 11 as shown in FIG. 68, the connector data C3 is detached from an assisting jig data E5 so as to move a section of the harness design data A" which hinders the mounting of the protector, and the connector data C3 is moved in a direction (leftward in FIG. 68) away from a portion where the protector is to be mounted. Here, the 3D deformation of the harness design data A" (which can be preferably performed with a system or method as described with reference to the previous embodiment) and the movement of the accessory data F1 are made, for example, by dragging by means of the mouse 13.

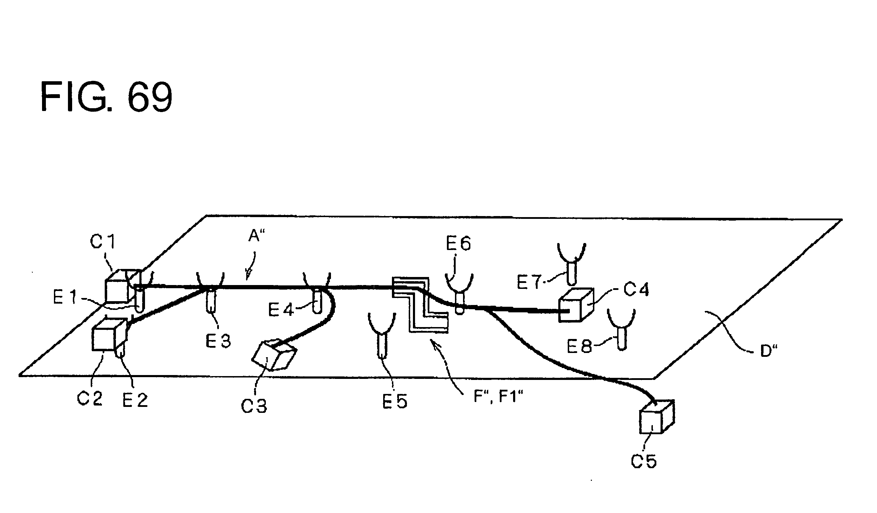

In Step S502, an instruction is inputted via the input device 14 to move the accessory data F1 in a direction toward the harness design data A" as shown by an arrow 31 in FIG. 68 and set it at a mount position on the harness design data A" as shown in FIG. 69.

In Step S503, an instruction is inputted via the input device 14 to detach the connector data C3, C5 from assisting jig data E7, E8 as shown in FIG. 69.

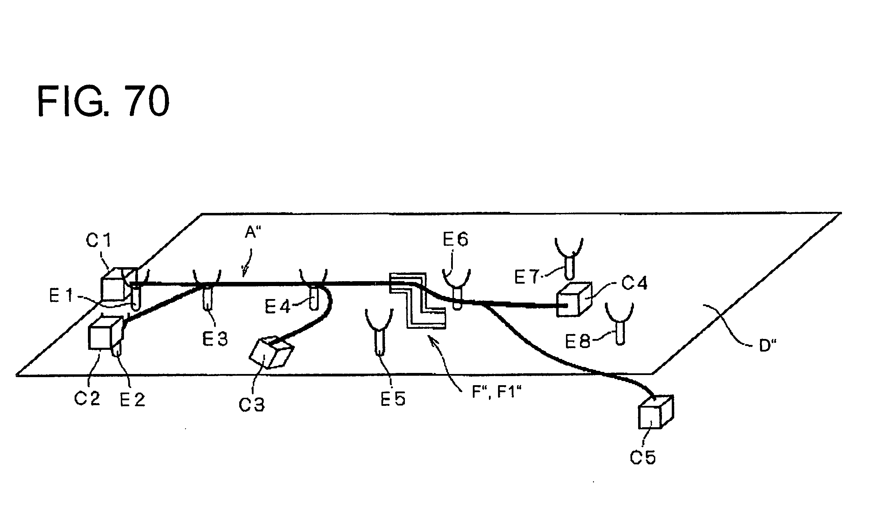

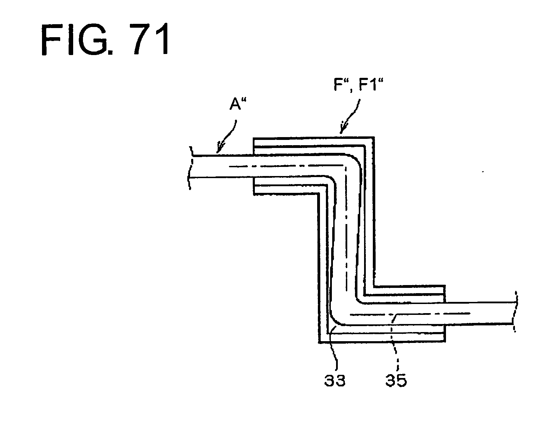

In Step S504, an instruction is inputted via the input device 14 to three-dimensionally deform the wire path at a protector mount portion of the harness design data A" and accommodate the protector mount portion of the harness design data A" in a wire accommodating portion (here, a groove-like accommodating recess) of the accessory data F1 as shown in FIGS. 70 and 71. At this time, the harness design data A" is accommodated such that a center line of the wire overlaps a center line 35 of the accessory data F1 as shown in FIG. 71.

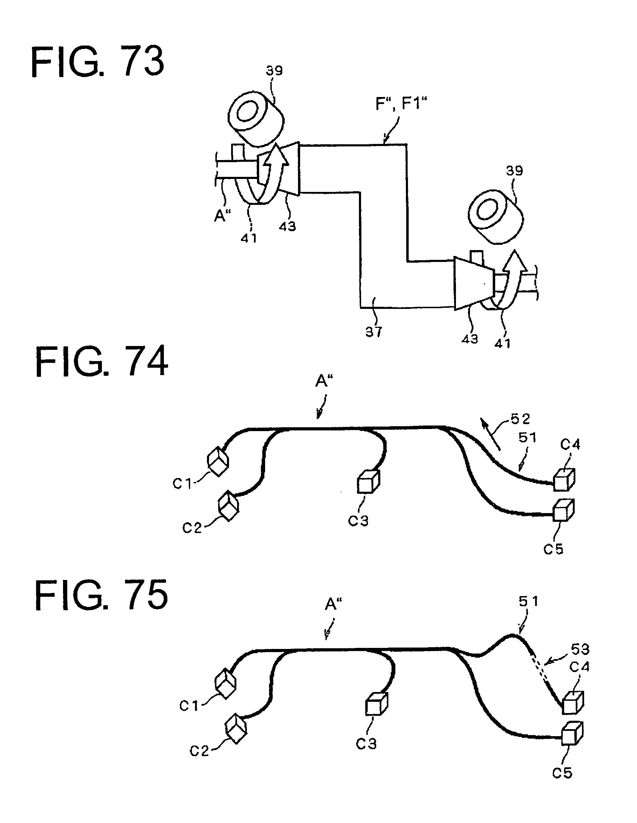

In Step S505, an instruction is inputted via the input device 14 to close a cover 37 of the accessory data F1 as shown in FIG. 73.

In Step S506, an instruction is inputted via the input device 14 to perform virtual taping to fix the protector and the like. This virtual taping is performed by generating tape roll data 39 (see FIG. 73) representing a 3D shape of a tape roll beforehand, displaying the tape roll data 39 in the virtual 3D space as shown in FIG. 73, turning the displayed tape roll data 39 around portions of the harness design data A" where taping should be done (here, around the opposite ends of the protector mount portion) as shown by arrows 41. In this way, whether or not there is any problem in a taping step (e.g. any contact with an obstacle while the tape roll is turned) is or can be investigated. As this virtual taping is done, a taping data 43 corresponding to a taped portion is attached to each of the opposite ends of the protector mount portion of the harness design data A", whereupon the virtual protector mounting process is completed.

Such a virtual protector mounting process enables investigations on the contents of the designs of the wiring harness and the protector, the protector mounting operation and the like. If a portion of the harness design data A" to be accommodated in the accessory data F1 of the protector is found out to bulge out of the accessory data F1 without being fully accommodated therein as a result of the virtual mounting process, marking or the like may be made on this bulging-out portion to be used when the contents of the designs are investigated again.

Further, in this embodiment, a plurality of harness design data A" and accessory data F1 having different forms in the respective scenes of the mounting process of attaching the accessory data F1 to the harness design data A" as described above are stored scene by scene in the storage device 15, so that the harness design data A" and the accessory data F1 of each scene can be outputted for reproduction via the display device 11. Such an output for reproduction is made in response to an instruction inputted via the input device 14. The stored harness design data A" and the accessory data F1 of the respective scenes are successively switched and displayed in the virtual 3D space in an order conforming to the process of attaching the accessory data F1 during the output for reproduction.

The harness design data A" and the accessory data F1 of which scene are stored is decided by the designer by inputting an instruction via the input device 14. For example, the harness design data A" and the accessory data F1 of the scenes shown in FIGS. 68 to 73 are stored. A display switching timing during the output for reproduction of the harness design data A" and the accessory data F1 of the respective scenes can be set and changed by an instruction inputted via the input device 14.

Further, in this embodiment, the computer main body 16 is caused to detect an interference of the accessory data F1 and the like with a pre-registered structure data (e.g. the assisting jig data E) which can be an obstacle to the attachment of the accessory data F1 and the like in the above virtual protector mounting process. Upon detecting such an interference, the computer main body 16 is caused to output a notification. The interference of which object present in the virtual 3D space is automatically detected can be set by an instruction inputted via the input device 14. Here, the interference of the accessory data F1 of the protector 33 as a preferred accessory and the assisting jig data E and the interference of the tape roll data 39 and the assisting jig data E are, for example, detected and notified by the computer main body 16.

The notification made upon the detection of the interference is made, for example, by a display output via the display device 11 and/or a sound output via an unillustrated loudspeaker. As a specific example of the display output, a method for changing a displaying state of the display device 11 upon an occurrence of an interference (e.g. at least some of the display colors on the screen are temporarily changed) or a method for displaying a message indicating an occurrence of the interference can be considered.

Further, in this embodiment, the computer main body 16 can set one or a plurality of constraint points fixed at position(s) on the harness design data A" in the virtual 3D space upon an instruction inputted thereto via the input device 14. For example, in the case of the harness design data A" of such a form to be laid in a vehicle body shown in FIG. 74, points (e.g. connectors C1 to C5 and fixing portions realized by clamps) of the harness design data A" to be fixed to or connected with the vehicle body are set as constraint points.

In the case that a section (e.g. section 51 in FIG. 74) of the harness design data A" is moved in the virtual 3D space such that a distance between this section (51) and a constraint point (e.g. connector C4) in the virtual 3D space becomes longer than the length of the wire along the wire path between the section (51) and the constraint point (C4) (e.g. moved in a direction indicated by an arrow 52 in FIG. 74) in response to an instruction inputted to the computer main body 16 via the input device 14, the computer main body 16 is caused to create a lacking portion 53 in the wire path between the section (51) and the constraint point (C4) and preferably display an image representing the lacking portion 53 (here, the wire path corresponding to the lacking portion is displayed in phantom line) via the display device 11 as shown in FIG. 75.

Further, in the case that the length of the wire path between the constraint points (e.g. connector C1 and connector C4) of the harness design data A" in the virtual 3D space is so changed as to be shorter than a distance between these two constraint points in the virtual 3D space in response to an instruction inputted to the computer main body 16 via the input device 14, the computer main body 16 is also caused to create a lacking portion (53) in the wire path between the two constraint points and display an image representing the lacking portion via the display device 11.

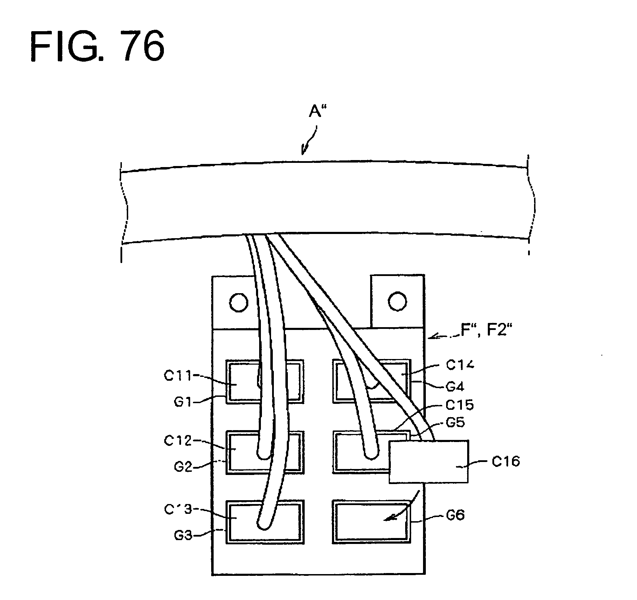

Although the process of virtually mounting the protector on the wiring harness is described above, the wiring harness designing method according to this embodiment may be applied to a process of virtually mounting an other accessory. For example, connection of the wiring harness and an electrical connection box may be simulated. In such a case, an accessory data F2 (see FIG. 76) which is a 3D design data of an electrical connection box as a further preferred accessory needs to be generated and stored in the storage device 15 beforehand. During the simulation, the computer main body 16 is caused to read the accessory data F1 from the storage device 15, display the accessory data F2 and the harness design data A" in the virtual 3D space of the display device 11 and connect the accessory data F2 and the harness design data A" in response to an instruction inputted via the input device 14.

The above connection is made, for example as shown in FIG. 66, by locating the harness design data A" and the accessory data F2 at specified positions in the virtual 3D space where these two data can be connected, and successively moving the respective connector data (here, connector data C11 to C16) of the harness design data A" by dragging by means of the mouse 13 to be inserted into corresponding connecting portions G1 to G6 of the accessory data F2.

As described above, according to this embodiment, the process of mounting the one or more accessories on the wiring harness can be virtually simulated in the virtual 3D space using the harness design data A" of the wiring harness and the accessory data F of the accessories (covering parts such as protectors and covering tubes, electrical connection means such as electrical connection boxes, etc.), and the simulation result can be immediately reflected on the contents of the design of the wiring harness and the like. As a result, the wiring harness designing operation and the like can be made more efficient.

Further, a plurality of harness design data A" and accessory data F having different forms in the respective scenes of the process of attaching the accessory data F to the harness design data A" in the virtual 3D space are successively displayed on the display device 11 in the order conforming to the attaching process. Thus, an operation of mounting the accessories on the wiring harness can be inspected and demonstrated by the harness design data A" and the accessory data F switchingly displayed at the respective stages of the attaching process in this order.

Furthermore, if the accessory data F interferes with the structure data (such as the assisting jig data E) which becomes an obstacle when the accessory data F is attached to the harness design data A" in the virtual 3D space, such an interference is automatically detected and notified by the wiring harness designing system. Thus, the obstacles and the like that hinder the mounting of the accessories on the wiring harness can be easily found out by the simulation and can be dealt with in advance.

Further, if a section of the harness design data A" is moved in the virtual 3D space such that the distance between this section and the constraint point of the harness design data A" in the virtual 3D space becomes longer than the length of the wire path between this section and the constraint point, the lacking portion representing an insufficient length of the wire path between that section and the constraint point is image-displayed as a notification. Thus, the sections of the harness design data A" having insufficient lengths can be easily (automatically) confirmed or detected.

Furthermore, if the length of the wire path between the constraint points of the harness design data A" in the virtual 3D space is so changed as to be shorter than the distance between the constraint points in the virtual 3D space, the lacking portion representing an insufficient length of the wire path between these constraint points is image-displayed as a notification. Thus, the sections of the harness design data A" having insufficient lengths can be easily confirmed.

Further, since a main part of the harness design data A" representing the wire path is formed by connecting a plurality of wire segments (joints) 22 along the wire path, the curved shape and the curving characteristic of the wires can be realistically represented.

Accordingly, the process of mounting the accessories on the wiring harness can be virtually simulated in the virtual 3D space of the computer using the harness design data of the wiring harness and the accessory data of the accessories, and the simulation result can be immediately reflected on the contents of the design of the wiring harness. As a result, the operation of designing the wiring harness and the like can be made more efficient.

Further, the process of mounting the covering parts on the wiring harness can be easily simulated in the computer.

Moreover, the process of connecting the electrical connection means with the wiring harness can be easily simulated in the computer.

Still further, a plurality of harness design data and accessory data having different forms which are created during the process of attaching the accessory data to the harness design data in the virtual 3D space are successively displayed on the display device in the order conforming to the attaching process. Thus, an operation of mounting the accessories on the wiring harness can be inspected and demonstrated by the harness design data and the accessory data switchingly displayed at the respective stages of the attaching process in this order.

Furthermore, if the accessory data interferes with the structure data which becomes an obstacle when the accessory data is attached to the harness design data in the virtual 3D space, such an interference is automatically detected and notified by the computer. Thus, the obstacles and the like that hinder the mounting of the accessories on the wiring harness can be easily found out by the simulation and can be dealt with in advance.

Moreover, if the section of the harness design data is moved in the virtual 3D space such that the distance between this section and the constraint point of the harness design data in the virtual 3D space becomes longer than the length of the wire path between this section and the constraint point, the lacking portion representing an insufficient length of the wire path between that section and the constraint point is image-displayed as a notification. Thus, the sections of the harness design data having insufficient lengths can be easily confirmed.

Furthermore, if the length of the wire path between the constraint points of the harness design data in the virtual 3D space is so changed as to be shorter than the distance between the constraint points in the virtual 3D space, the lacking portion representing an insufficient length of the wire path between these constraint points is image-displayed as a notification. Thus, the sections of the harness design data having insufficient lengths can be easily confirmed.

LIST OF REFERENCE NUMERALS

| 11 | display device |
| 14 | input device |
| 15 | storage device |
| 16 | computer main body |
| 120, 121 | accessory |
| 122 | assisting jig |
| 123 | assembling table |
| Cmp | wiring harness |
| Sub1 to Sub3 | subassembly |
| A | harness design data |
| C | accessory data |
| D | board design data |
| E | assisting jig data |
| A', B', E' | 3D design data |

A''            harness design data
F, F1, F2      accessory data
E1 to E8       assisting jig data

**Claims**

1. A 3D virtual design method for displaying a 3D design data of a wiring harness in a virtual 3D space displayed on a display means (11) by means of a control means (16) based on a data inputted by a data input means (14), comprising:

   a data inputting step (S1) of inputting the shape of the wiring harness (3) in the form of a reference layout data (28) representing a 3D layout of the wiring harness (3) in a specified vehicle or electric appliance by means of the data input means (14), and inputting the 3D design data (29) representing a 3D layout of a wiring harness (3) designed for production by the data input means (14),
   a reference layout data image displaying step (S2) of displaying an image represented by the reference layout data (28) as a background image in the virtual 3D space,
   a 3D design data displaying step (S3) of displaying the 3D design data (29) while superimposing it on the background image, and
   a 3D design data changing step (S4; S5) of displaying the shape of the wiring harness (3) represented by the 3D design data (29) while changing it according to an input made by the data input means (14), and a degree of coincidence or a degree of discrepancy of an image of the changing result and the background image of the reference layout data is confirmed.

2. A 3D virtual design method according to claim 1, wherein the 3D design data is generated by adding coordinates of a normal direction to a primary plane of a assembling board (1) used during the production of the wiring harness to a 2D data which is a 2D representation along the primary plane.

3. A 3D virtual design method according to one or more of the preceding claims, wherein the 3D design data (29) is at least partly divided into a plurality of wire segments (22) and includes at least a vector information (S) on the coordinates of the respective wire segments (22).

4. A 3D virtual design method according to claim 3, wherein, upon changing the shape of the wiring harness (3), the vector information (S) of each concerned wire segment (22) is changed assuming that center axes (21a) of the adjacent wire segments (22) are substantially continuous.

5. A 3D virtual design method according to claim 3 or 4, wherein a data on a phase difference ($\theta$; $\phi$) to the adjacent wire segments (22b) is given to each wire segment (22a).

6. A 3D virtual design method according to one or more of the preceding claims, wherein a surface line, which preferably is a straight line substantially in parallel with a center axis (21a), is virtually drawn on the outer circumferential surface of the wiring harness (3) before changing the shape of the wiring harness (3), and the surface line is displayed on the display means (11) while being twisted (FIG. 10; 11) according to a twisted angle of the wiring harness (3).

7. A 3D virtual design method according to any one of claims 3 to 5, wherein, in the case that part of the wiring harness (3) is covered by an covering part (26), a 3D design data of the covering part (26) is used for each of the corresponding wire segments (22) instead of the 3D design data of the wire segments (22).

8. A 3D virtual design method for use in designing a wiring harness (3) according to one or more of the preceding claims, comprising the steps of:

   an input means (14) for receiving an input,
   at least temporarily storing a harness design data (A) which is a 3D design data of at least part of the wiring harness (3) in a storage means (15), and
   displaying the harness design data (A) stored in the storage means (15) in a virtual 3D space on a display means (11) and, if the harness design data (A) is partly changed by an input made via the input means (14), correcting a section of the harness design data (A) related to a content of the change and reflecting a correction result on display contents of the display means (11) and stored contents of the storage means (15).

9. A method according to claim 8, further comprising the step of:

storing a board design data (D) which is a 3D design data of an assembling board (1) corresponding to the harness design data (A) in the storage means (15),
wherein the harness design data (A) and the board design data (D) are displayed in the virtual 3D space while setting the harness design data (A) on the board design data (D) and, if the harness design data (A) is partly changed by an input made via the input means (14), corrects a section of the harness design data (A) and/or a section of the board design data (D) related to a content of the change and reflects correction results on the display contents of the display means (11) and the stored contents of the storage means (15).

10. A method according to claim 9, wherein the board design data (D) includes an assisting jig data (E) corresponding to assisting jigs (2) for holding the wiring harness (3) on the assembling board (1), and
if the length or path shape of a section of the harness design data (A) is changed, a correction is made by moving the coordinates in the virtual 3D space of an end section of the harness design data (A) located more toward a corresponding end than the changed section when viewed from a reference portion as a reference of the harness design data (A) and the coordinates of the assisting jig data (E) included in the board design data (D) and corresponding to the end section of the harness design data (A) according to an amount of the change in the length of the changed section and/or according to a changed content of the path shape.

11. A computer program product comprising a computer readable medium, having thereon computer program code means, when said program is loaded, to make the computer execute a 3D virtual assembling method according to one or more of the preceding claims.

12. A computer-readable storage medium storing thereon a computer program, which comprises computer-readable program means for causing a computer to control an execution of a wiring harness designing method according to one or more of the preceding claims 1 to 10.

13. A 3D virtual design system for displaying a 3D design data of a wiring harness in a virtual 3D space on a display means (11) by means of a control means (16) based on a data inputted by a data input means (14), wherein:

a) the data input means (14) is adapted to input

- a data representing the shape of the wiring harness (3) in the form of a reference layout data (28) representing a 3D layout of the wiring harness (3) in a specified vehicle or electric appliance, and
- a 3D design data (29) representing a 3D layout of a wiring harness (3) designed for production,

b) the display means (11) is caused by the control means (16) to display

- a reference layout data image being an image represented by the reference layout data (28) as a background image in the virtual 3D space,
- the 3D design data (29) while superimposing it on the background image, and
- the shape of the wiring harness (3) represented by the 3D design data (29) while changing it according to an input made by the data input means (14),

whereby confirmation of a degree of coincidence or a degree of discrepancy of an image of the changing result and the background image of the reference layout data is allowed.

14. A 3D virtual design system according to claim 13, wherein the 3D design data (29) is at least partly divided into a plurality of wire segments (22) and includes at least a vector information (S) on the coordinates of the respective wire segments (22).

15. A 3D virtual design system according to claim 14, wherein, upon changing the shape of the wiring harness (3), the vector information (S) of each concerned wire segment (22) is changed assuming that center axes (21a) of the adjacent wire segments (22) are substantially continuous.

16. A wiring harness designing system according to one or more of the preceding claims 13 to 15, which is a 3D virtual assembling system used in designing a wiring harness (3), comprising:

an input means (14) for receiving an input,

a storage means (15) for at least temporarily storing a harness design data (A) which is a 3D design data of at least part of the wiring harness (3),

a display means (11), and

a control means (16) for displaying the harness design data (A) stored in the storage means (15) in a virtual 3D space displayed on the display means (11) and, if the harness design data (A) is partly changed by an input made via the input means (14), correcting a section of the harness design data (A) related to a content of the change and reflecting a correction result on display contents of the display means (11) and stored contents of the storage means (15).

17. A wiring harness designing system according to claim 16, wherein:

the storage means (15) further stores a board design data (D) which is a 3D design data of an assembling board (1) corresponding to the harness design data (A), and

the control means (16) displays the harness design data (A) and the board design data (D) in the virtual 3D space while setting the harness design data (A) on the board design data (D) and, if the harness design data (A) is partly changed by an input made via the input means (14), corrects a section of the harness design data (A) and/or a section of the board design data (D) related to a content of the change and reflects correction results on the display contents of the display means (11) and the stored contents of the storage means (15).

18. A wiring harness designing system according to claim 16 or 17, wherein, if the length and/or path shape of a section of the harness design data (A) is changed, the control means (16) makes a correction by moving the coordinates in the virtual 3D space of an end section of the harness design data (A) located more toward a corresponding end than the changed section when viewed from a reference portion as a reference of the harness design data (A) according to an amount of the change in the length of the changed section and/or according to a changed content of the path shape without changing the 3D shape of the end section.

19. A wiring harness designing system according to claim 17 or claim 18 and 17, wherein:

the board design data (D) includes an assisting jig data (E) corresponding to assisting jigs (2) for holding the wiring harness (3) on the assembling board (1), and

if the length or path shape of a section of the harness design data (A) is changed, the control means (16) makes a correction by moving the coordinates in the virtual 3D space of an end section of the harness design data (A) located more toward a corresponding end than the changed section when viewed from a reference portion as a reference of the harness design data (A) and the coordinates of the assisting jig data (E) included in the board design data (D) and corresponding to the end section of the harness design data (A) according to an amount of the change in the length of the changed section and/or according to a changed content of the path shape.

20. A wiring harness designing system according to claim 19, wherein:

the harness design data (A) includes an accessory data (C) corresponding to accessories mounted on wires forming the wiring harness (3), and

if the accessory data (C) included in the harness design data (A) is changed, the control means (16) corrects the assisting jig data (E) included in the board design data (D) and related to the accessory data (C).

21. A wiring harness designing system according to one or more of the preceding claims 16 to 20, wherein:

the storage means (15) stores a plurality of harness design data (A) having a common data configuration and related to each other, and

if any one of the plurality of harness design data (A) stored in the storage means (15) is partly changed by an input made via the input device, the control means (16) corrects a section of the changed harness design data (A) related to a content of the change, reflects a correction result on the display contents of the display means (11) and the stored contents of the storage means (15), and reflects the content of the change on the other(s) of the plurality of harness design data (A) related to the changed harness design data (A).

22. A wiring harness designing system according to one or more of the preceding claims 16 to 21, wherein a main part of the harness design data (A) representing a wire path is formed by connecting a plurality of joints along the wire path.

**Patentansprüche**

1. Virtuelles 3D Design- bzw. Entwurfsverfahren zum Anzeigen bzw. Darstellen von 3D Design- bzw. Entwurfsdaten eines Kabelbaums in einem virtuellen 3D Raum, welcher auf Anzeigemitteln (11) durch Regel- bzw. Steuermittel (16) basierend auf Daten angezeigt bzw. dargestellt wird, welche durch Daten-Eingabemittel (14) eingegeben werden, umfassend:

   einen Dateneingabeschritt (S1) eines Eingebens der Form bzw. Gestalt des Kabelbaums (3) in der Form von Referenz- bzw. Bezugslayoutdaten (28), welche ein 3D Layout des Kabelbaums (3) in einem bestimmten Fahrzeug oder elektrischen Gerät repräsentieren, mittels Dateneingabemitteln (14) und eines Eingebens der 3D Entwurfs- bzw. Designdaten (29), welche ein 3D Layout eines Kabelbaums (3) repräsentieren, welches zur Herstellung entworfen wird, durch die Dateneingabemittel (14),
   einen Bildanzeigeschritt (S2) von Bezugslayoutdaten eines Anzeigens eines Bilds, welches durch die Bezugslayoutdaten (28) repräsentiert wird, als ein Hintergrundbild in dem virtuellen 3D Raum,
   einen Anzeigeschritt (S3) von 3D Entwurfsdaten eines Anzeigens der 3D Entwurfsdaten (29), während sie auf das Hintergrundbild überlagert werden, und
   einen Änderungsschritt (S4; S5) von 3D Entwurfsdaten eines Anzeigens der Form des Kabelbaums (3), welcher durch die 3D Entwurfsdaten (29) repräsentiert wird, während sie gemäß einer Eingabe geändert werden, welche durch die Dateneingabemittel (14) durchgeführt wird, und wobei ein Grad einer Übereinstimmung bzw. Koinzidenz oder ein Grad eines Unterschieds bzw. Diskrepanz eines Bilds des sich ändernden Resultats und des Hintergrundbilds der Referenzlayoutdaten bestätigt wird.

2. Virtuelles 3D Entwurfsverfahren nach Anspruch 1, wobei die 3D Entwurfsdaten durch ein Hinzufügen von Koordinaten einer normalen Richtung zu einer primären bzw. Hauptebene einer Zusammenbauplatte (1), welche während der Produktion des Kabelbaums verwendet wird, zu 2D Daten erzeugt werden, welche eine 2D Darstellung entlang der primären Ebene sind.

3. Virtuelles 3D Entwurfsverfahren nach einem oder mehreren der vorangehenden Ansprüche, wobei die 3D Entwurfsdaten (29) wenigstens teilweise in eine Mehrzahl von Kabel- bzw. Drahtsegmenten (22) unterteilt werden und wenigstens eine Vektorinformation (S) betreffend die Koordinaten der entsprechenden Drahtsegmente (22) beinhalten.

4. Virtuelles 3D Entwurfsverfahren nach Anspruch 3, wobei bei bzw. nach einem Ändern der Form des Kabelbaums (3) die Vektorinformation (S) von jedem betroffenen Drahtsegment (22) unter der Annahme geändert wird, daß Mittelachsen (21a) der benachbarten Drahtsegmente (22) im wesentlichen kontinuierlich bzw. durchgehend sind.

5. Virtuelles 3D Entwurfsverfahren nach Anspruch 3 oder 4, wobei Daten betreffend eine Phasendifferenz ($\theta$; $\phi$) zu den benachbarten Drahtsegmenten (22b) jedem Drahtsegment (22a) gegeben werden.

6. Virtuelles 3D Entwurfsverfahren gemäß einem oder mehreren der vorangehenden Ansprüche, wobei eine Oberflächenlinie, welche vorzugsweise eine gerade Linie im wesentlichen parallel zu einer Mittelachse (21a) ist, virtuell auf der äußeren Umfangsfläche bzw. -oberfläche des Kabelbaums (3) gezeichnet wird, bevor die Form des Kabelbaums (3) geändert wird, und die Oberflächenlinie auf den Anzeigemitteln (11) dargestellt bzw. angezeigt wird, während sie gemäß einem verdrillten Winkel des Kabelbaums (3) verdrillt bzw. verdreht wird (Fig. 10; 11).

7. Virtuelles 3D Entwurfsverfahren nach einem der Ansprüche 3 bis 5, wobei in dem Fall, daß ein Teil des Kabelbaums (3) durch ein abdeckendes Teil (26) abgedeckt wird, 3D Entwurfsdaten des abdeckenden Teils (26) für jedes der entsprechenden Drahtsegmente (22) anstelle der 3D Entwurfsdaten der Drahtsegmente (22) verwendet werden.

8. Virtuelles 3D Entwurfsverfahren zur Verwendung beim Entwerfen eines Kabelbaums (3) nach einem oder mehreren der vorangehenden Ansprüche, umfassend die Schritte:

   Eingabemittel (14) zum Empfangen einer Eingabe,
   wenigstens vorübergehendes Speichern von Kabelbaumentwurfsdaten (A), welche 3D Entwurfsdaten von wenigstens einem Teil des Kabelbaums (3) sind, in Speichermitteln (15), und
   Anzeigen der Kabelbaumentwurfsdaten (A), welche in den Speichermitteln (15) gespeichert werden, in einem virtuellen 3D Raum auf Anzeigemitteln (11), und wenn die Kabelbaumentwurfsdaten (A) teilweise durch eine Eingabe geändert werden, welche über die Eingabemittel (14) durchgeführt wird, Korrigieren eines Abschnitts der Kabelbaumentwurfsdaten (A), welche sich auf einen Inhalt der Änderung beziehen, und Wiedergeben eines Korrekturresultats an Anzeigeinhalten der Anzeigemittel (11) und der gespeicherten Inhalte und der Speichermittel (15).

9. Verfahren nach Anspruch 8, weiterhin umfassend den Schritt:

Speichern von Plattenentwurfsdaten (D), welche 3D Designdaten einer Zusammenbauplatte (1) entsprechend den Kabelbaumentwurfsdaten (A) in den Speichermitteln (15) sind, wobei die Kabelbaumentwurfsdaten (A) und die Plattenentwurfsdaten (D) in dem virtuellen 3D Raum angezeigt werden, während die Kabelbaumentwurfsdaten (A) auf den Plattenentwurfsdaten (D) eingestellt bzw. festgelegt werden, und wenn die Kabelbaumentwurfsdaten (A) teilweise durch eine Eingabe geändert werden, welche über die Eingabemittel (14) vorgenommen wird, Korrigieren eines Abschnitts der Kabelbaumentwurfsdaten (A) und/oder eines Abschnitts der Plattenentwurfsdaten (D), welche sich auf einen Inhalt der Änderung beziehen, und Reflektieren bzw. Wiedergeben von Korrekturresultaten an den Anzeigeinhalten der Anzeigemittel (11) und den gespeicherten Inhalten der Speichermittel (15).

10. Verfahren nach Anspruch 9, wobei die Plattenentwurfsdaten (D) Daten (E) eines unterstützenden Werkzeugs bzw. Betätigungselements entsprechend unterstützenden Werkzeugen bzw. Betätigungselementen (2) zum Halten des Kabelbaums (3) auf bzw. an der Zusammenbauplatte (1) enthalten, und

wenn die Länge oder Pfadform eines Abschnitts der Kabelbaumentwurfsdaten (A) geändert wird, eine Korrektur durch ein Bewegen der Koordinaten in dem virtuellen 3D Raum eines Endabschnitts der Kabelbaumentwurfsdaten (A), welcher weiter in Richtung zu einem entsprechenden Ende als der geänderte Querschnitt angeordnet wird, wenn von einem Bezugsabschnitt als einem Bezug bzw. eine Referenz der Kabelbaumentwurfsdaten (A) gesehen, und der Koordinaten der Daten (E) des unterstützenden Werkzeugs durchgeführt wird, welche in den Plattenentwurfsdaten (D) enthalten sind, und zwar dem Endabschnitt der Kabelbaumentwurfsdaten (A) gemäß einem Ausmaß der Änderung in der Länge des geänderten Abschnitts und/oder gemäß einem geänderten Inhalt der Pfadform entsprechend.

11. Computerprogrammprodukt, umfassend ein computerlesbares Medium, welches darauf Computerprogrammcodemittel aufweist, wenn das Programm geladen ist, um einen Computer zu veranlassen, ein virtuelles 3D Zusammenbauverfahren gemäß einem oder mehreren der vorangehenden Ansprüche auszuführen.

12. Computerlesbares Speichermedium, welches darauf ein Computerprogramm speichert, welches computerlesbare Programmittel aufweist, um einen Computer zu veranlassen, eine Ausführung eines Kabelbaumentwurfsverfahrens gemäß einem oder mehreren der vorangehenden Ansprüche 1 bis 10 zu regeln bzw. zu steuern.

13. Virtuelles 3D Design- bzw. Entwurfssystem zum Anzeigen bzw. Darstellen von 3D Design- bzw. Entwurfsdaten eines Kabelbaums in einem virtuellen 3D Raum auf Anzeigemitteln (11) mittels Regel- bzw. Steuermitteln (16) basierend auf Daten, welche durch Dateneingabemittel (14) eingegeben sind, wobei:

a) die Dateneingabemittel (14) adaptiert sind, um einzugeben,

- Daten, welche die Form bzw. Gestalt des Kabelbaums (3) repräsentieren, in der Form von Referenz- bzw. Bezuglayoutdaten (28), welche ein 3D Layout des Kabelbaums (3) in einem bestimmten Fahrzeug oder elektrischen Gerät repräsentieren, und
- 3D Design- bzw. Entwurfsdaten (29), welche ein 3D Layout eines Kabelbaums (3) repräsentieren, welcher für eine Herstellung entworfen ist,

b) die Anzeigemittel (11) durch die Regel- bzw. Steuermittel (16) veranlaßt sind, um anzuzeigen

- ein Referenzlayoutdatenbild, welches ein Bild ist, welches durch die Referenzlayoutdaten (28) repräsentiert ist, als ein Hintergrundbild in dem virtuellen 3D Raum,
- die 3D Entwurfsdaten (29), während sie auf das Hintergrundbild überlagert sind bzw. werden, und
- die Form des Kabelbaums (3), welcher durch die 3D Entwurfsdaten (29) repräsentiert ist, während sie gemäß einer Eingabe geändert ist bzw. wird, welche durch die Dateneingabemittel (14) durchgeführt ist bzw. wird,

wodurch eine Bestätigung eines Grads einer Übereinstimmung bzw. Koinzidenz oder eines Grads eines Unterschieds bzw. Diskrepanz eines Bilds des sich ändernden Resultats und des Hintergrundbilds der Referenzlayoutdaten erlaubt ist bzw. wird.

**14.** Virtuelles 3D Entwurfssystem nach Anspruch 13, wobei die 3D Entwurfsdaten (29) wenigstens teilweise in eine Mehrzahl von Kabel- bzw. Drahtsegmenten (22) unterteilt sind und wenigstens eine Vektorinformation (S) betreffend die Koordinaten der entsprechenden Drahtsegmente (22) beinhalten.

**15.** Virtuelles 3D Entwurfssystem nach Anspruch 14, wobei bei bzw. nach einem Ändern der Form des Kabelbaums (3) die Vektorinformation (S) von jedem betroffenen Drahtsegment (22) unter der Annahme geändert ist bzw. wird, daß Mittelachsen (21a) der benachbarten Drahtsegmente (22) im wesentlichen kontinuierlich bzw. durchgehend sind.

**16.** Kabelbaumentwurfssystem nach einem oder mehreren der vorangehenden Ansprüche 13 bis 15, welches ein virtuelles 3D Zusammenbausystem ist, welches beim Entwerfen eines Kabelbaums (3) verwendet ist bzw. wird, umfassend:

Eingabemittel (14) zum Empfangen einer Eingabe,
Speichermittel (15) für ein wenigstens vorübergehendes Speichern von Kabelbaumentwurfsdaten (A), welche 3D Entwurfsdaten von wenigstens einem Teil des Kabelbaums (3) sind,
Anzeigemittel (11), und
Regel- bzw. Steuermittel (16) zum Anzeigen der Kabelbaumentwurfsdaten (A), welche in den Speichermitteln (15) gespeichert sind, in einem virtuellen 3D Raum, welcher auf den Anzeigemitteln (11) angezeigt bzw. dargestellt ist, und wenn die Kabelbaumentwurfsdaten (A) teilweise durch eine Eingabe geändert sind, welche über die Eingabemittel (14) durchgeführt ist, Korrigieren eines Abschnitts der Kabelbaumentwurfsdaten (A), welche sich auf einen Inhalt der Änderung beziehen, und Wiedergeben eines Korrekturresultats an Anzeigeinhalten der Anzeigemittel (11) und gespeicherten Inhalten der Speichermittel (15).

**17.** Kabelbaumentwurfssystem nach Anspruch 16, wobei:

die Speichermittel (15) darüber hinaus Plattenentwurfsdaten (D) speichern, welche 3D Entwurfsdaten einer Zusammenbauplatte (1) entsprechend den Kabelbaumentwurfsdaten (A) sind, und
die Regel- bzw. Steuermittel (16) die Kabelbaumentwurfsdaten (A) und die Plattenentwurfsdaten (D) in dem virtuellen 3D Raum anzeigen, während die Kabelbaumentwurfsdaten (A) an den Plattenentwurfsdaten (D) eingestellt bzw. festgelegt sind bzw. werden, und wenn die Kabelbaumentwurfsdaten (A) teilweise durch eine Eingabe geändert sind bzw. werden, welche durch die Eingabemittel (14) durchgeführt wird, einen Abschnitt der Kabelbaumentwurfsdaten (A) und/oder einen Abschnitt der Plattenentwurfsdaten (D) korrigieren, welche sich auf einen Inhalt der Änderung beziehen, und Korrekturresultate an den Anzeigeinhalten der Anzeigemittel (11) und den gespeicherten Inhalten der Speichermittel (15) reflektieren.

**18.** Kabelbaumentwurfssystem nach Anspruch 16 oder 17, wobei, wenn die Länge und/oder Pfadform eines Abschnitts der Kabelbaumentwurfsdaten (A) geändert ist bzw. sind, die Regel- bzw. Steuermittel (16) eine Korrektur durch ein Bewegen der Koordinaten in dem virtuellen 3D Raum eines Endabschnitts der Kabelbaumentwurfsdaten (A), welche näher in Richtung zu einem entsprechenden Ende als der geänderte Abschnitt angeordnet sind, wenn von einem Bezugsabschnitt als einem Bezug der Kabelbaumentwurfsdaten (A) betrachtet, gemäß einem Ausmaß der Änderung in der Länge des geänderten Abschnitts und/oder gemäß einem geänderten Inhalt der Pfadform ohne Ändern der 3D Form des Endabschnitts durchführen.

**19.** Kabelbaumentwurfssystem nach Anspruch 17 oder Anspruch 18 und 17, wobei:

die Plattenentwurfsdaten (D) Daten (E) eines unterstützenden Werkzeugs bzw. Betätigungselements entsprechend unterstützenden Werkzeugen bzw. Betätigungselementen (2) zum Halten des Kabelbaums (3) auf bzw. an der Zusammenbauplatte (1) beinhalten, und
wenn die Länge oder Pfadform eines Abschnitts der Kabelbaumentwurfsdaten (A) geändert ist bzw. wird, die Regel- bzw. Steuermittel (16) eine Korrektur durch ein Bewegen der Koordinaten in dem virtuellen 3D Raum eines Endabschnitts der Kabelbaumentwurfsdaten (A), welche näher in Richtung zu einem entsprechenden Ende als der geänderte Abschnitt angeordnet sind, wenn von einem Bezugsabschnitt als einem Bezug der Kabelbaumentwurfsdaten (A) gesehen bzw. betrachtet, und der Koordinaten der Daten (E) des unterstützenden Werkzeugs, welche in den Plattenentwurfsdaten (D) enthalten sind, und entsprechend dem Endabschnitt der Kabelbaumentwurfsdaten (A) gemäß einem Ausmaß der Änderung in der Länge des geänderten Abschnitts und/oder gemäß einem geänderten Inhalt der Pfadform durchführen.

20. Kabelbaumentwurfssystem nach Anspruch 19, wobei:

die Kabelbaumentwurfsdaten (A) Zubehör- bzw. Zusatzelementdaten (C) entsprechend Zubehör- bzw. Zusatzelementen beinhalten, welche an Drähten montiert bzw. angeordnet sind, welche den Kabelbaum (3) ausbilden, und

wenn die Zusatzelementdaten (C), welche in den Kabelbaumentwurfsdaten (A) enthalten sind, geändert sind bzw. werden, die Regel- bzw. Steuermittel (16) die Daten (E) des unterstützenden Werkzeugs korrigieren, welche in den Plattenentwurfsdaten (D) enthalten sind und sich auf die Zusatzelementdaten (C) beziehen.

21. Kabelbaumentwurfssystem nach einem oder mehreren der vorangehenden Ansprüche 16 bis 20, wobei:

die Speichermittel (15) eine Mehrzahl von Kabelbaumentwurfsdaten (A) speichern, welche eine gemeinsame Datenkonfiguration aufweisen und miteinander in Beziehung stehen, und

wenn irgendwelche der Mehrheit von Kabelbaumentwurfsdaten (A), welche in den Speichermitteln (15) gespeichert sind, teilweise durch eine Eingabe geändert sind bzw. werden, welche durch die Eingabevorrichtung durchgeführt wird, die Regel- bzw. Steuermittel (16) einen Abschnitt der geänderten Kabelbaumentwurfsdaten (A) korrigieren, welche sich auf einen Inhalt der Änderung beziehen, ein Korrekturresultat an den Anzeigeinhalten der Anzeigemittel (11) und den gespeicherten Inhalten der Speichermittel (15) reflektieren bzw. wiedergeben, und den Inhalt der Änderung an den anderen der Mehrzahl von Kabelbaumentwurfsdaten (A) wiedergeben, welche sich auf die geänderten Kabelbaumentwurfsdaten (A) beziehen.

22. Kabelbaumentwurfssystem nach einem oder mehreren der vorangehenden Ansprüche 16 bis 21, wobei ein Hauptteil der Kabelbaumentwurfsdaten (A), welche einen Drahtpfad bzw. -weg repräsentieren, durch ein Verbinden einer Mehrzahl von Verbindungen bzw. Gelenken entlang des Drahtpfads ausgebildet ist bzw. wird.

**Revendications**

1. Procédé de conception virtuelle tridimensionnelle (3D) destiné à afficher des données de conception en 3D d'un faisceau de câbles dans un espace virtuel 3D affiché sur un moyen d'affichage (11) à l'aide d'un moyen de commande (16) basé sur des données entrées par un moyen d'entrée de données (14), comprenant :

une étape d'entrée de données (S1) consistant à entrer la forme du faisceau de câbles (3) sous la forme de données d'agencement de référence (28) représentant un agencement 3D du faisceau de câbles (3) dans un véhicule ou appareil électrique spécifié à l'aide du moyen d'entrée de données (14), et à entrer des données de conception en 3D (29) représentant un agencement 3D d'un faisceau de câbles (3) conçu pour être produit par le moyen d'entrée de données (14),

une étape d'affichage d'image de données d'agencement de référence (S2) consistant à afficher une image représentée par les données d'agencement de référence (28) sous la forme d'une image d'arrière-plan dans l'espace virtuel 3D,

une étape d'affichage de données de conception en 3D (S3) consistant à afficher des données de conception en 3D (29) tout en les superposant à l'image d'arrière-plan, et

une étape de modification de données de conception en 3D (S4; S5) consistant à afficher la forme du faisceau de câbles (3) représentée par les données de conception en 3D (29) tout en les modifiant en fonction d'une entrée réalisée par le moyen d'entrée de données (14), et un niveau de coïncidence ou un niveau de différence entre une image du résultat de modification et l'image d'arrière-plan des données d'agencement de référence est confirmé.

2. Procédé de conception virtuelle en 3D selon la revendication 1, dans lequel les données de conception en 3D sont produites en ajoutant des coordonnées d'une direction normale à un plan principal d'un panneau d'assemblage (1) utilisé au cours de la production du faisceau de câbles à des données 2D qui sont une représentation en 2D le long du plan principal.

3. Procédé de conception virtuelle en 3D selon une ou plusieurs des revendications précédentes, dans lequel les données de conception en 3D (29) sont au moins partiellement divisées en une pluralité de segments de câble (22) et comportent au moins une information sous forme de vecteur (S) sur les coordonnées des segments de câble respectifs (22).

4. Procédé de conception virtuelle en 3D selon la revendication 3, dans lequel, lors de la modification de la forme du faisceau de câbles (3), les informations sous forme de vecteur (S) de chaque segment de câble concerné (22) sont modifiées en supposant que les lignes d'axe (21a) des segments de câble adjacents (22) sont sensiblement continues.

5. Procédé de conception virtuelle en 3D selon la revendication 3 ou 4, dans lequel des données sur la différence de phase (θ ; φ) sur des segments de câble adjacents (22b) sont données pour chaque segment de câble (22a).

6. Procédé de conception virtuelle en 3D selon une ou plusieurs des revendications précédentes, dans lequel une ligne de surface, qui, de préférence, est une ligne droite sensiblement parallèle à une ligne d'axe (21a), est tracée théoriquement sur la surface circonférentielle externe du faisceau de câbles (3) avant la modification de la forme du faisceau de câbles (3), et la ligne de surface est affichée sur le moyen d'affichage (11) en étant tordue (figures 10 ; 11) en fonction d'un angle de torsion du faisceau de câbles (3).

7. Procédé de conception virtuelle en 3D selon l'une quelconque des revendications 3 à 5, dans lequel, dans le cas où une partie du faisceau de câbles (3) est recouverte par une partie de recouvrement (26), des données de conception en 3D de la partie de recouvrement (26) sont utilisées pour chacun des segments de câble (22) correspondants plutôt que les données de conception en 3D des segments de câble (22).

8. Procédé de conception virtuelle en 3D destiné à être utilisé pour la conception d'un faisceau de câbles (3) selon l'une ou plusieurs des revendications précédentes, comprenant les étapes de :

un moyen d'entrée (14) étant destiné à recevoir une entrée,
mémorisation au moins provisoire de données de conception de faisceau (A) qui sont des données de conception en 3D d'au moins une partie du faisceau de câbles (3) dans un moyen de mémorisation (15), et
d'affichage des données de conception de faisceau (A) mémorisées dans le moyen de mémorisation (15) dans un espace virtuel 3D sur un moyen d'affichage (11), et, si les données de conception de faisceau (A) sont partiellement modifiées par une entrée réalisée par l'intermédiaire du moyen d'entrée (14), de correction d'une section des données de conception de faisceau (A) en fonction du contenu de la modification et de répercussion d'un résultat de correction sur le contenu affiché du moyen d'affichage (11) et le contenu mémorisé du moyen de mémorisation (15).

9. Procédé selon la revendication 8, comprenant, en outre, l'étape de :

mémorisation de données de conception de panneau (D) qui sont des données de conception en 3D d'un panneau d'assemblage (1) correspondant aux données de conception de faisceau (A) dans le moyen de mémorisation (15),
dans lequel les données de conception de faisceau (A) et les données de conception de panneau (D) sont affichées dans l'espace virtuel 3D en positionnant les données de conception de faisceau (A) sur les données de conception de panneau (D) et, si les données de conception de faisceau (A) sont partiellement modifiées par une entrée réalisée par l'intermédiaire du moyen d'entrée (14), il corrige une section des données de conception de faisceau (A) et/ou une section de données de conception de panneau (D) en fonction du contenu de la modification, et répercute les résultats de correction sur le contenu affiché du moyen d'affichage (11) et le contenu mémorisé du moyen de mémorisation (15).

10. Procédé selon la revendication 9, dans lequel les données de conception de panneau (D) comportent des données d'outillage (E) correspondant à des outillages d'assistance (2) destinés à supporter le faisceau de câbles (3) sur le panneau d'assemblage (1), et
si la longueur ou la forme de trajet d'une section des données de conception de faisceau (A) est modifiée, une correction est faite en déplaçant les coordonnées dans l'espace virtuel 3D d'une section d'extrémité des données de conception de faisceau (A) située plus vers une extrémité correspondante que la section modifiée lorsqu'elle est visualisée depuis une partie de référence en tant que référence des données de conception de faisceau (A) et les coordonnées des données d'outillage (E) contenues dans les données de conception de panneau (D) et correspondant à la section d'extrémité des données de conception de faisceau (A) en fonction d'un niveau de la modification sur la longueur de la section modifiée et/ou en fonction d'un contenu modifié de la forme de trajet.

**11.** Produit formant programme informatique comprenant un support pouvant être lu par ordinateur, contenant un moyen formant code de programme informatique afin, lorsque ledit programme est chargé, de faire exécuter par un ordinateur un procédé d'assemblage virtuel en 3D selon une ou plusieurs des revendications précédentes.

**12.** Support de mémorisation pouvant être lu par ordinateur contenant un programme informatique, qui comprend un moyen formant programme pouvant être lu par ordinateur afin d'amener un ordinateur à commander une exécution d'un procédé de conception de faisceau de câbles selon une ou plusieurs des revendications 1 à 10 précédentes.

**13.** Dispositif de conception virtuelle en 3D destiné à afficher des données de conception en 3D d'un faisceau de câbles dans un espace virtuel 3D sur un moyen d'affichage (11) à l'aide d'un moyen de commande (16) sur la base de données entrées par un moyen d'entrée de données (14), dans lequel :

a) le moyen d'entrée de données (14) est adapté afin d'entrer :

des données représentant la forme du faisceau de câbles (3) sous la forme de données d'agencement de référence (28) représentant un agencement 3D du faisceau de câbles (3) sur un véhicule ou un appareil électrique spécifié, et
des données de conception en 3D (29) représentant un agencement 3D d'un faisceau de câbles (3) conçu pour la production,

b) le moyen d'affichage (11) est amené, par le moyen de commande (16), à afficher :

une image de données d'agencement de référence qui est une image représentée par les données d'agencement de référence (28) en tant qu'image d'arrière-plan dans l'espace virtuel 3D,
les données de conception en 3D (29) tout en les superposant à l'image d'arrière-plan, et
la forme du faisceau de câbles (3) représentée par les données de conception en 3D (29) tout en la modifiant en fonction d'une entrée faite par le moyen d'entrée de données (14),
de telle sorte que la confirmation d'un degré de coïncidence ou d'un degré de différence entre une image du résultat de modification et l'image d'arrière-plan des données d'agencement de référence est possible.

**14.** Dispositif de conception virtuelle en 3D selon la revendication 13, dans lequel les données de conception en 3D (29) sont divisées au moins partiellement en une pluralité de segments de câble (22) et qui comportent au moins des informations sous forme de vecteur (S) sur les coordonnées des segments de câble respectifs (22).

**15.** Dispositif de conception virtuelle en 3D selon la revendication 14, dans lequel lors de la modification de la forme du faisceau de câbles (3), les informations sous forme de vecteur (S) de chaque segment de câble concerné (22) sont modifiées en supposant que les lignes d'axe (21a) des segments de câble adjacents (22) sont sensiblement continues.

**16.** Dispositif de conception de faisceau de câbles selon une ou plusieurs des revendications 13 à 15 précédentes, qui est un dispositif d'assemblage virtuel en 3D utilisé afin d'assurer la conception d'un faisceau de câbles (3), comprenant :

un moyen d'entrée (14) destiné à recevoir une entrée,
un moyen de mémorisation (15) destiné à mémoriser au moins temporairement des données de conception de faisceau (A) qui sont des données de conception en 3D d'au moins une partie du faisceau de câbles (3),
un moyen d'affichage (11), et
un moyen de commande (16) destiné à afficher les données de conception de faisceau (A) mémorisées dans le moyen de mémorisation (15) dans un espace virtuel 3D affiché sur le moyen d'affichage (11) et, si les données de conception de faisceau (A) sont partiellement modifiées par une entrée réalisée par l'intermédiaire du moyen d'entrée (14), à corriger une section des données de conception de faisceau (A) en fonction du contenu de la modification et à répercuter un résultat de correction sur le contenu affiché du moyen d'affichage (11) et le contenu mémorisé du moyen de mémorisation (15).

**17.** Dispositif de conception de faisceau de câbles selon la revendication 16, dans lequel :

le moyen de mémorisation (15) mémorise, en outre, des données de conception de panneau (D) qui sont des données de conception en 3D d'un panneau d'assemblage (1) correspondant aux données de conception de faisceau (A), et

le moyen de commande (16) affiche les données de conception de faisceau (A) et les données de conception de panneau (D) dans l'espace virtuel 3D tout en positionnant les données de conception de faisceau (A) sur les données de conception de panneau (D) et, si les données de conception de faisceau (A) sont partiellement modifiées par une entrée réalisée par l'intermédiaire du moyen d'entrée (14), il corrige une section des données de conception de faisceau (A) et/ou une section des données de conception de panneau (D) en fonction du contenu de la modification et répercute des résultats de correction sur le contenu affiché du moyen d'affichage (11) et le contenu mémorisé du moyen de mémorisation (15).

18. Dispositif de conception de faisceau de câbles selon la revendication 16 ou 17, dans lequel, si la longueur et/ou la forme de trajet d'une section des données de conception de faisceau (A) est modifiée, le moyen de commande (16) réalise une correction en déplaçant les coordonnées dans l'espace virtuel 3D d'une section d'extrémité des données de conception de faisceau (A) située plus vers une extrémité correspondante que la section modifiée lorsqu'elle est visualisée depuis une partie de référence en tant que référence des données de conception de faisceau

(A) en fonction d'un niveau de la modification sur la longueur de la section modifiée et/ou en fonction d'un contenu modifié de la forme de trajet sans modifier la forme en 3D de la section d'extrémité.

19. Dispositif de conception de faisceau de câbles selon la revendication 17 ou les revendications 18 et 17, dans lequel :

les données de conception de panneau (D) comportent des données d'outillage (E) correspondant à des outillages (2) destinés à supporter le faisceau de câbles (3) sur le panneau d'assemblage (1), et
si la longueur ou la forme de trajet d'une section des données de conception de faisceau (A) est modifiée, le moyen de commande (16) réalise une correction en déplaçant les coordonnées dans l'espace virtuel 3D d'une section d'extrémité des données de conception de faisceau (A) située plus vers une extrémité correspondante que la section modifiée lorsqu'elle est visualisée depuis une partie de référence en tant que référence des données de conception de faisceau (A) et les coordonnées des données d'outillage (E) contenues dans les données de conception de panneau (D) et correspondant à la section d'extrémité des données de conception de faisceau (A) en fonction d'un niveau de la modification sur la longueur de la section modifiée et/ou en fonction d'un contenu modifié de la forme de trajet.

20. Dispositif de conception de faisceau de câbles selon la revendication 19, dans lequel :

les données de conception de faisceau (A) comportent des données d'accessoire (C) correspondant à des accessoires montés sur des câbles formant le faisceau de câbles (3), et
si les données d'accessoire (C) contenues dans les données de conception de faisceau (A) sont modifiées, le moyen de commande (16) corrige les données d'outillage (E) contenues dans les données de conception de panneau (D) et fonction des données d'accessoire (C).

21. Dispositif de conception de faisceau de câbles selon une ou plusieurs des revendications 16 à 20 précédentes, dans lequel :

le moyen de mémorisation (15) mémorise une pluralité de données de conception de faisceau (A) présentant une configuration de données commune et fonction les unes des autres, et
si l'une quelconque de la pluralité de données de conception de faisceau (A) mémorisées dans le moyen de mémorisation (15) est partiellement modifiée par une entrée réalisée par l'intermédiaire du dispositif d'entrée, le moyen de commande (16) corrige une section des données de conception de faisceau modifiées (A) en fonction du contenu de la modification, répercute un résultat de correction sur le contenu affiché du moyen d'affichage (11) et le contenu mémorisé du moyen de mémorisation (15), et répercute le contenu de la modification sur les autres de la pluralité de données de conception de faisceau (A) en fonction des données de conception de faisceau modifiées (A).

22. Dispositif de conception de faisceau de câblage selon une ou plusieurs des revendications 16 à 21 précédentes, dans lequel une partie principale des données de conception de faisceau (A) représentant un trajet de câbles est formée en reliant une pluralité de joints le long du trajet de câbles.

# FIG. 1

Display Device ~11

12~

Computer

Storage Device ~15

14

13

~16

# FIG. 2

Input 3D Design Data ~S1

Display Ref. Layout Data ~S2

Display and Position 3D Design Data on Ref. Layout Data ~S3

Deform 3D Design Data ~S4

Display ~S5

49

# FIG. 3

# FIG. 4

# FIG. 5

# FIG. 6

$S(x, y, z, \theta)$

# FIG. 7

# FIG. 8

FIG. 9

FIG. 10

FIG. 11

FIG. 12

FIG. 13

# FIG. 14
# PRIOR ART

# FIG. 15
# PRIOR ART

# FIG. 16

| | |
|---|---|
| Client (Car Manuf., Appliance Manuf.) | —S01 |
| Draft WH Design Drawing | —S02 |
| Data Conv.(IHS Interface) | —S03 |
| IHS (Harness Designing) | —S04 |
| IHS (Full-Size Designing) | —S05 |
| Pick up Full-Size Design Data | —S06 |
| Receive Full-Size Drawing Info. | —S07 |
| Generate 3D Wire Path Data | —S08 |

Sa

# FIG. 17

# FIG. 18

Node No. 1-1
(X1, Y1)

Passing Point No. 1-b
(X1b, Y1b)

119

Passing Point No. 1-a
(X1a, Y1a)

Node No. 2-1
(X2, Y2)

# FIG. 19

120

# FIG. 20

Node No. 1-1
(X1, Y1, Z)  Node No. P-1
(Xp1, Yp1, Z)

Passing Point
No. 1-b (X1b, Y1b, Z)

120

Node No. P-2
(Xp2a, Yp2a, Z)  121

Designation of Part
Mounting by One Node No.

119

120

Passing Point
No. 1-a (X1a, Y1a, Z)

Node No. P-2
(Xp2b, Yp2b, Z)

Node No. 2-1
(X2, Y2, Z)

Designation of Part
Mounting   by   Two   Node

# FIG. 21

Node No. 1-1
(X1,Y1,Z)
(X1,Y1,Z)

Node No. P-1
(Xp1,Yp1,Z)

120

Node No. P-2
(Xp2a,Yp2a,Z)

121

Passing Point 1-b
(X1b,Y1b,Z)

122

Designation of Part
Mounting by One
Node No.

19

123

120

Passing Point 1-a
(X1a,Y1a,Z)

122

Node No. P-1
(Xp2b,Yp2b,Z)

Designation of Part
Mounting by Two
Node Nos.

Node No. 2-1
(X2,Y2,Z)

122

# FIG. 22

| Preliminary Drawing | T1 |

| Design Development | T2 |

| Prod. Preparation | T4 |

| Mass Production | T5 |

# FIG. 23
# PRIOR ART

| Preliminary Drawing | —T1 |

↓

| Design Development | —T2 |

↓

| Trial Production | —T3 |

↓

| Prod. Preparation | — T4 |

↓

| Mass Production | —T5 |

# FIG. 24

Harness Designing —- S221

F-S Design Info. — S222

Pick Up F-S Design Data —- S223

Pick Up AP Info. — S224

Receive F-S Design Data & AP Info. — S225

Generate Shape Data of 3D Subassembly — S226

# FIG. 25

```
Subassembly No. 1 ──┬── Circuit ──────────────────┬─ a 1 1 ··· PP Node No., Circuit Info.
                    │                             ├─ a 1 2
                    │                             └─ a 1 3
                    │                                  ⋮
                    │
                    └── Part ──┬── Connector ──────┬─ b 1 1 ··· Part Info.
                               │                   ├─ b 1 2
                               │                   └─ b 1 3
                               │                        ⋮
                               │
                               └── Covering Part ──┬─ c 1 1 ··· Node Info., Circuit Info.
                                                   ├─ c 1 2
                                                   └─ c 1 3
                                                        ⋮
```

EP 1 267 284 B1

# FIG. 26

DB1A

| Subassembly AP Info. |

DB2

| 3D Shape Info. (Connectors, Clamps, Jigs, etc.) |

DB3

F-S Design Info.
— ① Node Info.
— ② Span Info.
— ③ Part Info.
— ④ SA Info.
— ⑤ Circuit Info.
— ⑥ Etc.

# FIG. 27

DB1B

| OTBA Info. |

DB2

| 3D Shape Info. (Connectors, Clamps, Jigs, etc.) |

DB3

F-S Design Info.
— ① Node Info.
— ② Span Info.
— ③ Part Info.
— ④ SA Info.
— ⑤ Circuit Info.
— ⑥ Etc.

# FIG. 28

FIG. 29

211

212

213

FIG. 30

C3

B-Terminal

a15

A-Terminal

FIG. 31

FIG. 32

## FIG. 33

EP 1 267 284 B1

EP 1 267 284 B1

FIG. 34

FIG. 35

EP 1 267 284 B1

## FIG. 36

## FIG. 37

## FIG. 38

## FIG. 39

## FIG. 40

# FIG. 41

## FIG. 42

## FIG. 43

## FIG. 44

## FIG. 45

Harness Designing — S221

F-S Design Info. — S222

Pick Up F-S Design Data — S223

Pick Up AP Info. — S224

Receive F-S Design Data & AP Info. — S225

Generate Shape Data of 3D Subassembly — S226

Convert F-S Design Info. into R-Format — S228

Subassembly Change Result Info. — S227

Division

## FIG. 46

H-Designing — S201

F-S Design — S202

Separate Designing — S204

MP Line Designing — S205

S203

Production Plan Info.
(Initial Schedule, Planned Quantity, etc.)
Production Factory Info.
(Existing Facility type, Manuf. method
Standard, Producing Ability, etc.)

# FIG. 47
# PRIOR ART

Parts    Cutting/ Connection    Subassembly    Assembling    Test    Shipment

Single Part

Special/Automatic Machine

Assembling by Human Hands

EP 1 267 284 B1

## FIG. 48
## PRIOR ART

## FIG. 49
## PRIOR ART

## FIG. 50
## PRIOR ART

FIG. 51A
PRIOR ART

1a

FIG. 51B
PRIOR ART

1b

# FIG. 52

Harness Design Data

| Node No. | ~H1 | Node Coord. (x,y, z) | ~H2 | (Unit Direction Vector) |

Product Code ~H3

Span Info. ~H4

MD Desig. Coord. (x, y, z) ~H5

(Node No. (a), (b))

Part Shape DB ~H6

Origin Coord. (x, y, z) ~H7

Display Spec. ~H8

Display Design ~H9

(Connectors, Clamps, Jigs, etc.)

Display Color ~H10

(Node No. (a), (b))

Span Info. ~H11

Joint Address No. ~H12

Joint Data Coord. (x, y, z) ~H13

Circuit Info. ~H16

Diameter (r) ~H14

Interval (L) ~H15

Z

EP 1 267 284 B1

# FIG. 53

# FIG. 54

FIG. 55

EP 1 267 284 B1

# FIG. 56

# FIG. 57

# FIG. 58

Client (Car Manuf., Appliance Manuf.) — S201

↓

Draft WH Design Drawing — S202

↓

Data Conv.(IHS Interface) — S203

↓

IHS (Harness Designing) — S204

↓

IHS (Full-Size Designing) — S205

↓

Pick up Full-Size Design Data — S206

↓

Receive Full-Size Drawing Info. — S207

↓

Generate 3D Wire Path Data — S208

↓

Investigate Oper. on A-Board — S209

# FIG. 59

Input Reference Layout Data — S411

Display 3D Design Data on Reference Layout Data — S412

Deform 3D Design Data — S413

Confirm Compatibility of Ref. Layout data & 3D Design Data — S414

EP 1 267 284 B1

## FIG. 60

# FIG. 61

# FIG. 62

EP 1 267 284 B1

# FIG. 63

( a )

E'

( b )

E'

( c )

E'

# FIG. 64

| 3D Virtual Image | 3D Design Data |
|---|---|
| NO.1 ——————————— "Z1" | |
| NO.2 ——————————— "Z2" | |
| ⋮ ⋮ | ⋮ |
| NO.n ——————————— "Zn" | |

FIG. 65

EP 1 267 284 B1

# FIG. 66

F", F1"

33

# FIG. 67

| Detach Connector C3 from Jig and Move It to Left | S501 |

↓

| Set Protector at Specified Mount Position | S502 |

↓

| Detach Connectors C4, C5 from Jig | S503 |

↓

| Accommodate Harness along Path of Protector | S504 |

↓

| Close Cover of Protector | S505 |

↓

| Fix Ends of Protector by Taping | S506 |

# FIG. 68

EP 1 267 284 B1

FIG. 69

FIG. 70

EP 1 267 284 B1

# FIG. 71

F", F1"

A"

33    35

FIG. 72

## FIG. 73

## FIG. 74

## FIG. 75

# FIG. 76